# EUROPEAN PATENT APPLICATION

(11) **EP 4 848 146 A1**
(43) Date of publication of application: **02.12.2026**
(21) Application number: 26167532.6
(22) Date of filing: 25.03.2026
(51) Int. Cl.: G06N 3/063, G06N 3/045, G06N 3/084, G06N 3/0464, G06N 3/0475, G06N 3/0495

(54) **NEURAL PROCESSING UNIT FOR PERFORMING LOW-POWER NEURAL NETWORK COMPUTATION, CONTROL METHOD THEREOF, AND SYSTEM INCLUDING THE SAME**

(30) Priority: 30.05.2025 KR 20250071624
(71) Applicant: Deepx Co., Ltd., Seongnam-si, Gyeonggi-do 13494 (KR)
(72) Inventor: SONG, Jin Gun, 13500 Seongnam-si, Gyeonggi-do (KR); KIM, Hyung Suk, 13524 Seongnam-si, Gyeonggi-do (KR); LEE, Ho Chul, 14275 Gwangmyeong-si, Gyeonggi-do (KR)
(74) Representative: Viering, Jentschura & Partner mbB Patent- und Rechtsanwälte

(57) **Abstract**

A system and method for controlling a processing core (120) are provided. The system may be configured to include at least one processing core (120) to process operations of at least one neural network model including at least one tensor; at least one memory to store the at least one tensor; a bus electrically connected to the at least one processing core (120) and the at least one memory, to transmit the at least one tensor based on a memory access operation command; and a controller (110) to control a priority for a memory access operation for each tensor of the at least one processing core (120).

## Description

### BACKGROUND OF THE DISCLOSURE

### Technical Field

The present disclosure relates to a neural processing unit for performing low-power neural network computation, a control method thereof, and a system including the same.

### Background Art

Humans possess intelligence that enables them to perform tasks such as recognition, generation, classification, inference, prediction, and control/decision making. Artificial intelligence (AI) refers to the artificial imitation of human intelligence.

The human brain is composed of numerous nerve cells called neurons, and each neuron is connected to hundreds or thousands of other neurons through connections called synapses. A neural network model, or artificial neural network (ANN), is a model of the operating principles of biological neurons and the connections between neurons, designed to imitate human intelligence. That is, a neural network is a system in which nodes imitating neurons are connected in a layer (layer: hierarchical) structure.

As neural network technology develops, the application of neural network inference services using big data-based training is becoming increasingly diverse. Such inference services can train neural networks on vast datasets and consequently infer various and complex data through the learned models. However, as the functionality and accuracy required for neural network inference services continue to increase, the parameter size, computational complexity, and memory bandwidth demands for neural network models are increasing exponentially. Consequently, the performance requirements for processors and memory capable of supporting these inference tasks are also increasing. To address these demands, neural network inference services are increasingly being deployed on cloud computing-based servers that provide efficient processing capabilities for large-scale data operations.

Generative artificial intelligence models are increasingly being developed to operate in various environments. These models include various neural network models, including language models for interactive systems, stable diffusion models that generate images from text input, and transformer models that predict and determine future activities based on a series of events in specific situations. The computational cost of generating responses to input queries based on these generative artificial intelligence models is very high. For example, among generative artificial intelligence models, the commercialization of large language models (LLMs) has become widespread.

Generative artificial intelligence models are highly diverse, and new models are continuously being released to the market. Representative generative artificial intelligence models include, for example, GPT, LLaMA, DeepSeek, Mistral, DBRX, Qwen, Nova, Jamba, PaLM, PanGu, OPT, Gemini, Falcon, BLOOM, CLIP, RoBERTa, ALBERT, ELECTRA, LXNet, BERT, BART, CTRL, DALL·E, Stable Diffusion, Midjourney, Imagen, DeepFloyd, Runway Gen, DreamBooth, StyleGAN, BigGAN, Sora, Pika Labs, Stable Video Diffusion, Imagen Video, Make-A-Video, Phenaki, Dreamix, VideoPoet, Text2Video-Zero, CogVideo, and the like.

However, providing generative artificial intelligence services requires high-performance general-purpose graphics processing units (GPGPUs). However, the total power consumption of GPGPUs operating worldwide to process these LLMs has reached a level comparable to the power consumption of an entire country, and this excessive energy demand is posing a serious problem for the commercialization of LLMs. Building GPGPU-based data centers to provide LLM services requires careful evaluation of power plant capacity to determine whether the necessary energy can be supplied, and the difficulty in meeting the energy demands of these data centers in many urban areas can be a major barrier to the widespread deployment of large-scale AI models.

### SUMMARY OF THE DISCLOSURE

Neural networks are classified into "single-layer neural networks" and 'multi-layer neural networks' according to the number of layers. A typical multi-layer neural network consists of an input layer, a hidden layer, and an output layer. (1) The input layer is a layer that accepts input values. The number of input layers is the same as the number of input variables. (2) The hidden layer is located between the input layer and the output layer and is a layer that receives signals from the input layer, extracts features, and transmits them to the output layer. (3) The output layer is a layer that receives signals from the hidden layer and outputs them to the outside.

To implement higher artificial intelligence, a deep neural network (DNN) with an increased number of hidden layers has been disclosed. Among DNNs, a transformer artificial neural network is a DNN based on attention technology. The transformer utilizes a large number of matrix multiplication operations. The transformer can obtain an operation value, an attention score (Q, K, V), using input values and parameters such as query Q, key K, and value V. The transformer can process various inference operations based on the operation value (e.g., attention score (Q, K, V)). The transformer shows excellent performance in the field of generative artificial intelligence.

Transformers are utilized in various large language models. For example, a language model receives a query in text form and generates a response. The response generated by the language model can be generated by re-inputting tokens generated as part of the response generated by the language model into the language model. The cost of generating a response for such a language model is proportional to the number of parameters of the language model. Therefore, the computational cost of generating a response using a language model with a large number of parameters is high. Conversely, reducing the number of parameters can lower the computational cost and improve the response speed, but it may cause a problem of degrading the quality of the generated response.

Furthermore, the inference accuracy of a neural network model can vary depending on the characteristics of the activation function implemented in the neural processing unit. That is, the performance and efficiency of the neural network model are determined by the hardware implementation characteristics of the processing circuit of the activation function of the neural processing unit. In addition, a neural network model that processes an activation function with a complex formula can be processed by a hardware accelerator. When implementing a dedicated processor for a neural network model with hardware, the dedicated processor for the neural network model may require a considerable chip area (i.e., a large number of logic gates). In addition, such a chip may consume a significant amount of power.

Most of the complex functions that neural network models aim to solve have nonlinearity. To solve this problem, most activation functions are nonlinear functions.

The performance and efficiency of a neural network model processed in hardware can vary depending on the nonlinearity characteristics of the activation function applied to at least one neural network model processed by the neural processing unit.

The nonlinearity of at least some of the various activation functions may include logarithmic (log) operations, exponential operations, and the like. Implementing activation functions including these logarithmic and exponential operations in hardware is very complex in terms of digital logic design. For example, the configuration of a hardware arithmetic unit for logarithmic and exponential operations becomes very complex. Therefore, the inventors of the present disclosure recognized that the power consumption of hardware may increase and the operation processing speed may be slowed down.

In the case of a neural processing unit, it may be necessary to design a respective activation function processing module for processing each activation function. In addition, a hard-wired processor can only process predefined activation functions using hard-wired respective dedicated activation function processing logic units. At this time, the inventors of the present disclosure recognized that there is a disadvantage in that the number of gates in a hard-wired processor rapidly increases according to the operational complexity of the activation function.

A hard-wired processor cannot independently process a new activation function without hardware modification. An activation function that cannot be processed by a hard-wired processor must be computed by separate software. For example, a hard-wired processor may be an application-specific integrated circuit (ASIC) dedicated to artificial intelligence. That is, a hard-wired processor may be a neural processing unit.

Accordingly, the inventors of the present invention recognized that by hard-wiring functions to perform integer-based scalar operations in certain sections of neural network operations and vector operations (integer and floating-point based) in other sections, it is possible to implement a neural processing structure that can improve the operational efficiency of hardware resources and minimize power consumption. Through such a designed operational structure, they have developed a neural processing unit structure that can overcome the limitations of existing ASICs and improve the power, performance, area (PPA) by selectively processing certain operations on an integer basis and certain operations on a floating-point basis.

Therefore, an object of the present disclosure is to provide a low-power operational structure designed to efficiently perform integer-based operations and floating-point-based operations separately according to the operational characteristics required at each stage of neural network operations, and thereby provide a neural processing unit for performing low-power based neural network operations that can be controlled to minimize power consumption while maximizing operational performance, a control method thereof, and a system including the same.

Another object of the present disclosure is to provide a neural processing unit for performing low-power based neural network operations that can automatically generate suitable execution code for each operation module according to the characteristics of the neural network model and optimize the operation flow, thereby achieving high operational efficiency even in real-time inference processing or device on-board operation environments, a control method thereof, and a system including the same.

Still another object of the present disclosure is to provide a neural processing unit for performing low-power based neural network operations, wherein a number system conversion structure and various precision control functions ensure operational quality and at the same time efficiently adjust the resources and power required for operations, thereby flexibly responding to various AI operational environments, a control method thereof, and a system including the same.

Furthermore, conventional on-device AI implementation has inherent limitations in effectively storing and rapidly processing not only the entire weights of large-scale neural network models but also the vast amount of intermediate data, particularly activation values, that are essentially generated during the operation process, using only the limited memory resources within the device. As a result, frequent access to external storage devices or partial server dependency was actually unavoidable, making it difficult to implement truly independent and efficient on-device AI services. Therefore, the present disclosure aims to provide a neural processing unit structure and system that can store all weights of a neural network model as well as key activation values required for the entire inference process in a dedicated main memory of sufficient capacity on-device, and efficiently manage and process them, thereby completing complex and large-scale AI operations with low power without communication with an external server, which is an important technical object.

However, the objects of the present disclosure are not limited to the objects mentioned above, and other unmentioned objects will be clearly understood by those skilled in the art from the following description. Embodiments of the present disclosure provide a neural processing unit and a data processing method for low-power neural network operations according to the independent claims. Further embodiments are described in the dependent claims.

According to examples of the present disclosure, a neural processing unit for performing low-power based neural network operations may be provided. The neural processing unit may include: a processing core configured to perform integer operations based on input data; a special function unit configured to perform floating-point based special function operations based on the result of the integer operations; and a controller operably connected to each of the processing core and the special function unit.

The processing core may be configured to perform matrix multiplication operations.

The special function unit may be configured to perform floating-point based function operations including a softmax operation.

The special function unit may include: a scalar core performing scalar operations; a vector core performing vector operations; a dequantization unit converting integer data to floating-point data; and a quantization unit converting floating-point data to integer data.

The scalar core may be configured to calculate a correction coefficient for a softmax operation by calculating a maximum value among the results of multiplication operations between a normalized query vector and a key vector, calculating the total sum of an exponential function, and then obtaining an inverse.

The vector core may be configured to generate an input vector for a softmax operation by multiplying an inner product result between a query vector and a key vector by a normalization coefficient, subtract a maximum value from each element of the input vector, and multiply the result of the softmax operation and a value vector.

The normalization coefficient may be a constant value calculated at compile time and stored in memory.

The controller may, before a softmax operation, integrate a multiplication operation (FpMul) based on a coefficient included in the weights of a neural network model into the weights at compile time, and set an operation path to omit the corresponding multiplication operation at runtime.

The controller may be configured to control an operation path to omit a corresponding multiplication operation when an input data value of a multiplication operation between a query vector and a key vector is 0.

The controller may be configured to set an operation path for the special function unit to generate a final attention value to perform an attention operation.

According to examples of the present disclosure, a control method of a neural processing unit for performing low-power based neural network operations may be provided. This control method may include: performing an integer operation through a processing core configured to perform integer operations based on input data; performing the floating-point based special operation through a special function unit configured to perform floating-point based special operations on the result of the integer operation; and controlling the processing core or the special function unit according to an operation state of each of the integer operation and the special operation.

The performing of the integer operation may be performing a matrix multiplication operation.

The performing of the special operation may be performing a floating-point based function operation including a softmax operation.

The performing of the special operation may be converting integer data according to the integer operation to floating-point data, performing a scalar operation or a vector operation based on the floating-point data, and then converting floating-point data according to the scalar operation or the vector operation to integer data.

The scalar operation may be calculating a correction coefficient for a softmax operation by calculating a maximum value among the results of multiplication operations between a normalized query vector and a key vector, calculating the total sum of an exponential function, and then obtaining an inverse.

The vector operation may be generating an input vector for a softmax operation by multiplying an inner product result between a query vector and a key vector by a normalization coefficient, subtracting a maximum value from each element of the input vector, and multiplying the result of the softmax operation and a value vector.

The normalization coefficient may be a constant value calculated at compile time and stored in memory.

The performing of the special operation may be, before a softmax operation, integrating a multiplication operation (FpMul) based on a coefficient included in the weights of a neural network model into the weights at compile time, and setting an operation path to omit the corresponding multiplication operation at runtime.

The method may further include controlling an operation path to omit a corresponding multiplication operation when an input data value of a multiplication operation between a query vector and a key vector is 0.

The method may further include setting an operation path for the special function unit to generate a final attention value to perform an attention operation.

According to examples of the present disclosure, a system for performing operations of a neural network model with low power may be provided. This system may include: a central processing unit; at least one neural processing unit that performs distributed integer operations and floating-point operations, applies number system conversion between the operations, and controls clock or power supply according to each operation state, thereby performing neural network operations based on low power; at least one memory; at least one bus providing a path for data transmission/reception between each neural processing unit and each memory; and an integrated controller controlling an operation flow of each of the at least one neural processing unit.

The at least one bus may include: a first bus for high-speed transmission of parameters or operation data between the at least one memory and the at least one neural processing unit; and a second bus for transmission of control commands and response data between the at least one neural processing unit and the central processing unit.

The system may further include a digital signal processor for auxiliary processing of preprocessing operations or postprocessing operations that are difficult to perform with fixed-point or low-precision operations.

The at least one memory may include at least one DRAM-based external memory, wherein the external memory may be configured with a structure in which multiple memory chips are connected in parallel through multiple channels to increase bandwidth, thereby improving a processing speed of a neural network model or an output speed of a generated response.

The at least one memory may include at least one SRAM-based common memory disposed inside a system on chip (SoC), wherein the common memory may be configured to store parameters of a specific domain or shared data.

The at least one bus may further include a separate bus for high-speed transmission of parameters between the common memory and the neural processing unit.

According to examples of the present disclosure, a device for performing low-power based neural network operations may be provided. This device may include: an integer operation module performing one or more (e.g., a plurality of) large-scale integer operations based on input data; a floating-point operation module performing one or more (e.g., various) floating-point based nonlinear function operations on the result of the integer operation module; and a control module operably connected to each of the integer operation module and the floating-point operation module.

The integer operation module may be configured to perform one or more (e.g., a plurality of) matrix multiplication operations.

The floating-point operation module may be configured to perform one or more (e.g., a plurality of) floating-point based function operations including a softmax operation.

The floating-point operation module may include: a quantize unit converting floating-point data to integer data; a dequantize unit converting integer data to floating-point data; a vector operation core performing vector operations; and a scalar operation core performing scalar operations.

The scalar core may be configured to calculate a correction coefficient for a softmax operation by calculating a maximum value among the results of multiplication operations between a normalized query vector and a key vector, calculating the total sum of an exponential function, and then obtaining an inverse.

The vector operation core may be configured to generate an input vector for a softmax operation by multiplying an inner product result between a query vector and a key vector by a normalization coefficient, subtract a maximum value from each element of the input vector, and multiply the result of the softmax operation and a value vector.

The normalization coefficient may be a constant value calculated at compile time and stored in memory.

The control module may, before a softmax operation, integrate a multiplication operation (FpMul) based on a coefficient included in the weights of a neural network model into the weights at compile time, and set an operation path to omit the corresponding multiplication operation at runtime.

The control module may be configured to control an operation path to omit a corresponding multiplication operation when an input data value of a multiplication operation between a query vector and a key vector is 0.

The control module may be configured to set an operation path for the floating-point operation module to generate a final attention value to perform an attention operation.

According to examples of the present disclosure, a data processing method for low-power neural network operations may be provided. This data processing method may include: performing a large-scale operation on input data in a first number system; converting a result of the large-scale operation to a second number system different from the first number system; performing a specific function operation on the converted data in the second number system; and controlling an operation and power supply of an operation unit according to a state of each of the operation steps.

The performing of the large-scale operation may be performing a matrix multiplication operation.

The performing of the specific function operation may be performing a floating-point based function operation including a softmax operation.

The performing of the specific function operation may be converting integer data according to the large-scale operation to floating-point data, performing a scalar operation or a vector operation based on the floating-point data, and then converting floating-point data according to the scalar operation or the vector operation to integer data.

The scalar operation may be calculating a correction coefficient for a softmax operation by calculating a maximum value among the results of multiplication operations between a normalized query vector and a key vector, calculating the total sum of an exponential function, and then obtaining an inverse.

The vector operation may be generating an input vector for a softmax operation by multiplying an inner product result between a query vector and a key vector by a normalization coefficient, subtracting a maximum value from each element of the input vector, and multiplying the result of the softmax operation and a value vector.

The normalization coefficient may be a constant value calculated at compile time and stored in memory.

The performing of the specific function operation may be, before a softmax operation, integrating a multiplication operation (FpMul) based on a coefficient included in the weights of a neural network model into the weights at compile time, and setting an operation path to omit the corresponding multiplication operation at runtime.

The method may further include controlling an operation path to omit a corresponding multiplication operation when an input data value of a multiplication operation between a query vector and a key vector is 0.

According to examples of the present disclosure, a neural network operation acceleration system may be provided. This neural network operation acceleration system may include: at least one neural processing unit for performing operations of a neural network model with low power; the at least one neural processing unit performing distributed large-scale integer operations and specific floating-point operations among the neural network operations, applying number system conversion between the operations, and controlling clock or power supply according to each operation state, thereby performing neural network operations based on low power; a central processing unit including an integrated controller controlling an operation flow of each of the at least one neural processing unit; at least one memory storing parameters or operation data for the neural network operations; and at least one bus providing a path for data transmission/reception between the at least one neural processing unit and the at least one memory.

Other specific details of examples are included in the detailed description and drawings.

According to the present disclosure, a low-power operational structure designed to efficiently perform integer-based operations and floating-point-based operations separately according to the operational characteristics required at each stage of neural network operations is provided, and thereby power consumption can be minimized while operational performance is improved.

Furthermore, according to the present disclosure, suitable execution code for each operation module can be automatically generated according to the characteristics of the neural network model and the operation flow can be optimized, thereby achieving high operational efficiency even in real-time inference processing or device on-board operation environments.

Furthermore, according to the present disclosure, a number system conversion structure and various precision control functions ensure operational quality and at the same time efficiently adjust the resources and power required for operations, thereby flexibly responding to various AI operational environments.

Furthermore, according to the present disclosure, by configuring to effectively store and process all weight information of a large-scale neural network model and key activation values essential for inference operations in a high-speed main memory within the device, there is a groundbreaking effect of implementing a complete stand-alone on-device AI inference environment without continuous data exchange or dependency on a cloud server. This overcomes the server dependency problem experienced by conventional technologies due to limitations in data throughput or memory capacity, ensures the continuity of AI services even in environments where network connection is impossible or unstable, and significantly improves the level of personal information protection as there is no need to transmit sensitive user data externally. Furthermore, it provides an advanced effect of reducing costs associated with server operation and data communication, and maximizing user experience by providing immediate inference results without data transmission latency.

The effects according to the present disclosure are not limited by the contents exemplified above, and more various effects are included within the present disclosure.

### BRIEF DESCRIPTION OF THE DRAWINGS

FIG. 1 is a diagram illustrating a computing system for processing a transformer-based generative artificial intelligence language model that can be applied to examples of the present disclosure.
FIG. 2 is a flowchart illustrating a method by which a neural processing unit applicable to examples of the present disclosure generates output data from input data using an artificial intelligence model.
FIG. 3 is a block diagram illustrating a neural processing unit applicable to examples of the present disclosure.
FIG. 4 is a block diagram illustrating a processing element applicable to examples of the present disclosure.
FIG. 5 is a block diagram illustrating a vector operation unit of a special function unit applicable to examples of the present disclosure.
FIG. 6 is a block diagram illustrating a scalar operation unit of a special function unit applicable to examples of the present disclosure.
FIG. 7 is a diagram schematically illustrating energy consumption per unit operation of a neural processing unit applicable to examples of the present disclosure.
FIG. 8 is a flowchart illustrating a control method of a neural processing unit applicable to examples of the present disclosure.
FIG. 9 is a block diagram illustrating a system on chip according to a first embodiment of a first example of the present disclosure.
FIG. 10 is a block diagram illustrating a system on chip according to a second embodiment of the first example of the present disclosure.
FIG. 11 is a block diagram illustrating a system on chip according to a third embodiment of the first example of the present disclosure.
FIG. 12 is a block diagram illustrating a system on chip according to a fourth embodiment of the first example of the present disclosure.
FIG. 13 is a block diagram illustrating a system on chip according to a fifth embodiment of the first example of the present disclosure.
FIG. 14 is a block diagram illustrating a system on chip according to a sixth embodiment of the first example of the present disclosure.
FIG. 15 is a block diagram illustrating a system on chip according to a seventh embodiment of the first example of the present disclosure.
FIG. 16 is a block diagram illustrating a system on chip according to an eighth embodiment of the first example of the present disclosure.
FIG. 17 is a diagram illustrating a device according to a first embodiment of a second example of the present disclosure.
FIG. 18 is a diagram illustrating a device according to a second embodiment of the second example of the present disclosure.
FIG. 19 is a diagram illustrating a tree for explaining speculative decoding according to a third example of the present disclosure.
FIG. 20 is a diagram schematically illustrating a speculative decoding operation according to the third example of the present disclosure.
FIG. 21 is a flowchart illustrating an activation function programming method according to a first embodiment of a fourth example of the present disclosure.
FIG. 22 is a graph illustrating a process in which an activation function is approximated by an activation function programming method according to the first embodiment of the fourth example of the present disclosure.
FIG. 23 is a graph illustrating various cases of segmenting an activation function into a plurality of segments by an activation function programming method according to the first embodiment of the fourth example of the present disclosure.
FIG. 24 is a diagram illustrating a function approximation circuit of a neural processing unit configured to process a programmed activation function according to a second embodiment of the fourth example of the present disclosure.
FIG. 25 is a diagram illustrating a function approximation circuit of a neural processing unit configured to process a programmed activation function according to a third embodiment of the fourth example of the present disclosure.
FIG. 26 is a diagram illustrating an example of a number system processed in a special function unit of a neural processing unit applicable to examples of the present disclosure.
FIG. 27 is a block diagram illustrating a function approximation unit according to a fourth embodiment of the fourth example of the present disclosure.
FIG. 28 is a block diagram illustrating a reciprocal function processing circuit according to a fifth embodiment of the fourth example of the present disclosure.
FIG. 29 is a block diagram illustrating a reciprocal of square root function processing circuit according to a sixth embodiment of the fourth example of the present disclosure.
FIG. 30 is a block diagram illustrating a negative exponential function processing circuit according to a seventh embodiment of the fourth example of the present disclosure.
FIG. 31 is a block diagram illustrating a transformer model applicable to examples of the present disclosure.
FIG. 32 is a diagram illustrating an example of a flow for generating an encoder input vector through a positional encoding and word embedding process applicable to examples of the present disclosure.
FIG. 33 is a diagram illustrating an example of an operation flow inside a multi-head attention-based encoder applicable to examples of the present disclosure.
FIG. 34 is a diagram illustrating an example of a weight calculation and attention operation flow performed inside an attention head applicable to examples of the present disclosure.
FIG. 35 is a block diagram illustrating a configuration of an encoder applicable to examples of the present disclosure.
FIG. 36 is a diagram illustrating an example of a flow for generating an output vector and calculating a final token probability value in a decoder applicable to examples of the present disclosure.
FIG. 37 is a diagram illustrating an example of an encoder-decoder attention flow and a detailed operation structure inside a decoder applicable to examples of the present disclosure.
FIG. 38 is a diagram illustrating a configuration of a decoder applicable to examples of the present disclosure.
FIG. 39 is a block diagram illustrating a transformer model including only a decoder applicable to examples of the present disclosure.
FIG. 40 is a block diagram illustrating a device for performing low-power based neural network operations applicable to examples of the present disclosure.
FIG. 41 is a flowchart illustrating a data processing method for performing low-power based neural network operations applicable to examples of the present disclosure.
FIG. 42 is a diagram illustrating a structural modification and optimization process of an attention operation formula applicable to examples of the present disclosure.

### DETAILED DESCRIPTION OF THE EMBODIMENT

Specific structural or step-by-step descriptions for examples according to the concept of the present disclosure disclosed herein are merely exemplified for the purpose of explaining examples according to the concept of the present disclosure.

Embodiments according to the concept of the present disclosure may be implemented in various forms. The present disclosure should not be construed as being limited to the embodiments described herein.

Embodiments according to the concept of the present disclosure may be variously modified. The present disclosure may have various forms. Therefore, specific examples are illustrated in the drawings and will be described in detail in the present disclosure. However, this is not intended to limit the examples according to the concept of the present disclosure to specific disclosed forms. Therefore, all modifications, equivalents, or substitutes included in the spirit and technical scope of the present disclosure should be understood as being included in the present disclosure.

Terms such as first and/or second may be used to describe various elements. However, the present disclosure should not be limited by these terms.

These terms are only used to distinguish one element from another. For example, without departing from the scope of rights according to the concept of the present disclosure, a first element may be referred to as a second element, and similarly, a second element may also be referred to as a first element.

When an element is referred to as being "connected" or "coupled" to another element, it should be understood that it may be directly connected or coupled to the other element, or intervening elements may be present. In contrast, when an element is referred to as being "directly connected" or "directly coupled" to another element, it should be understood that there are no intervening elements.

Other expressions describing relationships between elements, i.e., "between" and "immediately between" or "adjacent to" and "directly adjacent to," etc., should also be interpreted in the same manner.

In the present disclosure, expressions such as "A or B," "at least one of A or/and B," or "one or more of A or/and B," etc., may include all possible combinations of the items listed together. For example, "A or B," "at least one of A and B," or "at least one of A or B" may all refer to cases including (1) at least one A, (2) at least one B, or (3) both at least one A and at least one B.

Expressions such as "first," "second," "primary," or "secondary," etc., used in the present disclosure may modify various elements, regardless of order and/or importance. These expressions are used only to distinguish one element from another and do not limit the elements. For example, a first user device and a second user device may represent different user devices, regardless of order or importance. For example, without departing from the scope of rights described in the present disclosure, a first element may be referred to as a second element, and similarly, a second element may also be renamed as a first element.

The terms used in the present disclosure are only used to describe specific embodiments and may not be intended to limit the scope of other examples.

A singular expression may include a plural expression unless the context clearly indicates otherwise. Technical or scientific terms, including those used herein, may have the same meaning as commonly understood by one of ordinary skill in the art to which the present disclosure pertains.

Terms used in the present disclosure, such as those defined in general dictionaries, may be interpreted as having a meaning that is the same as or similar to the meaning in the context of the related art. Terms used in the present disclosure are not interpreted in an idealized or excessively formal sense unless explicitly defined otherwise in the present disclosure. In some cases, even terms defined in the present disclosure cannot be interpreted to exclude embodiments of the present disclosure.

The terms used in the present disclosure are only used to describe specific embodiments and are not intended to limit the present disclosure.

A singular expression includes a plural expression unless the context clearly indicates otherwise. In the present disclosure, terms such as "comprise" or "have" are intended to designate the presence of described features, numbers, steps, operations, elements, parts, or combinations thereof. Therefore, it should be understood that they do not preclude the presence or addition of one or more other features or numbers, steps, operations, elements, parts, or combinations thereof.

Unless otherwise defined, all terms used herein, including technical or scientific terms, have the same meaning as commonly understood by one of ordinary skill in the art to which the present disclosure belongs. Terms such as those defined in commonly used dictionaries should be interpreted as having a meaning consistent with their meaning in the context of the relevant art. Unless explicitly defined in the present disclosure, they are not interpreted in an idealized or excessively formal sense.

Respective features of various examples of the present disclosure may be partially or wholly combined or coupled with each other. Various examples of the present disclosure are technically capable of various interoperations and driving, as can be sufficiently understood by those skilled in the art. Respective examples of the present disclosure may be implemented independently of each other or may be implemented together in an associated relationship.

In describing each example, descriptions of technical content that are well known in the technical field to which the present disclosure pertains and are not directly related to the present disclosure are omitted. This is to more clearly convey the gist of the present disclosure by omitting unnecessary explanations.

In the present disclosure, "unit" may refer to a hardware module or a hardware circuit. For example, a "~ unit may" be a hardware circuit for performing a specific function. However, "~ unit" does not necessarily mean a dedicated circuit physically separated from other circuits to perform only that function. A "~ unit" may be configured based on a plurality of circuits, and these circuits may exist in different locations and interoperate under a control signal to perform a specific function. For example, "A unit" and "B unit" may include at least some common electronic circuits.

In the present disclosure, an "artificial intelligence model" may include not only generative AI models but also traditional AI models that perform judgment, classification, prediction, and the like. An artificial intelligence model may include a language model, a model that reads images or videos, and any model that generates output data from input data using an artificial neural network may correspond to an artificial intelligence model. For example, an artificial intelligence model can generate output text from input text. An artificial intelligence model can classify input data or generate prediction data from input data. An artificial intelligence model can search for or track objects of interest from images or videos. An artificial intelligence model can analyze images or videos to perform situation judgment. An artificial intelligence model can generate an image/video corresponding to input text based on the input text. An artificial intelligence model can generate output text describing an input image/video from the input image/video. Input data and output data can each be text, voice signals, images, videos, etc., and are not limited in type.

An artificial intelligence model may be implemented as an artificial neural network. Therefore, as a representative embodiment, processing or operation for an "artificial intelligence model" means processing or operation of an artificial neural network, and parameters of the artificial intelligence model may include weights of the artificial neural network, but are not limited thereto. For example, it should be understood that the processing or operation of an artificial intelligence model may include mathematical operations not included in the neural network structure, such as softmax.

"Transformer" is an artificial intelligence model implemented based on an attention mechanism and can be used in language models (large language models and small LLMs). Language models include BERT (bidirectional encoder representations from transformers), GPT (generative pre-trained transformers), RoBERTa (robustly optimized BERT pretraining approach), ALBERT (a lite BERT), ELECTRA (efficiently learning an encoder that classifies token replacements accurately), Transformer-XL (transformer with extra long context), XLNet (a model combining the advantages of GPT and BERT), BART (bidirectional and auto-regressive transformers), CTRL (conditional transformer language), T5 (text-to-text transfer transformer), LaMDA (language model for dialogue applications), Gopher (DeepMind's LLM), InstructGPT (fine-tuned model based on GPT-3), PanGu (Huawei's Chinese model), PaLM (Pathways language model), OPT 175B (open pretrained transformer 175B), BLOOM (BigScience large open-science open-access multilingual model), HyperCLOVA (Naver's Korean super-large model), etc. The language models may also include new language models that will appear in the future.

Transformers can be utilized not only in natural language processing (NLP) but also in computer vision, and representative transformer-based vision models include ViT (Vision transformer), Swin Transformer (sliding window-based transformer for Vision), and the like.

Therefore, the transformer is one of the core techniques of various artificial intelligence models utilizing the attention mechanism. A transformer-based language model, for example, can output "yes you are an expert" when "NPU is an ai accelerator" is input.

According to examples of the present disclosure, a device, method, system, computer-readable medium, and the like that enable a generative artificial intelligence service to operate on the device itself (also referred to as on-device) may be provided.

In general, a transformer-based generative artificial intelligence model receives a query and generates a response. For example, a language model receives a query in text form and generates a token. Subsequently, the query and the generated token are input back into the language model to generate the next token. This token generation operation may be repeated multiple times until a response to the query is completed. A token may correspond to a word or part of a word. A response generated by a language model may include a series of tokens generated by passing tokens generated as part of the response generated by the language model back through the language model.

Hereinafter, some embodiments will be clearly and described in detail with reference to the accompanying drawings so that those of ordinary skill in the art (hereinafter, those of ordinary skill) to which the present invention pertains can easily implement the present invention.

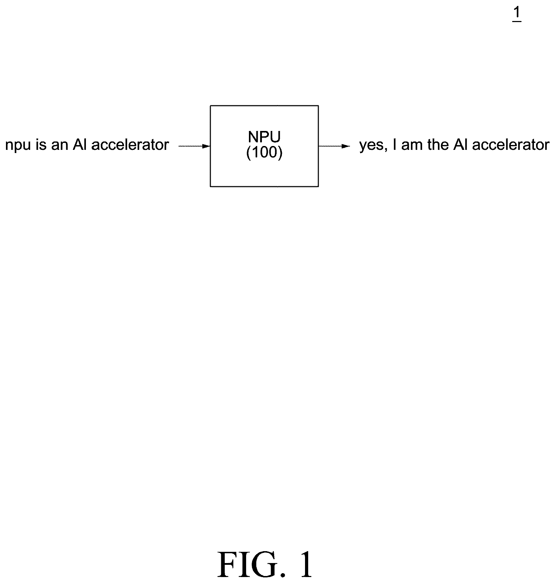

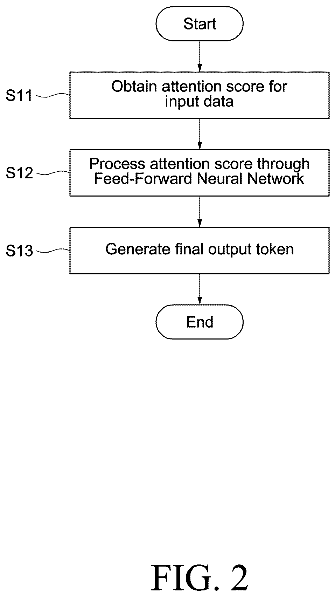

First, FIG. 1 and FIG. 2 illustrate a process of inferring a transformer-based generative artificial intelligence language model on a neural processing unit (NPU). A computing system according to the present disclosure operates on an edge device, and infers input text data through embedding, attention, feedforward, softmax, etc., to output output tokens. This process consists of numerous matrix multiplications and non-linear operations, and the disclosed NPU enables high-speed inference through optimization of these operations.

FIG. 1 illustrates a computing system for processing a language model that can be applied to examples of the present disclosure.

Referring to FIG. 1, a computing system 1 may receive input data and generate output data using integrated hardware and software components. The computing system 1 may include a neural processing unit (NPU) 100, which is optimized for performing artificial intelligence (AI) tasks, especially those involving deep learning models. In addition to the NPU, the computing system 1 may comprise general-purpose and specialized processing units, such as a central processing unit (CPU), a graphics processing unit (GPU), and various forms of memory. These components can collaborate to manage data preprocessing and neural network inference.

For instance, embedding conversion of input text into numerical representations (embedding vectors) may be handled by the CPU or GPU. Once the text data is converted into embeddings, these vectors are transmitted to the NPU 100, which is designed to perform inference operations efficiently using a transformer-based generative AI model. These models are commonly used in applications like language generation, translation, and content summarization.

The NPU 100, also referred to as an AI accelerator or AI hardware accelerator, specializes in accelerating complex AI computations. It is particularly suitable for running transformer models due to their computational intensity and reliance on parallel processing. The computing system 1 may represent various devices, collectively referred to as device 10000, which may include smartphones, robots, advanced driver assistance systems (ADAS), surveillance cameras, and more.

In a typical operation scenario, the NPU 100 receives input data - such as a string of text - and generates output data that could either be text, images, or even video frames. Input text is broken down into tokens, which are the smallest units of meaning (e.g., words or subwords). For example, if the input sequence comprises five tokens - 'npu,' 'is,' 'an,' 'AI,' 'accelerator' - the NPU may generate a response sequence like 'yes,' 'you,' 'are,' 'an,' 'expert' through inference based on its trained model. The text data is composed of at least one token.

Transformer-based artificial neural network (ANN) operations can be performed in an on-device manner. That is, the entire process can be executed in an on-device manner, meaning it is performed locally without the need for cloud computing resources. This is particularly advantageous for edge devices, such as smartphones, CCTVs, drones, and robots, which benefit from reduced latency, increased privacy, and independence from network connectivity.

Additionally, transformer-based ANN operations can be performed based on an attention mechanism. Under the principle of attention mechanisms, when text input is received, it undergoes an embedding process to convert tokens into high-dimensional vectors. These vectors are then transformed into query (Q), key (K), and value (V) representations via matrix multiplication (MatMul) with corresponding weight matrices. The query weight matrix, key weight matrix, and value weight matrix are pre-trained parameters learned during the training phase of the model. Subsequently, the model computes the similarity between the query and key vectors Q and K to derive attention scores, which determine how much focus each word in the input should receive relative to others. These attention scores are then used to weight the value vector V, allowing the model to generate context-aware outputs based on the structure and meaning of the input sequence.

FIG. 2 illustrates a method by which a neural processing unit applicable to examples of the present disclosure generates output data from input data using an artificial intelligence model. The method of FIG. 2 follows the operation of the NPU 100 for token generation using a transformer-based language model.

Referring to FIG. 2, the NPU 100 may obtain an attention score for input data (step S11).

The input data may include a plurality of tokens, and each token may be represented by an embedding vector of a predetermined dimension (d_{model}). The number of dimensions (d_{model}) of the embedding vector may be, for example, 128, 256, 1024, 2048, or 4096, etc. For convenience of explanation below, d_{model} is assumed to be 4096. In this embodiment, one token in the computing system 1 may be represented by an embedding vector of 1×4096 dimension.

For example, if a user inputs "npu is an AI accelerator" consisting of five tokens into the computing system 1, the computing system 1 can convert the input text into an embedding vector of size 5 ×4096 (i.e., five vectors of 1 ×4096), and the NPU 100 can receive the embedding vector. The NPU 100 can obtain a query vector Q by performing vector-matrix multiplication of the embedding vector and a query weight matrix. The NPU 100 can obtain a key vector K by performing vector-matrix multiplication of the embedding vector and a key weight matrix. Then, the NPU 100 can obtain a similarity through an inner product between the query vector Q and the key vector K. When the query vector Q and the key vector K are inner-product multiplied, a scalar value is obtained, and as a result, a vector QK^{T} of size (1×5) equal to the number of tokens of the input data is obtained. QK^{T} represents the similarity with the key k (each of the five tokens) for the current token. However, since the elements of the obtained vector QK^{T} may be numerically very large, for numerical stability, the QK^{T} is divided by the square root of the size of the key vector K ( $\sqrt{{d}_{k}}$), and then a softmax operation is applied to obtain a normalized final similarity. Equation 1 below mathematically represents the similarity calculation based on softmax, where k may be one of 1, 2, ..., N, and N is the number of tokens included in the input data. In this embodiment, N = 5.$Similarity with key K of current token QK = softmax \left(\frac{{QK}^{T}}{\sqrt{{d}_{k}}}\right)$ Equation 1

The softmax operation is an operation that converts multiple numbers into probabilities between 0 and 1. Equation 2 below shows a formula for performing a softmax operation value for a vector [z₁, z₂, ..., zₙ].$σ \left(zi\right) = \frac{{e}^{{z}_{i}}}{{\sum }_{j = 1}^{n} {e}^{{z}_{i}}}$ Equation 2

However, if a very large value exists in zᵢ, a numerical instability problem may occur. To solve this, a numerically more stable calculation can be made possible by using a method of subtracting the maximum value zₘₐₓ (negative exponential trick). Equation 3 below is a softmax operation formula modified from Equation 2 using zₘₐₓ.$σ \left(zi\right) = \frac{{e}^{{z}_{i} - {z}_{max}}}{{\sum }_{j = 1}^{n} {e}^{{z}_{i} - {z}_{max}}}$ Equation 3

Through Equation 1, the similarity may be obtained as a vector of size 1×5, for example, [0.007, 0.993, 0, 0, 0]. The similarity is a value in which the similarity with other tokens for the current query (e.g., npu) is expressed as a probability.

According to an embodiment, the NPU 100 may assign a value to the similarity. The value vector is similar to the method of calculating the key vector. The embedding vector can be converted into a value vector through vector-matrix multiplication with a pre-trained value weight matrix. An attention score can be obtained by matrix-multiplying the similarity obtained through Equation 1 by a value vector V. As a result, an attention score of size 5 ×4096, which is the same dimension as the input data, can be obtained by performing an operation such as Equation 4 below.$Attention Score = softmax \left(\frac{{QK}^{T}}{\sqrt{{d}_{k}}}\right) \times V$ Equation 4

In Equation 4, Q is the query matrix, K^{T} is the transposed key matrix, dₖ is the dimension of the key vectors (used for scaling), and V is the value matrix. This computation yields an attention score matrix with the same dimensionality as the original input, for instance, 5×4096 if the input consists of five tokens and each token is represented by a 4096-dimensional vector. This dimensional consistency is crucial for residual connections and for maintaining uniformity across transformer layers.

The NPU 100 may perform the attention operation of Equation 4 repeatedly as part of a multi-head attention mechanism or across multiple transformer layers to generate increasingly abstract and meaningful representations of the input data. Each repetition involves a series of computationally intensive operations, including high-dimensional vector-matrix multiplication, scalar division, and element-wise multiplication. The ability of the NPU 100 to execute these operations rapidly and in parallel is essential for real-time or near-real-time inference tasks.

Additionally, according to another embodiment, the NPU 100 may implement residual connections and layer normalization to enhance the stability and performance of deep learning operations. These techniques are widely adopted in transformer models to address common training and inference challenges.

A residual connection helps to mitigate the issue of vanishing gradients, a problem that can arise in deep networks where gradient signals become too small to effectively update weights during training. The residual connection achieves this by adding the input vector to the output of a neural network layer, effectively preserving the original information and making the learning process more robust. In the context of the attention mechanism, this means that after the attention score is computed, the original input embedding vector is added back to the output, ensuring that core features are retained even after transformation.

Layer normalization, on the other hand, is used to stabilize the learning dynamics by normalizing the outputs of a layer based on their mean and variance. This technique counters the problem of internal covariate shift, which refers to changes in the distribution of inputs to a layer during training. By applying normalization, the NPU ensures that each output dimension maintains a consistent statistical distribution, thus promoting faster convergence and improved generalization during inference. In natural language processing tasks, layer normalization is applied after residual connection and before subsequent non-linear transformations.

As a result, the NPU 100 may execute transformer-based inference operations, including attention computation, residual connection, and layer normalization.

Next, after computing attention scores for each token based on contextual relationships the NPU 100 proceeds to process the previously computed attention scores through a feed-forward neural network (step S12).

The feed-forward neural network is for predicting nonlinear phenomena (nonlinear transformations) in order to discern complex relationships within the data. Specifically, the feed-forward neural network infers deeper contextual meanings - such as phrases, clauses, or syntactic patterns - by recombining the relational information encoded in the attention-weighted token representations. The network enables the model to go beyond surface-level token relationships and capture more abstract patterns relevant to language understanding.

In one embodiment, the feed-forward neural network may consist of two fully connected layers, each comprising 2,048 nodes. These layers are typically followed by activation functions (such as ReLU or GELU) to introduce nonlinearity. The network receives as input a vector of 4,096 dimensions - the same dimensionality as the model's hidden state - and outputs a vector of identical size (4,096 dimensions). This dimensional consistency ensures seamless integration with subsequent model components.

The feed-forward neural network is pre-trained and utilizes repeated vector-matrix multiplication operations to perform inference efficiently. The network's input is the result of the residual connection and layer normalization applied in the preceding step (step S11). The normalization techniques ensure numerical stability and preserve gradient flow during backpropagation. The same residual connection and normalization may also be additionally performed on the output of the hidden layer composed of two layers. This architecture contributes to the model's depth and robustness by allowing information to pass through multiple layers with minimal degradation.

The feed-forward neural network is for predicting nonlinear phenomena, and can infer contextual meanings such as phrases or clauses by recombining the relationship information of tokens for which attention scores have been calculated. The feed-forward neural network may, for example, use a fully connected hidden layer with two layers having 2,048 nodes, and the output may be a vector of 4,096 dimensions, the same as the input. The feed-forward neural network is pre-trained, and vector-matrix multiplication operations may be repeatedly performed for inference. Here, the input is a result value that has undergone residual connection and normalization in step S11, represented as a 4,096-dimensional vector, and residual connection and normalization of step S11 may also be additionally performed on the output of the hidden layer composed of two layers.

Next, following the processing through the feed-forward network, the NPU 100 proceeds to generate a final output token (step S13).

For this, the 4,096-dimensional output vector from step S12 must be expanded to match the size of the entire token vocabulary supported by the language model, which may consist of, for example, 30,000 unique tokens. This is achieved through a final linear transformation, whereby the output vector is multiplied by a weight matrix of dimensions 4,096×30,000, yielding a logit vector of size 1×30,000. Each entry in this vector corresponds to a raw prediction score (logit) for a specific token in the vocabulary.

The size of the final output weight matrix for the final output is d_{model} × SIZE_DIC, where d_{model} is the hidden size of the model (4,096 in this case), and SIZE_DIC is the total number of output tokens that can be output from the language model currently being inferred by the NPU 100 (30,000 in this embodiment).

Once the logit vector is obtained, a softmax operation is applied to convert the raw logits into normalized probability values ranging between 0 and 1. This operation ensures that the sum of all probabilities across the 30,000 tokens equals 1. The token with the highest probability is then selected as the next output token to be generated by the language model. For example, if the input sequence to the NPU 100 is the phrase "npu is an AI accelerator," the predicted next token may be "yes." Continuing the inference, if the sequence is extended to "npu is an AI accelerator yes you are an," the model may predict the next token to be "expert."

As described above with reference to FIG. 1 and FIG. 2, the neural processing unit repeatedly performs numerous matrix multiplication operations (MatMul), vector operations, scalar operations, etc., for inference operations of a transformer-based artificial neural network model, and the neural processing unit needs to be optimized for these operations. Hereinafter, the structure and operation of the NPU 100 will be described.

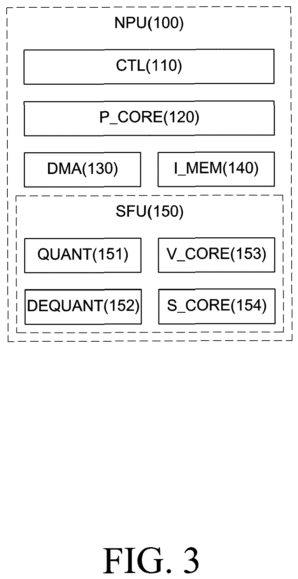

FIG. 3 illustrates a neural processing unit (NPU) 100 applicable to examples of the present disclosure.

Hereinafter, the NPU 100 will be described in detail with reference to FIG. 3.

The NPU 100 is a dedicated processor specialized for deep neural network (DNN) operations, separate from processors such as a central processing unit or a graphics processing unit. The NPU 100 may be referred to as a tensor processing unit (TPU), an AI accelerator, a neural signal processor (NSP), a neural network processor (NNP), or the like.

The NPU 100 is a dedicated processor configured specifically for executing deep neural network (DNN) operations and operates independently of general-purpose processors such as central processing units (CPUs) or graphics processing units (GPUs). The NPU 100 may alternatively be referred to as a tensor processing unit (TPU), an artificial intelligence (AI) accelerator, a neural signal processor (NSP), a neural network processor (NNP), or the like.

The NPU 100 may be implemented as a semiconductor device comprising electrical and electronic circuitry. Each component of the NPU 100 may include integrated semiconductor circuitry formed from a plurality of electronic elements, such as transistors, capacitors, resistors, and interconnect wiring. Accordingly, certain functional or structural elements may not be readily distinguishable by visual inspection (the naked eye) and, instead, may be identifiable only through analysis of their operational behavior or electrical characteristics.

The NPU 100 is designed to accelerate computation for artificial neural network operations and may be referred to as artificial intelligence (AI) hardware acceleration. The NPU 100 may be configured to execute operations associated with transformer-based language models. However, its functionality is not restricted to language processing and may extend to other domains, such as computer vision, where it can be utilized for models including YOLO (you only look once), ResNet, and similar architectures. The NPU 100 may be integrated within a device 10000 to perform AI-driven computations and produce inference results. The device 10000 may further include one or more of a central processing unit, a graphics processing unit, an application processor (AP), or a microcontroller unit (MCU). The device 10000 may include various input components such as microphones, cameras, touchpads, and keyboards, and may include output components such as displays or speakers for delivering results of neural inference. The device 10000 may take the form of a smartphone, a smart assistant terminal located in a residential or office environment, a consumer appliance, a vehicular control unit (VCU), an advanced driver-assistance system (ADAS), a closed-circuit television (CCTV) system, a robot, or a mobility platform, among others.

The NPU 100 according to examples of the present disclosure is specifically designed to accelerate attention-related computations in transformer-based neural network architectures, and to do so with optimized (low) power consumption. While the architecture may be tailored to transformer-based models, the NPU 100 of the present disclosure may also support processing of other neural network architectures, including convolutional neural networks (CNNs), enabling flexibility across a variety of AI domains.

The NPU 100 applicable to examples of the present disclosure may include a controller (CTL) 110, a processing core (P_CORE) 120, a direct memory access unit (DMA) 130, internal memory (I_MEM) 140, and a special function unit (SFU) 150.

The processing core 120, vector core (V_CORE) 153, and scalar core (S_CORE) 154 within the NPU 100 may be implemented as arithmetic logic units that are optimized for performing computations associated with attention layers in neural network models. Each attention layer may obtain an attention score (Q, K, V), which is an operation value, using input values and parameters such as query Q, key K, and value V.

The processing core 120, vector core 153, and scalar core 154 may be designed to execute matrix multiplication, root mean square normalization, and softmax operations, which are typical of attention mechanisms. The tensor data to be processed in these operations may take the form of multi-dimensional matrices, two-dimensional matrices, one-dimensional arrays, or scalar values. One of the processing core 120, vector core 153, and scalar core 154 may be selected for operation according to the data type. That is, a processing unit may be selected dynamically based on the dimensional type of the tensor to achieve efficient computation. This architecture enables the NPU 100 to accelerate operations of generative AI models while maintaining low power consumption by allocating the appropriate core module to each computation.

That is, the processing core 120 may be configured to execute the mathematical computations necessary for performing neural network inference. The processing core 120 may include arithmetic logic units (ALUs), multiply-accumulate (MAC) units, adder trees, and other hardware blocks optimized for numerical operations in neural inference pipelines.

The controller 110 may be electrically connected to the processing core 120, the direct memory access unit 130, the internal memory 140, and the special function unit 150. The controller 110 may manage execution of neural network computations within the NPU 100. The controller 110 may coordinate the operation of the various internal components using execution code that is generated by a compiler (not shown). The compiler may be implemented as a hardware circuit or as a software module executing on a separate device from the NPU 100.

The compiler may be configured to compile a specific neural network model into execution code that is executable by the NPU 100. In particular, the compiler may generate code optimized for a particular neural processing unit based on its architectural characteristics, that is, code exclusively executed in a specific NPU having a specific performance. The execution code may also be referred to as machine code or binary code and may contain low-level instructions for coordinating data movement and computational operations.

The controller 110 may operate the processing core 120, direct memory access unit 130, internal memory 140, and special function unit 150 according to the instructions and scheduling logic encoded in the execution code. In generating the execution code, the compiler (not shown) may be provided with information including, but not limited to, performance metrics of the processing core 120, vector core 153, and scalar core 154, conversion performance of the quantization unit (QUANT) 151 and dequantization unit (DEQUANT) 152, capacity of the internal memory 140, and bandwidth constraints associated with external memory interfaces via a corresponding bus (not shown). The compiler may also have access to structural (hardware) characteristics of the neural network model, such as model topology, algorithm types, and information on the size of parameters (parameter dimensions).

Based on this information, the compiler may generate execution code that defines data read/write sequences, operation schedules for neural computations, and control logic for managing the operational states of the various modules within the NPU 100. The controller 110 may receive this execution code and operate the hardware in accordance with its instructions. A distinct execution code may be generated for each neural network model, and by processing at least one execution code, the NPU 100 may support concurrent or sequential execution of multiple such codes.

The processing core 120 may be further configured with circuitry specialized for matrix multiplication, which constitutes a computational bottleneck in most neural network models. The processing core 120 may include an array of processing elements (PEs) and may be implemented using an M×N matrix structure of PEs or an adder tree architecture, where M and N are integers. The processing core 120 may parallelize computation of matrix multiplication operations involving input data and associated model parameters (e.g., weights, kernels, query, key, and value tensors) by distributing workloads across an array of processing elements (not shown).

For this purpose, the processing elements (not shown) may each include a MAC (Multiply And Accumulate) arithmetic unit. Accordingly, the processing core 120 can efficiently perform matrix multiplication or convolution operations by executing repetitive multiply-and-accumulate calculations required for neural network inference. The processing core 120 may be a circuit designed to simultaneously process M×N sized tensor data, enabling parallel computation across a matrix of input activations and corresponding weight parameters. Here, M and N may be integers representing the vertical and horizontal dimensions of the processing array, respectively. The number of processing cores 120 included in the NPU 100 may be at least one and may vary depending on the implementation requirements and chip area availability.

The processing core 120 may exchange data with other circuit modules within the NPU 100, including the vector core 153, scalar core 154, internal memory 140, and a main memory (not shown) interfaced through the special function unit 150. Such communication may be performed via internal buses or interconnect circuits that enable fast and low-latency data transfer. The processing core 120 may be configured to receive integer-type parameters as input and to output processed results in integer format as well. The input integer parameters may include input activation data and trained weight values. These input parameters may be configured to have a first bit width, and the weight parameters may be configured to have a second bit width, which may or may not be equal to the first. The output result generated by the processing core 120 may be configured to have a third bit width. The third bit width may be selected to be greater than either the first or second bit width to prevent information loss due to overflow during accumulation operations.

As the number of processing elements (not shown) included in the processing core 120 increases, the overall transistor count in the application-specific integrated circuit (ASIC) implementing the NPU 100 may also increase. This, in turn, may result in higher chip area usage and increased fabrication cost. To address this, if the processing core 120 is designed to operate primarily on integer data types instead of floating-point representations, a substantial reduction in the transistor count can be achieved. Specifically, the number of transistors required for processing floating-point arithmetic is typically about four times greater than that required for integer arithmetic. By limiting the operations of the processing core 120 to integer formats, the overall power consumption of the NPU 100 can be significantly reduced, and chip area utilization can be optimized.

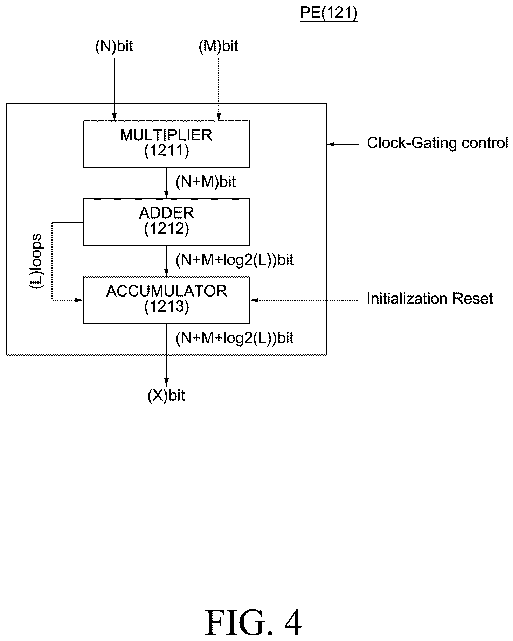

The bit width of integer parameters that the processing core 120 can process may be determined based on the hardware design of the individual processing elements (not shown), including factors such as input buffer size, accumulator width, and output formatting logic. The specific bit widths may vary across different implementations and may be optimized for the desired trade-off between inference accuracy and power efficiency. Bit width configurations and design trade-offs will be further described later in reference to FIG. 4.

The number of processing elements (not shown) within the processing core 120 may range from hundreds to tens of thousands, depending on the level of parallelism and target inference throughput. To elaborate, as mentioned above, since a processing element designed to execute floating-point arithmetic requires roughly four times as many transistors as a comparable element designed for integer operations, in embodiments where the circuit of the processing core 120 within the NPU 100 is configured exclusively for integer arithmetic operations - excluding floating-point data types - there can be up to a 75% reduction in transistor count. As a result, more processing elements can be incorporated within the same semiconductor die area, providing higher parallelism and improved energy efficiency. Such architecture offers a significant advantage in reducing the physical chip size and enhancing inference throughput while maintaining low power consumption, making it particularly suitable for edge AI applications.

The special function unit 150 may refer to a group (aggregate) of various circuit blocks configured to accelerate neural network operations that are not efficiently handled by the processing core 120. These may include non-linear or transcendental functions that are difficult to implement using basic ALU operations. The special function unit 150 may be optimized to accelerate special mathematical functions commonly required in neural network inference and training, such as exponential (exp), logarithmic (log, ln), square root (sqrt), reciprocal (1/x), inverse square root (1/sqrt(x)), and trigonometric functions (e.g., sin, cos, tan, arcsin, arccos). Such operations may be necessary for normalization layers, activation functions, or post-processing steps within a model.

To efficiently perform the above operations, the special function unit 150 may include a quantization unit 151 and a dequantization unit 152. These components may collectively serve as a number system conversion unit, facilitating conversion between different data representations, such as INT8 and FP16, to balance model performance and hardware resource usage. In addition, the special function unit 150 may include a vector core 153 configured to handle wide vector operations on tensor data, and a scalar core 154 designed to execute scalar arithmetic operations on control or meta-data elements. These components may cooperate with the processing core 120 and internal memory 140 to provide comprehensive support for a wide range of operations required during model inference.

The quantization unit 151 of the special function unit 150 may be configured to convert data represented in floating-point (FP) format to integer (INT) format. This operation is referred to as quantization and may be performed to reduce the computational complexity and power consumption of the NPU 100. Conversely, the dequantization unit 152 may be configured to perform the inverse operation, i.e., converting integer-format data back into floating-point format. This allows subsequent neural network layers that require floating-point precision to process the data. The quantization unit 151 and the dequantization unit 152 may be implemented as specialized hardware circuits capable of supporting various bit-widths and precision schemes, depending on inference requirements of an artificial intelligence model.

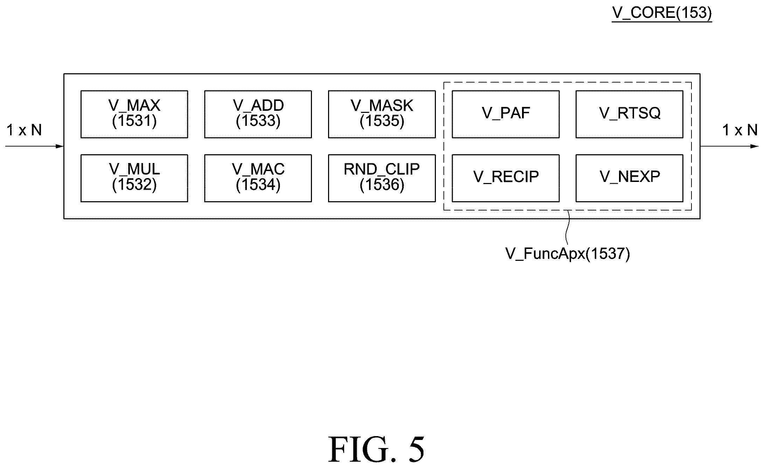

The vector core 153 included in the special function unit 150 may comprise a plurality of hardware modules configured to perform vector-based arithmetic operations required in neural network inference, excluding matrix multiplication operations that are executed by the processing core 120. The vector core 153 may be implemented as an aggregation of parallel vector processing circuits, each tailored to specific vector functions. For instance, as shown in FIG. 5, the vector core 153 may include a vector maximum value computation unit (V_MAX) 1531, a vector multiplication unit (V_MUL) 1532, a vector addition unit (V_ADD) 1533, a vector multiply-and-accumulate (MAC) unit (V_MAC) 1534, a vector mask application unit (V_MASK) 1535, a vector rounding and clipping unit (RND_CLIP) 1536, and a vector function approximation unit (V_FuncApx) 1537. These specialized vector units may accelerate the computation of complex layer operations, such as those used in attention mechanisms or non-linear activation layers. The operation of each module of the vector core 153 will be further described later in reference to FIG. 5.

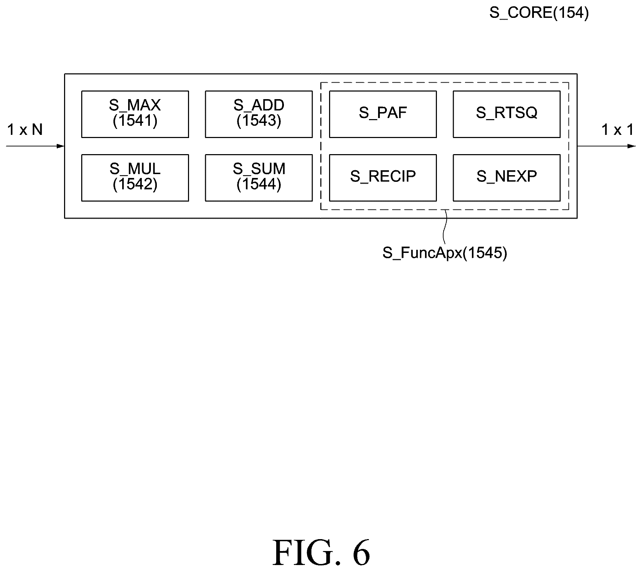

The scalar core 154 of the special function unit 150 may consist of a collection of hardware modules (set of circuits) designed to execute scalar operations associated with artificial intelligence models. These scalar operations may include arithmetic or functional computations that are not handled by the processing core 120 or the vector core 153. The scalar core 154 may include several dedicated arithmetic circuits configured for single-value (scalar) processing. For example, as shown in FIG. 6, the scalar core 154 may include a scalar maximum value operation unit (S_MAX) 1541, a scalar multiplication unit (S_MUL) 1542, a scalar addition unit (S_ADD) 1543, a scalar summation unit (S_SUM) 1544, and a scalar function approximation unit (S_FuncApx) 1545. These modules may support the execution of auxiliary or post-processing functions commonly required in machine learning inference, such as computing scalar normalization constants or scalar non-linearities. The operation of each module of the scalar core 154 will be further described later in reference to FIG. 6.

The direct memory access (DMA) unit 130 may be configured to perform data transmission and reception between the NPU 100 and at least one memory that is electrically connected to the NPU 100. The at least one memory (not shown) may include, but is not limited to, a main memory, a shared memory, a storage device, or any other memory device accessible by the NPU 100. The DMA unit 130 may enable the NPU 100 to transmit various types of data used in artificial intelligence operations - such as input feature maps, weight parameters, intermediate computation results, and output data - to external memory, or to retrieve such data from memory when needed for processing. The DMA unit 130 may be implemented as a dedicated hardware module designed to operate autonomously from the controller 110 and may perform memory access operations without requiring direct control by a central processor.

The DMA unit 130 may be configured to perform functions such as address configuration for an internal memory (I_MEM) 140, generation of read and write commands for external and internal memory, and scheduling of memory transactions to optimize bandwidth and minimize latency. The DMA unit 130 may include a register set or a configuration interface through which addresses, data lengths, and burst transfer modes can be defined. In some embodiments, the DMA unit 130 may support direct interfacing with one or more high-speed communication buses that connect the NPU 100 to the broader system memory hierarchy. Through these buses, the DMA unit 130 may manage communication between the NPU 100 and one or more memories, enabling the NPU 100 to maintain a high degree of data throughput for neural network inference workloads.

The internal memory (I_MEM) 140 may be implemented as a memory located within the on-chip region of the NPU 100 and may serve various functions, including caching intermediate data generated during neural network computations, temporarily storing operand values, and maintaining data required for controlling execution flows. In addition, the internal memory 140 may include a register file that stores low-level instructions used for executing a neural network model compiled for the specific architecture of the NPU 100. The register file may be integrated with or separately configured from other memory structures within the NPU 100, and in some implementations may also be incorporated as part of the controller 110.

For example, when the NPU 100 is connected to a main memory (not shown) or shared memory (not shown) via a system bus, the internal memory 140 may be configured to prefetch and temporarily store relevant data (e.g., input features, parameters, or intermediate results) required for processing. The internal memory 140 may be designed using one or more types of memory technologies, including but not limited to static random access memory (SRAM), register file memory, dynamic random access memory (DRAM), resistive RAM (ReRAM), magneto-resistive RAM (MRAM), phase-change RAM (PRAM), ferroelectric RAM (FeRAM), or flash memory. The internal memory 140 may be composed of a single memory type (i.e., a homogeneous memory architecture) or a combination of different memory types (i.e., a heterogeneous memory architecture), depending on the power, area, and latency trade-offs specific to the target application.

The internal memory 140 may consist of one or more discrete memory blocks or banks, each configured to support concurrent access by different processing modules within the NPU 100, such as the processing core 120, vector core 153, scalar core 154, and special function unit 150. In some embodiments, the total memory capacity of the internal memory 140 may range from a few megabytes to several tens of megabytes, but is not limited thereto.

The quantization unit 151 included within the special function unit 150 may be configured to contain a quantization circuit capable of converting data represented in a floating-point format into a corresponding integer format. Conversely, the dequantization unit 152 may be configured to include a dequantization circuit that performs the inverse operation, converting integer-form data back into floating-point form. These two components (the quantization unit 151 and the dequantization unit 152) may be collectively referred to as a number system conversion unit.

In one embodiment, the processing core 120 may be designed to receive and output data in an integer format, while the vector core 153 and scalar core 154 may be configured to operate on data in a floating-point format. Accordingly, when data is transmitted between these different cores within the NPU 100, a conversion in data type (or number system) may be required. The quantization unit 151 may include a quantization circuit that transforms floating-point data into integer data for compatibility with the processing core 120, while the dequantization unit 152 may include a dequantization circuit that converts integer-form data into floating-point data, enabling processing by the vector core 153 or scalar core 154.

According to examples of the present disclosure, floating point is not limited to IEEE standard 754, and for operational efficiency of the NPU 100, reduction of memory usage, reduction of power consumption, etc., Brain Floating Point, Dynamic Floating-Point, Variable Precision Floating-Point (VPFP), Custom Floating-Point (CFP), or Flexible Floating-Point (FFP) may be applied. VPFP is a floating-point format that can dynamically set or adjust the bit width of the exponent and mantissa. Using VPFP allows for flexible precision levels based on specific calculations to optimize power and performance. Dynamic floating-point formats, used interchangeably with variable precision, allow for on-the-fly adjustment of mantissa and exponent sizes during runtime, enabling response to data characteristics in real time. CFP refers to an application-specific format where bit allocation for the mantissa and exponent is tailored to the needs of a specific use case. This can be useful for implementing the NPU 100, selecting the exact bit width to optimize hardware resources and data accuracy. FFP refers to a floating-point format that allows adjustable bit allocation between the exponent and mantissa. FFP can be implemented in the NPU 100 to provide an optimal balance between range and precision. According to examples of the present disclosure, the bit width of floating point may be between 4 bits and 32 bits. According to examples of the present disclosure, the bit width of an integer may be between 4 bits and 32 bits.

The NPU 100 of the present disclosure may provide at least one of power gating, clock gating, and register retention functions that allow the NPU 100 to operate at low power.

The NPU 100 of the present disclosure may support one or more low-power operation techniques, including but not limited to power gating, clock gating, and register retention. These techniques are designed to reduce power consumption during periods of inactivity or partial utilization, thereby improving overall energy efficiency of the NPU 100, to adaptively manage power based on workload demand.

The power gating function may be implemented as a technique to eliminate leakage power by completely disconnecting power supply lines to circuit blocks that are idle or not in use. This may be achieved through the use of dedicated power switches placed between the power rail and the circuit block. In configurations where power gating is applied, a specific subcomponent or block within the NPU 100 can be electrically isolated from the power source using such a switch. As a result, both dynamic power (associated with switching activity) and static leakage power (associated with idle circuits) can be eliminated in the powered-down block, thereby enabling deep power-saving modes and efficient power management across the NPU architecture.

The clock gating function may be employed to reduce dynamic power consumption by disabling the clock signal to certain circuit blocks that are temporarily inactive. Rather than cutting off power entirely, this technique operates by halting the propagation of the clock signal using dedicated clock control logic. When applied to a circuit block within the NPU 100, clock gating prevents unnecessary signal transitions (switching activity), thereby suppressing dynamic power usage while maintaining the block's power supply. Since power is maintained, the circuit state is preserved, allowing rapid resumption of operation upon reactivation of the clock signal. This feature is advantageous in scenarios where short bursts of processing are followed by brief idle periods, after which operation is resumed by reactivating the clock.

The register retention function may be configured to enable certain registers within the NPU 100 to preserve their stored values even during low-power or sleep modes in which main power is turned off. Registers equipped with this feature may consume minimal retention power sufficient to maintain their logic state. As a result, when the NPU 100 enters a power-saving mode, essential data stored in the registers can be preserved without requiring reinitialization upon wake-up. This capability enhances energy efficiency while supporting fast recovery from power-down states, and contributes to maintaining operational continuity of the neural network inference process when transitioning between active and idle conditions.

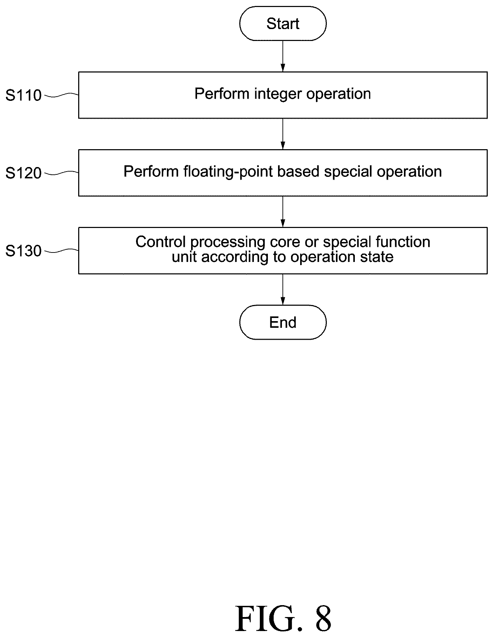

The hardware operation between each element of the NPU 100 of FIG. 3 will be described in detail below based on FIG. 8.

FIG. 4 illustrates a processing element applicable to examples of the present disclosure.

Referring to FIG. 4, a processing element 121 may be configured to include a multiplier 1211, an adder 1212, and an accumulator 1213. The processing element 121 of FIG. 4 may be one of a plurality of processing elements included in the processing core 120 of FIG. 3, and hereinafter, the processing element 121 may be referred to as representing each processing element.

The multiplier 1211 multiplies the input (N) bit data and M bit data. The operation value of the multiplier 1211 is output as (N+M) bit data. Here, N and M are integers greater than 0. A first input unit may be configured to receive (N) bit data. A second input unit may be configured to receive M bit data. For example, the first input unit may be configured to receive input parameters, and the second input unit may be configured to receive weight parameters.

The bit width of the parameters input to the first input unit and the second input unit of the processing element 121 may be determined when the current neural network model processed by the NPU 100 is compiled to obtain execution code. That is, the bit width of the input parameters and the bit width of the weight parameters of the neural network model may be determined in the compilation step by the compiler. For example, the bit width of the input parameters and the weight parameters may be quantized to be the same, and the bit width may be 32 bits, 16 bits, 8 bits, 4 bits, etc., but the present disclosure is not limited thereto. For example, the bit width of the input parameters and the bit width of the weight parameters may be determined differently from each other, and the parameters may be quantized based on each bit width. For example, the bit width of the input parameters and the bit width of the weight parameters may be quantized to 16 bits and 8 bits, respectively. For example, the bit width of the input parameters and the bit width of the weight parameters may be quantized to 8 bits and 4 bits, respectively. That is, the bit width of the parameters input to each input unit of the processing element 121 may be different from each other. The quantization information of the data input to each input unit of the processing element 121 may be included in the execution code.

The accumulator 1213 accumulates the operation value of the multiplier 1211 and the operation value of the accumulator 1213 using the adder 1212 for (L) loops times. Therefore, the bit width of the data at the output unit and input unit of the accumulator 1213 may be output as (N+M+log2(L)) bit. Here, L is an integer greater than 0. When accumulation is completed, an initialization reset signal (initialization reset) may be input to initialize the data stored in the accumulator 1213 to 0. The accumulator 1213 of the processing element 121 is configured to maintain the accumulated value when zero skipping is activated. Based on the maximum value that can be accumulated in the accumulator 1213, the output data (X) bit may be set to a bit width that does not cause an overflow of the output data (X) bit. For example, (X) bit may be 16 bits to 64 bits.

To elaborate, the quantization unit 151 of the special function unit 150 can convert integer parameters output from the processing core 120 into floating point and transmit them to the vector core 153, scalar core 154, and/or internal memory 140. The quantization unit 151 can be controlled under the control signal of the controller 110.

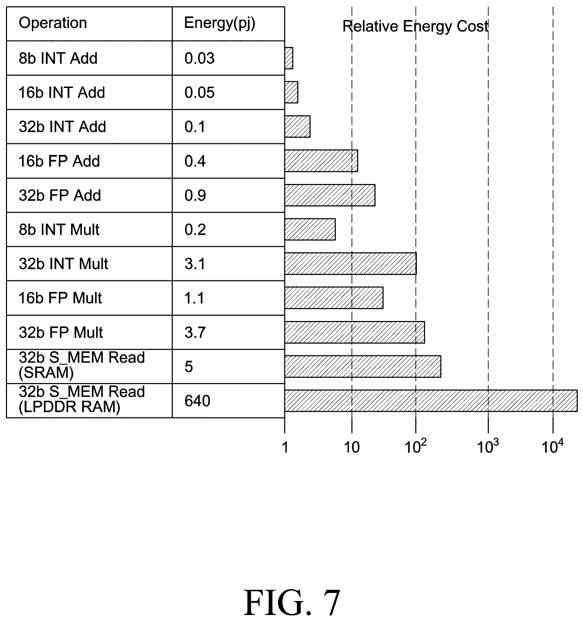

The controller 110 may restrict the operation of the multiplier 1211 (e.g., zero skipping operation) so that the multiplier 1211 does not perform an operation when 0 is input to one of the first input unit and the second input unit of the multiplier 1211, based on the fact that the operation result becomes 0 even if no operation is performed. For example, when 0 is input to one of the first input unit and the second input unit of the multiplier 1211 of the processing element 121, the multiplier 1211 may operate in a zero-skipping manner. For zero skipping, each processing element 121 included in the processing core 120 may be activated or deactivated, respectively. The controller 110 may provide an activation or deactivation signal (clock-gating control) to each processing element 121 on a clock pulse-by-clock pulse basis. If the processing element 121 is deactivated, the multiplier 1211 is deactivated. Accordingly, the power consumed for the operation of the multiplier 1211 can be reduced. An example of the power consumption of the multiplier 1211 is shown in FIG. 7.

The processing element 121 may be designed to receive a control signal (clock-gating control) for zero skipping operation control (i.e., activation or deactivation) from the controller 110. Specifically, the multiplier 1211 of the processing element 121 may be designed to receive a respective control signal (clock-gating control) for zero skipping operation control from the controller 110. Alternatively, the adder 1212 of the processing element 121 may be modified to be designed to receive a control signal (clock-gating control) for zero skipping operation control from the controller 110. Alternatively, each of the multiplier 1211 and the adder 1212 of the processing element 121 may be modified to be designed to simultaneously receive respective control signals (clock-gating control) for zero skipping operation control from the controller 110.

The controller 110 may, before a softmax operation is performed, pre-reflect a multiplication operation (FpMul) based on a normalization coefficient included in the weights of a neural network model at compile time to integrate it into the weights, and optimize the operation path to omit the corresponding multiplication operation at runtime. This corresponds to a static optimization method for reducing operational efficiency and power consumption by eliminating unnecessary runtime multiplication operations.

Furthermore, the controller 110 may selectively control whether to execute a multiplication operation between a query vector and a key vector according to the type of operation request (e.g., attention operation, feedforward operation, etc.) or the operation timing (e.g., decoding stage, learning stage, etc.). This configuration can be implemented by controlling the clock supply of the processing element 121 including the multiplier 1211 or by bypassing the operation path itself to omit the operation.

Such control may be processed within the NPU 100, or may be performed through an integrated controller in a system on chip (SoC) architecture including a plurality of arithmetic units. In this case, the controller 110 may include clock gating or power control signals for each unit, and may be configured to dynamically adjust whether to activate operations for each operation unit.

FIG. 5 illustrates a vector core of a special function unit applicable to examples of the present disclosure.

The vector core 153 may refer to a set of circuits that process some of the operations of the artificial intelligence model, excluding the matrix multiplication processed by the processing core 120. The vector core 153 differs from the processing core 120 in that it is composed of floating-point arithmetic circuits. That is, the vector core 153 may be configured to receive floating-point parameters and output floating-point parameters. The vector core 153 may be designed to be pipelined with the processing core 120 and the scalar core 154 for operational efficiency with the processing core 120 and the scalar core 154. To elaborate, the vector core 153 is configured to exchange data with the processing core 120, the scalar core 154, the internal memory 140, and a main memory (not shown). To elaborate, the vector core 153 may be specifically designed to efficiently process some of the attention operations of a transformer-based neural network model. That is, the vector core 153 may include a plurality of specialized vector operation circuits.

As previously described, the vector core 153 may be designed to include a vector maximum value operation unit (V_MAX) 1531, a vector multiplication unit (V_MUL) 1532, a vector addition unit (V_ADD) 1533, a MAC operation unit (V_MAC) 1534, a mask unit (V_MASK) 1535, a rounding clipping unit (RND_CLIP) 1536, and a vector function approximation unit (V_FuncApx) 1537. The V_MAX 1531 is configured to include a circuit that processes the maximum value operation of input tensor data. The V_MUL 1532 is configured to include a circuit that processes the multiplication operation of input tensor data. The V_ADD 1533 is configured to include a circuit that processes the addition operation of input tensor data. The V_MAC 1534 is configured to include a circuit that processes the Multiply And Accumulate (MAC) operation of input tensor data. The V_MASK 1535 is configured to include a circuit that processes the masking operation of input tensor data. The RND_CLIP 1536 is configured to include a circuit that processes the rounding operation and clipping operation of input tensor data. The V_FuncApx 1537 is configured to include a circuit that processes the approximation operation of various functions, and can be applied to exponential function operations performed during softmax operations or vector-unit weighted sum operations. In particular, the vector core 153 may be configured to generate an input vector for a softmax operation by multiplying the inner product result between a query vector and a key vector by a normalization coefficient, subtract the maximum value from each element of this generated input vector to create a stabilized softmax distribution, and multiply the softmax operation result and a value vector to output a final attention result. Here, the normalization coefficient may be a constant value calculated at compile time and stored in memory. Such an operation flow can be implemented mainly around circuits such as the V_MAX 1531, the V_MUL 1532, the V_ADD 1533, and the V_FuncApx 1537, and can be configured in a pipelined and parallel processing manner considering operational efficiency. If necessary, the V_MAC 1534 for Multiply-And-Accumulate operations, the V_MASK 1535 for masking processing, or the RND_CLIP 1536 for output precision correction may be further included to extend the auxiliary operation flow before and after the softmax operation.

Hereinafter, the V_FuncApx 1537 of the vector core 153 will be described in greater detail.

In one embodiment, the vector core 153 may be implemented as a dedicated circuit configured to perform parallel processing of tensor data having a shape of M×1. That is, the vector core 153 may be designed to receive tensor data of M×1 dimensions as input and to output result data of the same dimensionality, namely, M×1. In this context, the variable M may correspond to the number of rows of an M×N tensor input to the processing core 120, thereby allowing a dimensionally aligned pipeline architecture between the processing core 120 and the vector core 153. Such an alignment enables seamless data transfer and processing across pipeline stages. For instance, the vector core 153 may incorporate a register file optimized for storing one-dimensional array data, allowing efficient handling of vectorized input received from the processing core 120. By processing tensor data along a specific axis or dimension, the vector core 153 can enhance overall operation throughput and reduce latency in execution. Since the vector core 153 is implemented as a floating-point arithmetic unit specifically designed to perform functional operations (e.g., exponentiation, logarithmic approximation, or trigonometric functions), its architecture prioritizes precision and flexibility in mathematical computations. However, designing the vector core 153 to handle the same M×N-sized tensors as the processing core 120 could significantly increase both the die area of the NPU 100 and its power consumption. To address this, the vector core 153 is intentionally configured to process only M×1-sized tensors (or other manageable vector lengths) in order to balance computational capabilities with power and area efficiency. Additionally, this dimensional reduction helps mitigate bottlenecks in neural network workloads by enabling pipelined operation with the processing core 120. In alternative configurations, the vector core 153 may also be capable of handling tensor inputs shaped as L×1, where L is selected as a power-of-two value that falls within a predefined range relative to M. For example, if M is set to 64, the value of L may be 8, 16, 32, 64, 128, or 256. This flexible configuration allows the vector core 153 to support variable-width input data while maintaining compatibility with downstream hardware.

FIG. 6 illustrates a scalar core of a special function unit applicable to examples of the present disclosure.

The scalar core 154 may refer to a set of circuits that process some of the operations of the neural network model, excluding the operations processed by the processing core 120 and the vector core 153. The scalar core 154 differs from the processing core 120 in that it is composed of floating-point arithmetic circuits. That is, the scalar core 154 may be configured to receive floating-point parameters and output floating-point parameters. The scalar core 154 may be designed to be pipelined with the processing core 120 and the vector core 153 for operational efficiency with the processing core 120 and the vector core 153. To elaborate, the scalar core 154 is configured to exchange data with the processing core 120, the vector core 153, the internal memory 140, and a main memory (not shown). To elaborate, the scalar core 154 may be specifically designed to efficiently process some of the attention operations of a transformer-based neural network model. That is, the scalar core 154 may include a plurality of specialized scalar operation circuits.

For example, as previously described, the scalar core 154 may be designed to include a scalar maximum value operation unit 1541, a scalar multiplication unit 1542, a scalar addition unit (S_ADD) 1543, a scalar summation unit (S_SUM) 1544, and a scalar function approximation unit (S_FuncApx) 1545. The S_MAX 1541 is configured to include a circuit that processes the maximum value operation of input tensor data. The S_MUL 1542 is configured to include a circuit that processes the multiplication operation of input tensor data. The S_ADD 1543 is configured to include a circuit that processes the addition operation of input tensor data. The S_SUM 1544 is configured to include a circuit that accumulates a plurality of input scalar values or performs an aggregation operation according to a certain range or condition. The S_FuncApx 1545 is configured to include a circuit that processes the approximation operation of various functions. Such function approximation operations can be applied to the approximate calculation of the exponential function used in the softmax operation and the calculation of correction coefficients such as the inverse operation for the total sum. In other words, the scalar core 154 may be configured to calculate a correction coefficient for a softmax operation by calculating the maximum value among the results of multiplication operations between a normalized query vector and a key vector, calculating the total sum of an exponential function, and then obtaining an inverse.

Hereinafter, the S_FuncApx 1545 of the scalar core 154 will be described in greater detail.

The scalar core 154 may be implemented as a specialized circuit configured to process tensor data having a shape of M×1, where M denotes the number of individual elements in the tensor input. In one embodiment, the scalar core 154 may receive M×1-sized tensor data as input and produce output data in a reduced 1×1 scalar format. That is, the scalar core 154 is capable of aggregating or computing over the M elements to yield a single scalar result. In this architecture, the input dimensionality M×1 received by the scalar core 154 may be aligned with the M×1 input format processed by the vector core 153. This dimensional consistency enables pipeline compatibility between the vector core 153 and the scalar core 154, facilitating an efficient hardware pipeline structure where intermediate results can flow seamlessly from one stage to the next.

More specifically, the scalar core 154 may include a register file optimized to hold and operate on one-dimensional array data, thereby supporting the efficient processing of vector outputs received from the preceding vector core 153. Similar to the vector core, the scalar core 154 is configured as a floating-point arithmetic unit, allowing it to execute complex scalar-level operations such as function approximations, summation, or maximum value detection. However, designing the scalar core 154 to handle large M×N tensor inputs, as handled by the processing core 120, would result in increased silicon area and higher power consumption in the NPU 100. To avoid this, the scalar core 154 is deliberately architected to process data in a reduced scalar format, thus minimizing its physical footprint and lowering energy consumption. Furthermore, by enabling a pipelined dataflow with the vector core 153, the scalar core 154 contributes to reducing processing bottlenecks in neural network workloads. In alternative implementations, the scalar core 154 may be configured to receive L×1-sized tensor data, where L represents a power-of-two value selected within a defined range that is based on the value of M. For instance, if M is 64, the value of L may be set to 8, 16, 32, 64, 128, or 256. This flexibility allows the scalar core 154 to adapt to varying input sizes while maintaining compatibility with upstream data structures.

FIG. 7 illustrates energy consumption per unit operation of a neural processing unit applicable to examples of the present disclosure.

Hereinafter, the power consumption of the processing core 120, vector core 153, and scalar core 154 of the NPU 100 will be described with reference to FIG. 7, showing the energy consumed per unit operation of various arithmetic units of the NPU 100.

For example, energy consumption can be explained by dividing it into addition operations and multiplication operations. However, the energy consumed per unit operation may vary depending on the foundry process technology of the semiconductor chip (e.g., 2nm technology, 5nm technology, 7nm technology, 14nm technology, 28nm technology, etc.) or the technological capabilities of a specific foundry company.

The processing core 120 may be designed to operate on integer parameters of a specific bit width. In FIG. 7, the label "8b INT Add" refers to an 8-bit integer addition operation of the adder 1212 of the processing element 121. An 8-bit integer addition operation may consume 0.03 pJ of energy. The label "16b INT Add" refers to a 16-bit integer addition operation of the adder 1212 of the processing element 121. A 16-bit integer addition operation may consume 0.05 pJ of energy. The label "32b INT Add" refers to a 32-bit integer addition operation of the adder 1212 of the processing element 121. A 32-bit integer addition operation may consume 0.1 pJ of energy. The label "8b INT Mult" refers to an 8-bit integer multiplication operation of the multiplier 1211 of the processing element 121. An 8-bit integer multiplication operation may consume 0.2 pJ of energy. The label "32b INT Mult" refers to a 32-bit integer multiplication operation of the multiplier 1211 of the processing element 121. A 32-bit integer multiplication operation may consume 3.1 pJ of energy.

To elaborate, if the processing core 120 is composed of thousands to tens of thousands of processing elements designed as integer arithmetic units, the power consumption of the NPU 100 can be significantly reduced compared to when the processing core is composed of the same number of processing elements designed as floating-point arithmetic units. In general, in the case of generative artificial intelligence models, since most operations are processed by the processing core 120, the design of arithmetic units with a specific integer bit width is important for the low-power design of the NPU 100.

The vector core 153 and scalar core 154 of the special function unit 150 may be designed to operate on floating-point parameters. In FIG. 7, the label "16b FP Add" refers to a 16-bit floating-point addition operation of an adder in the special function unit 150. A 16-bit floating-point addition operation may consume 0.4 pJ of energy. The label "32b FP Add" refers to a 32-bit floating-point addition operation of an adder in the special function unit 150. A 32-bit floating-point addition operation may consume 0.9 pJ of energy. The label "16b FP Mult" refers to a 16-bit floating-point multiplication operation of a multiplier in the special function unit 150. A 16-bit floating-point multiplication operation may consume 1.1 pJ of energy. The label "32b FP Mult" refers to a 32-bit floating-point multiplication operation of a multiplier in the special function unit 150. A 32-bit floating-point multiplication operation may consume 3.7 pJ of energy. To elaborate, if the special function unit 150 is designed with floating-point arithmetic units, it is advantageous in terms of power consumption of the neural processing unit 100 and miniaturization of the semiconductor chip size to design the number of arithmetic units in the special function unit 150 to be relatively smaller than the number of processing elements 121 in the processing core 120. Therefore, the number of floating-point arithmetic units in the special function unit 150 may be designed to be smaller than the number of integer arithmetic units in the processing core 120.

According to an embodiment, the operational efficiency of the neural processing unit 100 can be improved by implementing a data pipeline circuit design for the processing core 120, vector core 153, and scalar core 154 such that the array size of a specific dimension of tensor data processed by the neural processing unit 100 is compatible with each other among hardware elements.

FIG. 8 illustrates a control method of a neural processing unit (NPU) applicable to examples of the present disclosure. This control method outlines the sequential execution stages involving integer-based computations, floating-point special function processing, and coordinated control between hardware units.

Referring to FIG. 8, the NPU 100 initiates processing by performing integer-based operations on the input data through the processing core 120 in response to an input neural network operation request (step S110). The integer operations performed in this stage may include, for example, quantized vector-matrix multiplication (MatMul), vector accumulations, or activation functions that are implemented using integer arithmetic. These operations are typically applied to tensor data that has been quantized into formats such as INT8 or INT16 to reduce computational complexity and power consumption. The processing core 120, as shown in FIG. 3, includes a plurality of processing element (PE) units that are capable of executing these integer operations in parallel. By utilizing parallelism across the PE units and operating entirely within the integer domain, the step S110 achieves both high-speed computation and enhanced energy efficiency (low power), which are critical requirements for real-time artificial intelligence inference tasks.

Next, the NPU 100 transitions to performing floating-point based special operations on the results produced in the integer computation stage of the step S110 (step S120). These operations are executed by the special function unit 150, which is responsible for handling operations that are either too complex or not well-suited for integer arithmetic. For instance, the special function unit 150 may execute non-linear operations such as activation functions (e.g., ReLU, GELU, tanh), normalization procedures, softmax functions, or other mathematical transformations requiring higher numerical precision. The outputs from the processing core 120 are first converted into floating-point representations before being fed into these operations, allowing the special function unit 150 to maintain computational accuracy.

As illustrated in FIG. 3, the special function unit 150 comprises several subcomponents, including the quantization unit 151, dequantization unit 152, vector core 153, and scalar core 154. The dequantization unit 152 plays a critical role in converting integer-form data into a floating-point format, such as FP16 or BFLOAT16, before further processing. Once dequantized, the data is directed to various modules for non-linear processing. The vector core 153, designed for high-throughput parallelism, is capable of performing complex operations such as softmax, normalization, and activation functions like ReLU and GELU, making it particularly effective for operations on multi-dimensional tensor data. In contrast, the scalar core 154 is optimized for fine-grained operations, including conditional branching, high-precision function approximation, and scalar-based calculations. This scalar core may incorporate an FSM (finite state machine)-based control circuit to manage more complex logic-driven operations. These floating-point processing capabilities complement the earlier integer-stage processing by providing the numerical accuracy required for segments of the neural network that are sensitive to approximation or rounding errors, thereby preserving the model's inference integrity.

Next, the controller 110, also depicted in FIG. 3, monitors the operation state of both the integer processing step S110 and the floating-point special processing step S120 and then provides dynamic control over the operation of the processing core 120 and the special function unit 150 (step S130). The controller 110 coordinates inter-module communication and may manage aspects such as clock control, execution order, and conditional logic based on runtime status flags. It can also analyze factors such as operation load, execution priority, or specific instruction conditions to determine whether to proceed with or bypass certain computations. For instance, if the input tensor consists entirely of zero values, the controller may opt to skip unnecessary computations and activate clock gating or power gating to conserve energy. Additionally, to mitigate pipeline bottlenecks or resource conflicts between modules, the controller may dynamically schedule instruction execution based on decoded command information, thus ensuring balanced workload distribution and efficient resource utilization.

As described, the control method of FIG. 8 is tightly integrated with the architecture and individual components of the NPU 100 of FIG. 3. This method enables synchronized operation across hardware modules while optimizing both performance and power consumption. By incorporating modular processing stages with adaptive control logic, the architecture not only accelerates neural network operations but also supports low-power inference, making it suitable for edge devices or for use in energy-constrained environments where computational efficiency is critical.

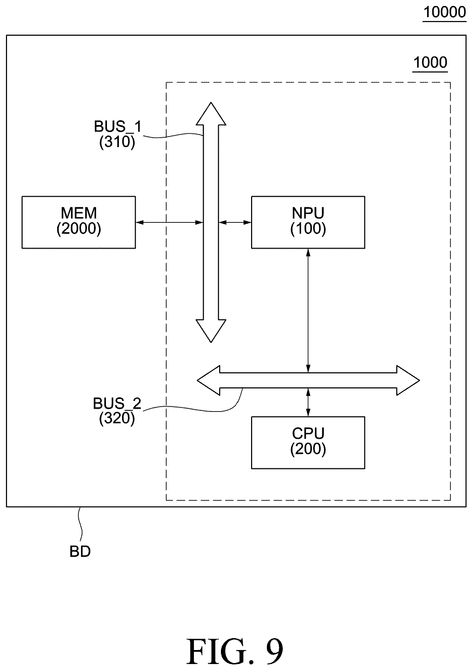

Each of FIGS. 9-16 illustrate a system on chip (1000) according to embodiments of a first example of the present disclosure. Each example and each embodiment of the present disclosure may be modified and implemented in combination with other examples and other embodiments of the present disclosure.

FIG. 9 illustrates a system on chip according to a first embodiment of a first example of the present disclosure. In FIG. 9, a device 10000 according to the first embodiment of the first example of the present disclosure is illustrated.

Referring to FIG. 9, the device 10000 includes a circuit board BD, a memory (MEM) 2000, and a system on chip (SoC) 1000. The memory 2000 and the system on chip 1000 may be disposed on the circuit board BD. The system on chip 1000 is configured to include a neural processing unit (NPU) 100, a central processing unit (CPU) 200, a first bus (BUS_1) 310, and a second bus (BUS_2) 320. The memory 2000 is configured to be electrically connected to the first bus 310.

The system on chip 1000 may refer to a system manufactured on a single semiconductor substrate. The system on chip 1000 may be further configured to include a package (not shown) that protects the semiconductor substrate.

The NPU 100 may be configured to communicate with the memory 2000. A first bus 310 may be provided between the NPU 100 and the memory 2000. For example, the first bus 310 may be an Advanced Extensible Interface (AXI) bus. However, examples of the present disclosure are not limited thereto. The first bus 310 may be configured to support read and write address/control interfaces of the memory 2000 and the NPU 100. The first bus 310 may be configured as an independent data communication channel to support high-speed data transmission through transaction processing other than memory control commands. The first bus 310 may be configured as a dedicated bus for transmitting input parameters, output parameters, and weight parameters of a neural network model, and it is desirable to appropriately design the bandwidth of the first bus 310 considering the parameter size of the neural network models to be processed.

The NPU 100 may be configured to communicate with the CPU 200. A second bus 320 may be provided between the NPU 100 and the CPU 200. For example, the second bus 320 may be an Advanced High-Performance Bus (AHB) bus. However, examples of the present disclosure are not limited thereto. The second bus 320 may be provided for efficient communication between the NPU 100, the CPU 200, and peripheral devices of the system on chip 1000. The second bus 320 may provide a master-slave architecture to improve data throughput. The second bus 320 may be configured to support burst transmission and pipeline operation tasks of the system on chip 1000. The second bus 320 may be configured to provide an on-the-fly function. The second bus 320 may be configured such that while the CPU 200 or the NPU 100 is reading or writing data in real time, a master of the second bus 320 can execute a new command on-the-fly without waiting. Therefore, real-time data processing of the NPU 100 can be optimized, and at least one core of the NPU 00 can be configured to independently use the bus. Therefore, the second bus 320 can support the system on chip 1000 to perform various commands in real time.

To elaborate, the first bus 310 provides a higher memory bandwidth than the second bus 320, and the second bus 320 provides an on-the-fly function, allowing the CPU 200 to dynamically control the neural processing unit 100. Accordingly, the system on chip 1000 can dynamically process various input queries for a generative neural network model.

A description of the NPU 100 is provided in reference to FIGS. 3 to 7. Accordingly, redundant description of the NPU 100 is omitted for convenience of explanation.

The CPU 200 may be configured to control the NPU 100 based on execution code of an artificial intelligence model. The execution code may be generated by a compiler (not shown). The CPU 200 may control the NPU 100 by directly setting register values of each circuit of the NPU 100 based on the execution code. Here, each register value may be included in the execution code. In addition, the CPU 200 may off-load and process operations that are not processed by the NPU 100. In this case, the neural network model may be compiled to off-load specific operations of the neural network model to the CPU 200, and execution code may be obtained.

The memory 2000 may include a main memory located outside the system on chip 1000, but is not limited thereto. The memory 2000 may be electrically connected to the system on chip 1000 through the first bus 310. The memory 2000 of the device 10000 according to the first embodiment of the first example of the present disclosure may include at least one memory among memories such as SRAM, LPDDR RAM, resistive RAM, magneto-resistive RAM, phase-change RAM, ferroelectric RAM, flash memory, HBM, and the like. The memory 2000 may be composed of at least one memory unit (e.g., a memory bank). The memory 2000 may be composed of a single (homogeneous) memory or heterogeneous memories. The capacity of the memory 2000 is preferably provided to be larger than the total size of the weight parameters of the neural network model. In this case, all of the weight parameters of the neural network model can be loaded into the memory 2000 at once and reside there. If the storage capacity of the memory 2000 is insufficient, only some of the weight parameters can be loaded, making it difficult to quickly process inference operations of the neural network model in real time. For example, the capacity of the memory 2000 may be one of 4 GBytes and 8 GBytes. That is, the capacity of the memory 2000 may be 4 GBytes to 8 GBytes, and may be determined considering the parameter size of the neural network model to be driven in the system on chip 1000.

That is, the main memory 2000 may be provided as a dedicated memory for the NPU 100 and may be configured to sufficiently store all essential data, including all learned weights of the neural network model, as well as key activation values generated during the inference operation process and used for the next operation, and to access them at high speed. Whereas conventionally, in the case of large-scale models, some of the weights or activation values had to rely on external slow memory or servers, the present disclosure minimizes data movement bottlenecks and eliminates external dependencies by having all operational data reside within the on-device main memory. This lays the foundation for completing the entire inference process of a neural network model on the device itself without data exchange with an external server (server-independent operation), which provides significant advantages in terms of real-time responsiveness and data privacy. Consequently, the memory structure supports the NPU 100 to stably process operations without delay even for complex models, thereby realizing a true on-device AI environment.

The bandwidth of the first bus 310 may be determined according to the processing performance (e.g., TOPS) of the NPU 100, that is, tera operations per second of the neural processing unit. For example, a memory 2000 bandwidth of 2 GB/s to 4 GB/s per 1 TOPS may be required. For example, a 10 TOPS neural processing unit (NPU 100) may be configured with a memory 2000 to provide a bus bandwidth of 20 GB/s to 40 GB/s. The bandwidth of the first bus 310 may be determined according to the operating frequency of the memory 2000 and the number of communication channels. For example, to configure a memory bandwidth of 40 GB/s with LPDDR5, the following equation can be used. 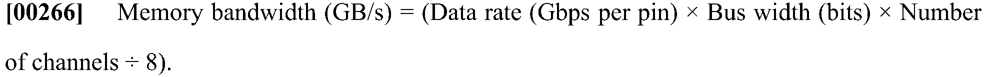 Memory bandwidth (GB/s) = (Data rate (Gbps per pin) × Bus width (bits) × Number of channels ÷ 8).

To elaborate, LPDDR5 generally supports a data rate of up to 6400 Mbps per pin. The bus width of an LPDDR channel is generally 16 bits (2 bytes). However, the number of channels cannot be a decimal point and is an integer. However, examples of the present disclosure are not limited to the bandwidth of the first bus 310.

The device 10000 according to the first embodiment of the first example of the present disclosure may be configured to provide a low-power function for use on-device.

Low-power modes of the device 10000 according to the first embodiment of the first example of the present disclosure may include, for example, a sleep mode, a deep sleep mode, a retention mode, and the like. In some examples, the low-power mode may be referred to as a standby mode, a hibernation mode, an idle mode, or the like.

The sleep mode may be implemented, for example, by applying clock gating to at least one of the processing core 120, the vector core 153, and the scalar core 154 of the NPU 100.

The deep sleep mode may be implemented, for example, by applying power gating to at least one of the processing core 120, the vector core 153, the scalar core 154 of the neural processing unit 100, or the memory 2000.

The retention mode may be implemented by supplying a minimum sustain voltage to the controller 110 of the NPU 100 or the memory 2000.

For example, the NPU 100 of the device 10000 according to the first embodiment of the first example of the present disclosure may be configured to provide at least one function among power gating, clock gating, and register retention functions. To elaborate, when the device 10000 enters sleep mode, the NPU 100 may activate the clock gating function. To elaborate, when the device 10000 enters deep sleep mode, the NPU 100 may activate the power gating function. To elaborate, when the device 10000 enters retention mode, the supply voltage input to the NPU 100 may be reduced or the operating frequency may be reduced.

For example, the memory 2000 of the device 10000 according to the first embodiment of the first example of the present disclosure may provide at least one function among deep sleep, retention, and maintain parameters functions. To elaborate, when the device 10000 enters deep sleep mode, the memory 2000 may be power gated, and in the case of volatile memory devices, data may be lost. To elaborate, when the device 10000 enters retention mode, the supply voltage input to the memory 2000 may be reduced or the operating frequency may be reduced, and in the case of volatile memory devices, data may be maintained. To elaborate, when the device 10000 enters maintain parameters mode, the supply voltage input to the memory 2000 may be reduced or the operating frequency may be reduced, and in the case of DRAM, the refresh period of memory cells may be increased, so data may be maintained in the case of volatile memory devices.

The low-power mode may be activated if an input query for speculative decoding is not input to the device 10000 for a certain period of time or longer. The certain period of time may be provided based on, for example, a timer, a counter value, or the like. The low-power mode may be activated based on a specific threshold time, and may be deactivated when an input query processed by speculative decoding is input to the device 10000. The state in which the low-power mode is deactivated may be referred to as a wake-up state.

The device 10000 according to the first embodiment of the first example of the present disclosure may be a device operable in a battery environment. Therefore, the NPU 100 may be designed to be operable with battery voltage.

The device 10000 according to the first embodiment of the first example of the present disclosure may be configured to provide at least one low-power mode and simultaneously provide speculative decoding in an on-device environment. The device 10000 may enter a low-power mode based on preset conditions, and accordingly, the power consumption of the device 10000 may be reduced.

The system on chip 1000 according to the first embodiment of the first example of the present disclosure has the effect of being able to rapidly accelerate inference operations of a generative neural network model with low power due to the pipeline circuit structure of the processing core 120, vector core 153, and scalar core 154.

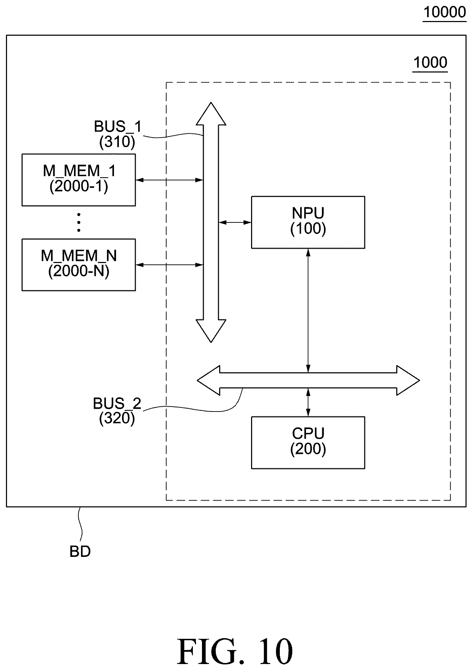

FIG. 10 illustrates a system on chip according to a second embodiment of the first example of the present disclosure. In FIG. 10, a device 10000 according to the second embodiment of the first example of the present disclosure is illustrated.

Referring to FIG. 10, the device 10000 includes a circuit board BD, a plurality of main memories (M_MEM_1, ..., M_MEM_N) 2000-1, ..., 2000-N, and a system on chip 1000. In describing the device 10000 according to the second embodiment of the first example of the present disclosure, redundant descriptions with those made with reference to FIGS. 3 to 9 are omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the second embodiment of the first example of the present disclosure is configured to include a neural processing unit (NPU) 100, a central processing unit (CPU) 200, a first bus 310, and a second bus 320. The plurality of main memories 2000-1, ..., 2000-N are configured to be electrically connected to the first bus 310. The plurality of main memories 2000-1, ..., 2000-N are configured to include a plurality of semiconductor chips.

A first bus 310 may be provided between the neural processing unit 100 and the plurality of main memories 2000-1, ..., 2000-N. A second bus 320 may be provided between the NPU 100 and the CPU 200.

Since the operation of the NPU 100 has been described above with reference to FIGS. 3 to 9, a detailed description of the operation of the NPU 100 is omitted. Since the operation of the CPU 200 has been described above with reference to FIG. 9, a detailed description of the operation of the CPU 200 is omitted.

The plurality of main memories 2000-1, ..., 2000-N may be composed of a plurality of memories disposed outside the system on chip 1000. However, the present disclosure is not limited thereto. The plurality of main memories 2000-1, ..., 2000-N may each be electrically connected to the system on chip 1000 through the first bus 310. Each of the plurality of main memories 2000-1, ..., 2000-N of the device 10000 according to the second embodiment of the first example of the present disclosure may include SRAM, LPDDR RAM, resistive RAM, magneto-resistive RAM, phase-change RAM, ferroelectric RAM, flash memory, or HBM, and the like. The plurality of main memories 2000-1, ..., 2000-N may be composed of a single (homogeneous) memory or heterogeneous memories.

The total capacity of the plurality of main memories 2000-1, ..., 2000-N is preferably provided to be larger than the total capacity occupied by the weight parameters of the artificial intelligence model. In this case, the weight parameters of the neural network model can be loaded onto the plurality of main memories 2000-1, ..., 2000-N at once and reside there. If the storage capacity of the plurality of main memories 2000-1, ..., 2000-N is insufficient, it may be difficult to quickly process inference operations of the neural network model in real time. For example, the total capacity of the plurality of main memories 2000-1, ..., 2000-N may be one of 8 GBytes, 16 GBytes, 32 GBytes, 64 GBytes, and 128 GBytes. That is, the total capacity of the plurality of main memories 2000-1, ..., 2000-N may be 8 GBytes to 128 GBytes, and may be determined considering the parameter size of at least one artificial intelligence model to be driven in the system on chip 1000. Therefore, by locating a plurality of main memories for loading and storing parameters of the artificial intelligence model outside the system on chip 1000, the device 10000 can easily increase the capacity of the main memory while reducing the manufacturing cost of the system on chip 1000. If a plurality of main memories are disposed inside a package protecting the system on chip 1000, the size of the package may increase, thereby increasing manufacturing costs, but it may satisfy the criteria of a specific form factor (e.g., M.2 2230, M.2 2242).

The bandwidth of the first bus 310 may be determined according to the processing performance (e.g., TOPS) of the NPU 100, that is, tera operations per second of the neural processing unit. For example, for a 30 TOPS neural processing unit (NPU 100), the plurality of main memories 2000-1, ..., 2000-N may be configured to provide a bus bandwidth of 60 GB/s to 120 GB/s. The bandwidth of the first bus 310 may be determined according to the operating frequency of the plurality of main memories 2000-1, ..., 2000-N and the number of communication channels. However, examples of the present disclosure are not limited to the bandwidth of the first bus 310.

The device 10000 according to the second embodiment of the first example of the present disclosure provides a plurality of main memories 2000-1, ..., 2000-N, and the total capacity of the main memories may be a capacity capable of storing all parameters of at least one neural network model at once. In addition, according to the configuration of the second embodiment of the first example, the memory capacity can be expanded to correspond to the size of a generative neural network model with a considerable size of weight parameters. Therefore, the system on chip 1000 can process the neural network model quickly in real time. To elaborate, the plurality of main memories 2000-1, ..., 2000-N of the device 10000 according to embodiments of the present disclosure are configured as dedicated memories for the system on chip 1000. If all parameters of the artificial intelligence model processed by the NPU 100 are not stored in the plurality of main memories 2000-1, ..., 2000-N, especially if all weight parameters and attention scores cannot be stored in the plurality of main memories 2000-1, ..., 2000-N, these parameters must be stored in a separate storage device, and a decrease in operation speed due to large-capacity memory operations is caused.

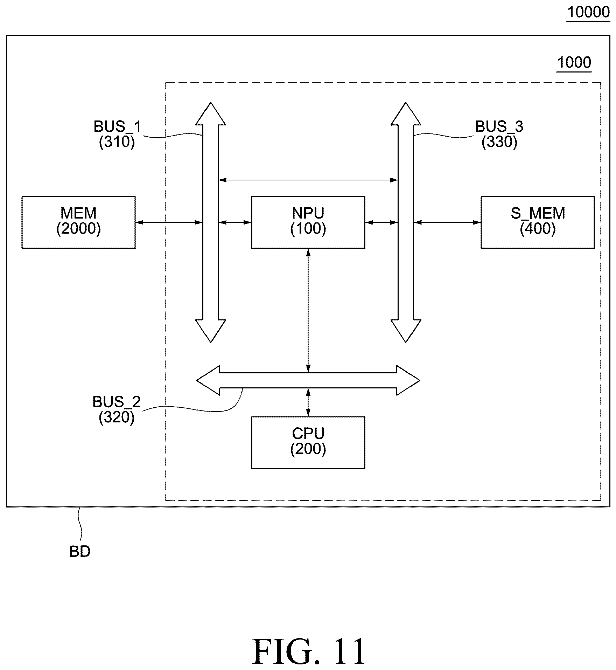

FIG. 11 illustrates a system on chip according to a third embodiment of the first example of the present disclosure. In FIG. 11, a device 10000 according to the third embodiment of the first example of the present disclosure is illustrated.

Referring to FIG. 11, the device 10000 includes a circuit board BD, a main memory 2000, and a system on chip 1000. In describing the system on chip 1000 according to the third embodiment of the first example of the present disclosure, redundant descriptions with those made with reference to FIGS. 3 to 10 may be omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the third embodiment of the first example of the present disclosure is configured to include a neural processing unit (NPU) 100, a central processing unit (CPU) 200, a first bus (BUS_1) 310, a second bus (BUS_2) 320, a third bus (BUS_3) 330, and a shared memory (S_MEM) 400. The shared memory 400 is configured as an on-chip memory of the system on chip 1000. The main memory 2000 is configured to be electrically connected to the first bus 310. The main memory 2000 is configured to include at least one semiconductor chip. The shared memory 400 is configured to be electrically connected to the third bus 330.

A first bus 310 may be located between the neural processing unit 100 and the main memory 2000. A second bus 320 may be located between the NPU 100 and the CPU 200. A third bus 330 may be located between the NPU 100 and the shared memory 400. For example, the third bus 330 may be an advanced extensible interface (AXI) bus. However, examples of the present disclosure are not limited thereto. The third bus 330 may be configured to support read and write address/control interfaces of the shared memory 400 and the neural processing unit 100. The third bus 330 may be configured as an independent data communication channel to support high-speed data transmission through transaction processing other than memory control commands. The third bus 330 may be configured as a dedicated bus for transmitting input parameters, output parameters, and weight parameters of a neural network model. Here, the first bus 310 and the third bus 330 are configured to be electrically connected. Accordingly, the shared memory 400 and the main memory 2000 can transmit tensor data through the first bus 310 and the third bus 330.

Since the operation of the NPU 100 has been described above with reference to FIGS. 3 to 10, its detailed description is omitted. Since the operation of the CPU 200 has been described above with reference to FIGS. 9 to 10, its detailed description is omitted.

The main memory 2000 may be composed of at least one memory disposed outside the system on chip 1000. The main memory 2000 may be composed of a single (homogeneous) memory or heterogeneous memories. The capacity of the main memory 2000 may be determined considering the parameter size of at least one neural network model to be driven in the system on chip 1000. The bandwidth of the first bus 310 may be determined based on the processing performance of the NPU 100.

The shared memory 400 may be composed of at least one memory disposed inside the system on chip 1000. The shared memory 400 of the system on chip 1000 according to the third embodiment of the first example of the present disclosure may include at least one memory among memories such as SRAM, LPDDR RAM, resistive RAM, magneto-resistive RAM, phase-change RAM, ferroelectric RAM, flash memory, HBM, and the like. The shared memory 400 may be composed of a single (homogeneous) memory or heterogeneous memories. As a representative embodiment, the shared memory 400 may be implemented with SRAM. The capacity of the shared memory 400 is designed to be smaller than the capacity of the main memory 2000. If the capacity of the shared memory 400 increases, semiconductor manufacturing costs may increase rapidly. Therefore, the capacity of the shared memory 400 may be configured from 4 MBytes to 128 MBytes. Preferably, the capacity of the shared memory 400 may be configured from 16 MBytes to 64 MBytes. The capacity of the shared memory 400 may be larger than the capacity of the internal memory 140 of the neural processing unit 100.

The operation of the shared memory 400 and the main memory 2000 will be described with reference to FIG. 7. The label "32b S_MEM Read" in FIG. 7 refers to a 32-bit data read operation of the main memory 2000 of FIG. 11. Here, the main memory 2000 may be LPDDR RAM. In this case, a 32-bit data read operation of the main memory 2000 may consume 640 pJ of energy. The label "32b S_MEM Read" in FIG. 7 refers to a 32-bit data read operation of the shared memory 400 of FIG. 11. Here, the shared memory 400 may be SRAM. In this case, a 32-bit data read operation of the shared memory 400 may consume 5 pJ of energy. That is, when the NPU 100 uses the shared memory 400 implemented with SRAM, the energy consumption of the device 10000 can be significantly reduced compared to when only the main memory 2000 is used. However, since the manufacturing cost of the shared memory 400 is high, it is difficult to implement it with a large capacity. Therefore, when a compiler (not shown) generates execution code for a neural network model to be processed by the system on chip 1000, it may set reusable input parameters, output parameters, and weight parameters to be preferentially stored in the shared memory 400 rather than the main memory 2000. That is, the compiler (not shown) may provide a function of determining reusable parameters among a series of neural network model operations and storing them in the shared memory 400 for reuse.

The system on chip 1000 according to the third embodiment of the first example of the present disclosure provides a shared memory 400, and by executing execution code set such that reusable parameters are stored in the shared memory 400, the power consumption of the system on chip 1000 can be reduced.

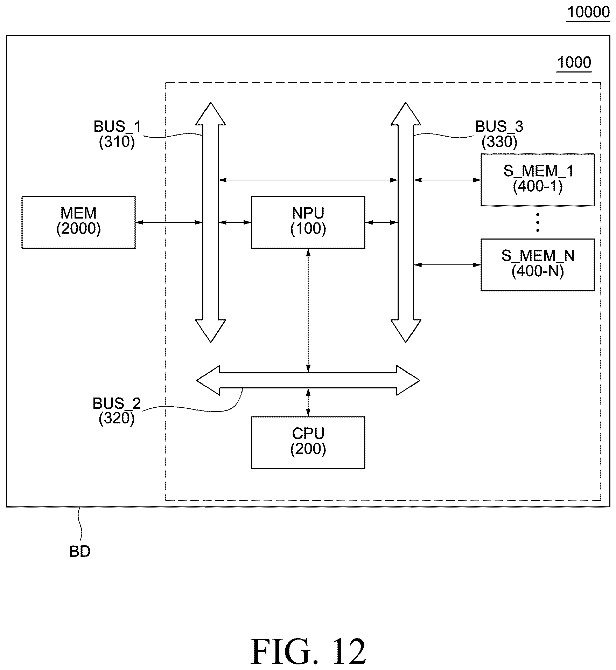

FIG. 12 illustrates a system on chip according to a fourth embodiment of the first example of the present disclosure. In FIG. 12, a device 10000 according to the fourth embodiment of the first example of the present disclosure is illustrated.

Referring to FIG. 12, the device 10000 includes a circuit board BD, a main memory 2000, and a system on chip 1000. In describing the system on chip 1000 according to the fourth embodiment of the first example of the present disclosure, redundant descriptions with those in FIGS. 3 to 11 are omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the fourth embodiment of the first example of the present disclosure is configured to include a neural processing unit (NPU) 100, a central processing unit (CPU) 200, a first bus 310, a second bus 320, a third bus 330, and a plurality of shared memories 400-1, ..., 400-N. The plurality of shared memories 400-1, ..., 400-N are configured as on-chip memories of the system on chip 1000. The main memory 2000 is configured to be electrically connected to the first bus 310. The main memory 2000 is configured to include at least one semiconductor chip. The plurality of shared memories 400-1, ..., 400-N are configured to be electrically connected to the third bus 330.

A first bus 310 may be located between the NPU 100 and the main memory 2000. A second bus 320 may be located between the NPU 100 and the CPU 200. A third bus 330 may be located between the NPU 100 and the plurality of shared memories 400-1, ..., 400-N. Here, the first bus 310 and the third bus 330 are configured to be electrically connected.

Since the operation of the NPU 100 has been described with reference to FIGS. 3 to 11, redundant description of the operation of the NPU 100 is omitted. Since the operation of the central processing unit 200 has been described with reference to FIGS. 9 to 11, redundant description of the CPU 200 is omitted.

The main memory 2000 may be composed of at least one memory disposed outside the system on chip 1000. The main memory 2000 may be composed of a single (homogeneous) memory or heterogeneous memories. The capacity of the main memory 2000 may be determined considering the parameter size of at least one neural network model to be driven in the system on chip 1000. The bandwidth of the first bus 310 may be determined according to the processing performance of the NPU 100.

The plurality of shared memories 400-1, ..., 400-N may be composed of a plurality of memories disposed inside the system on chip 1000. Each shared memory may be configured to operate independently of each other. The plurality of shared memories 400-1, ..., 400-N of the system on chip 1000 according to the fourth embodiment of the first example of the present disclosure may include at least one memory among memories such as SRAM, LPDDR RAM, resistive RAM, magneto-resistive RAM, phase-change RAM, ferroelectric RAM, flash memory, HBM, and the like. The plurality of shared memories 400-1, ..., 400-N may be composed of a single (homogeneous) memory or heterogeneous memories. Here, an example in which the plurality of shared memories 400-1, ..., 400-N are implemented with SRAM will be described. The capacity of the plurality of shared memories 400-1, ..., 400-N is designed to be smaller than the capacity of the main memory 2000. If the capacity of the plurality of shared memories 400-1, ..., 400-N increases, semiconductor manufacturing costs may increase rapidly. Therefore, the total capacity of the plurality of shared memories 400-1, ..., 400-N may be configured from 4 MBytes to 128 MBytes. Preferably, the total capacity of the plurality of shared memories 400-1, ..., 400-N may be configured from 16 MBytes to 64 MBytes. The capacity of the plurality of shared memories 400-1, ..., 400-N may be configured to be larger than the capacity of the internal memory 140 of the NPU 100.

When the NPU 100 uses the plurality of shared memories 400-1, ..., 400-N implemented with SRAM, the energy consumption of the device 10000 can be significantly reduced compared to when only the main memory 2000 is used. Therefore, when a compiler (not shown) generates execution code for a neural network model to be processed by the system on chip 1000, it may set a data reuse command to preferentially store reusable input parameters, output parameters, and weight parameters in the plurality of shared memories 400-1, ..., 400-N located inside the system on chip 1000 rather than the main memory 2000.

The system on chip 1000 according to the fourth embodiment of the first example of the present disclosure provides a plurality of shared memories 400-1, ..., 400-N, and by executing execution code set such that reusable parameters are preferentially stored in the plurality of shared memories 400-1, ..., 400-N, the power consumption of the system on chip 1000 can be reduced. In addition, by providing a plurality of independent shared memories for respective domains (e.g., weight domain, attention score domain, etc.), memory operations for respective domains of parameters of the neural network model (e.g., weights, input parameters, output parameters) can be easily processed.

The system on chip 1000 according to the fourth embodiment of the first example of the present disclosure provides a plurality of shared memories 400-1, ..., 400-N, and by executing execution code set such that reusable parameters are preferentially stored in the plurality of shared memories 400-1, ..., 400-N, the power consumption of the system on chip 1000 can be reduced. In addition, by providing a plurality of independent shared memories, memory operations for respective domains of parameters of the neural network model (e.g., weights, input parameters, output parameters) can be easily processed.

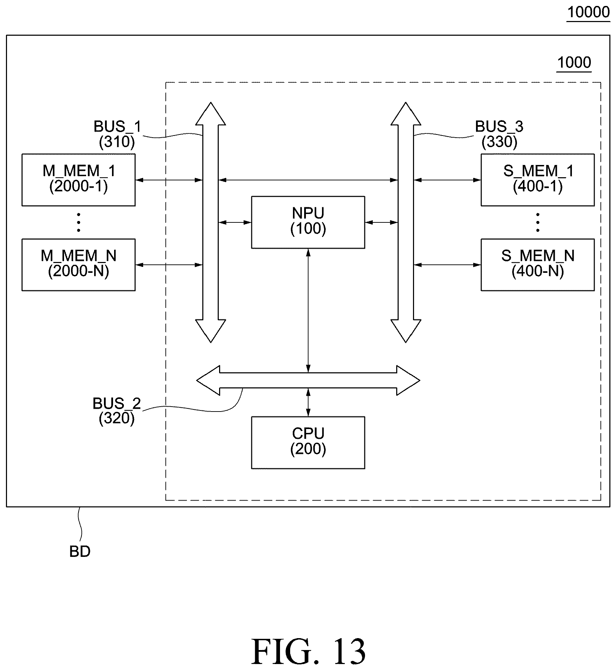

FIG. 13 illustrates a system on chip according to a fifth embodiment of the first example of the present disclosure. In FIG. 13, a device 10000 according to the fifth embodiment of the first example of the present disclosure is illustrated.

Referring to FIG. 13, the device 10000 includes a circuit board BD, a plurality of main memories 2000-1, ..., 2000-N, and a system on chip 1000. In describing the system on chip 1000 according to the fifth embodiment of the first example of the present disclosure, redundant descriptions with those in FIGS. 3 to 12 are omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the fifth embodiment of the first example of the present disclosure is configured to include a neural processing unit (NPU) 100, a central processing unit (CPU) 200, a first bus 310, a second bus 320, a third bus 330, and a plurality of shared memories 400-1, ..., 400-N. The plurality of shared memories 400-1, ..., 400-N are configured as on-chip memories of the system on chip 1000. The plurality of main memories 2000-1, ..., 2000-N are configured to be electrically connected to the first bus 310. The plurality of main memories 2000-1, ..., 2000-N are configured to include at least one semiconductor chip. The plurality of shared memories 400-1, ..., 400-N are configured to be electrically connected to the third bus 330.

A first bus 310 may be provided between the NPU 100 and the plurality of main memories 2000-1, ..., 2000-N. A second bus 320 may be provided between the NPU 100 and the CPU 200. A third bus 330 may be provided between the NPU 100 and the plurality of shared memories 400-1, ..., 400-N. Here, the first bus 310 and the third bus 330 are configured to be electrically connected.

Since the operation of the NPU 100 has been described with reference to FIGS. 3 to 12, redundant description of the operation of the NPU 100 is omitted. Since the operation of the central processing unit 200 has been described with reference to FIGS. 9 to 12, redundant description of the CPU 200 is omitted. The plurality of main memories 2000-1, ..., 2000-N are described with reference to FIG. 10, such that their redundant description is omitted. The plurality of shared memories 400-1, ..., 400-N are described with reference to FIG. 12, such that their redundant description is omitted.

The plurality of main memories 2000-1, ..., 2000-N may be composed of a plurality of memories disposed outside the system on chip 1000. The total capacity of the plurality of main memories 2000-1, ..., 2000-N may be determined considering the parameter size of at least one neural network model to be driven in the system on chip 1000. The total capacity of the plurality of main memories 2000-1, ..., 2000-N may be configured to be larger than the total capacity of the plurality of shared memories 400-1, ..., 400-N. Therefore, by providing a plurality of main memories outside the system on chip 1000, the manufacturing cost of the system on chip 1000 can be reduced.

The plurality of shared memories 400-1, ..., 400-N may be composed of a plurality of memories disposed inside the system on chip 1000. The total capacity of the plurality of shared memories 400-1, ..., 400-N may be configured to be larger than the capacity of the internal memory 140 of the NPU 100. Therefore, by disposing reusable parameters in the plurality of shared memories 400-1, ..., 400-N, data read from or transmitted from the plurality of main memories 2000-1, ..., 2000-N can be reduced, thereby reducing the power consumption of the device 10000.

A compiler (not shown) may set, when generating execution code for a neural network model to be processed by the system on chip 1000, reusable input parameters, output parameters, and weight parameters to be preferentially stored in the plurality of shared memories 400-1, ..., 400-N rather than the plurality of main memories 2000-1, ..., 2000-N.

The device 10000 according to the fifth embodiment of the first example of the present disclosure can support a generative neural network model with a large number of parameters and improve data reuse by combining the features of the second embodiment of the first example and the fourth embodiment of the first example of the present disclosure, thereby providing an expandable main memory and an expandable shared memory.

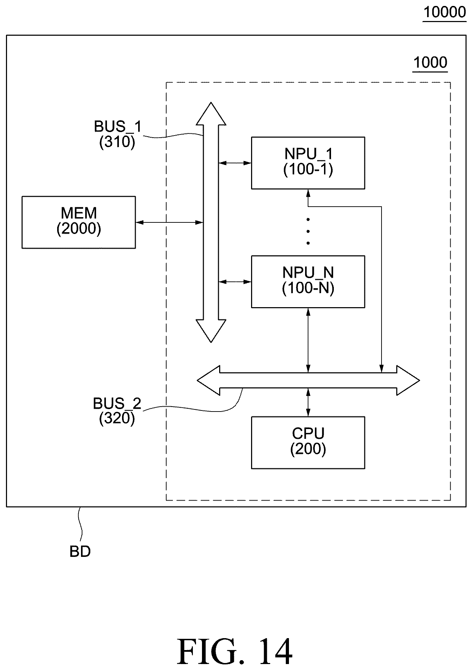

FIG. 14 illustrates a system on chip according to a sixth embodiment of the first example of the present disclosure. In FIG. 14, a device 10000 according to the sixth embodiment of the first example of the present disclosure is illustrated.

Referring to FIG. 14, the device 10000 includes a circuit board BD, a memory 2000, and a system on chip 1000. In describing the system on chip 1000 according to the sixth embodiment of the first example of the present disclosure, redundant descriptions with those in FIGS. 3 to 13 are omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the sixth embodiment of the first example of the present disclosure is configured to include a plurality of neural processing units (NPU_1, ..., NPU_N) 100-1, ..., 100-N, a central processing unit (CPU) 200, a first bus 310, and a second bus 320. The memory 2000 is configured to be electrically connected to the first bus 310.

Each of the plurality of NPUs 100-1, ..., 100-N may be configured to communicate with the memory 2000. A first bus 310 may be provided between the plurality of neural processing units 100-1, ..., 100-N and the memory 2000.

Each of the plurality of NPUs 100-1, ..., 100-N may be configured to communicate with the CPU 200. A second bus 320 may be provided between the plurality of NPUs 100-1, ..., 100-N and the CPU 200.

The plurality of NPUs 100-1, ..., 100-N are described with reference to FIGS. 3 to 13, such that their redundant description is omitted.

The processing performance (TOPS) of each of the plurality of NPUs 100-1, ..., 100-N may be the same as or different from each other. Each of the plurality of NPUs 100-1, ..., 100-N may be configured to operate independently. Each of the plurality of NPUs 100-1, ..., 100-N may be configured to process operations of a specific neural network model in parallel.

The CPU 200 is described with reference to FIGS. 9 to 13 such that its redundant description is omitted.

The CPU 200 may be configured to control each of the plurality of NPUs 100-1, ..., 100-N based on execution code of a neural network model. Here, a compiler (not shown) may be configured to generate respective execution codes corresponding to each of the plurality of NPUs 100-1, ..., 100-N. The CPU 200 may be configured to control the plurality of NPUs 100-1, ..., 100-N by directly setting register values of circuits of each of the plurality of NPUs 100-1, ..., 100-N based on the respective execution codes.

The memory 2000 may be configured as a main memory disposed outside the system on chip 1000. The memory 2000 may be composed of a single (homogeneous) memory or heterogeneous memories. The capacity of the memory 2000 may be determined considering the parameter size of at least one neural network model to be driven in the system on chip 1000. The bandwidth of the first bus 310 may be determined according to the processing performance of the plurality of NPUs 100-1, ..., 100-N.

The bandwidth of the first bus 310 may be determined according to the processing performance (e.g., TOPS) of the plurality of NPUs 100-1, ..., 100-N, that is, tera operations per second of the neural processing units. For example, a memory 2000 bandwidth of 2 GB/s to 4 GB/s per 1 TOPS may be required. For example, if there are two 10 TOPS neural processing units (NPUs 100), the memory 2000 may be configured to provide a bus bandwidth of 40 GB/s to 80 GB/s. The bandwidth of the first bus 310 may be determined according to the operating frequency of the memory 2000 and the number of communication channels.

The system on chip 1000 according to the sixth embodiment of the first example of the present disclosure has the effect of being able to generate responses to input queries faster by providing a plurality of NPUs 100-1, ..., 100-N, thereby improving the parallel processing performance of a neural network model.

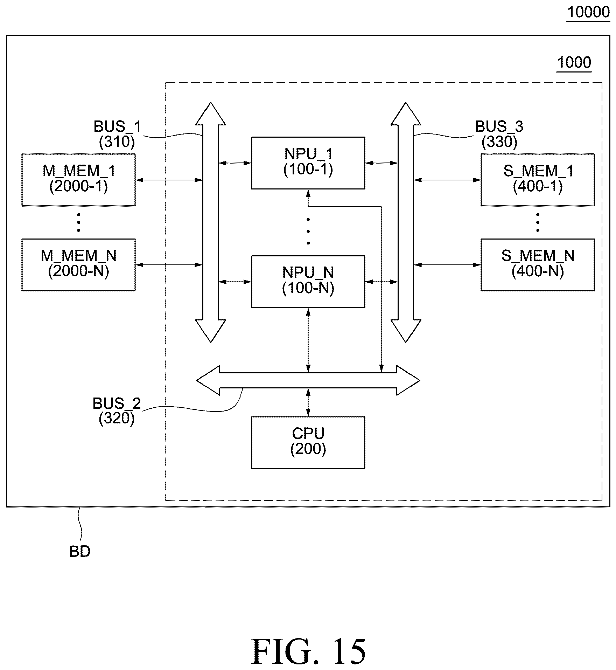

FIG. 15 illustrates a system on chip according to a seventh embodiment of the first example of the present disclosure. In FIG. 15, a device 10000 according to the seventh embodiment of the first example of the present disclosure is illustrated.

Referring to FIG. 15, the device 10000 includes a circuit board BD, a plurality of main memories 2000-1, ..., 2000-N, and a system on chip 1000. In describing the system on chip 1000 according to the seventh embodiment of the first example of the present disclosure, redundant descriptions with those in FIGS. 3 to 14 are omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the seventh embodiment of the first example of the present disclosure is configured to include a plurality of neural processing units (NPUs) 100-1, ..., 100-N, a central processing unit (CPU) 200, a first bus 310, a second bus 320, a third bus 330, and a plurality of shared memories 400-1, ..., 400-N. The plurality of shared memories 400-1, ..., 400-N are configured as on-chip memories of the system on chip 1000. The plurality of main memories 2000-1, ..., 2000-N are configured to be electrically connected to the first bus 310. The plurality of main memories 2000-1, ..., 2000-N are configured to include at least one semiconductor chip. The plurality of shared memories 400-1, ..., 400-N are configured to be electrically connected to the third bus 330.

A first bus 310 may be provided between the NPU 100 and the plurality of main memories 2000-1, ..., 2000-N. A second bus 320 may be provided between the NPU 100 and the central processing unit 200. A third bus 330 may be provided between the NPU 100 and the plurality of shared memories 400-1, ..., 400-N. Here, the first bus 310 and the third bus 330 are configured to be electrically connected.

The NPU 100 is described with reference to FIGS. 3 to 14, such that its redundant description is omitted. The CPU 200 is described with reference referred to in FIGS. 9 to 14, such that its redundant description is omitted. The plurality of main memories 2000-1, ..., 2000-N are described with reference to FIG. 10, such that their redundant description is omitted. The plurality of shared memories 400-1, ..., 400-N are described with reference to FIG. 12, such that their redundant description is omitted. The plurality of NPUs 100-1, ..., 100-N are described with reference to FIG. 14, such that their redundant description is omitted.

The plurality of main memories 2000-1, ..., 2000-N may be composed of a plurality of memories disposed outside the system on chip 1000. The total capacity of the plurality of main memories 2000-1, ..., 2000-N may be determined considering the parameter size of at least one neural network model to be driven in the system on chip 1000. The total capacity of the plurality of main memories 2000-1, ..., 2000-N may be configured to be larger than the total capacity of the plurality of shared memories 400-1, ..., 400-N. Therefore, by providing a plurality of main memories outside the system on chip 1000, the manufacturing cost of the system on chip 1000 can be reduced.

The plurality of shared memories 400-1, ..., 400-N may be composed of a plurality of memories disposed inside the system on chip 1000. The total capacity of the plurality of shared memories 400-1, ..., 400-N may be configured to be larger than the capacity of the internal memory 140 of the NPU 100. Therefore, by disposing reusable parameters in the plurality of shared memories 400-1, ..., 400-N, data read from or transmitted from the plurality of main memories 2000-1, ..., 2000-N can be reduced, thereby reducing the power consumption of the device 10000.

A compiler (not shown) may set, when generating execution code for a neural network model to be processed by the system on chip 1000, reusable input parameters, output parameters, and weight parameters to be preferentially stored in the plurality of shared memories 400-1, ..., 400-N rather than the plurality of main memories 2000-1, ..., 2000-N.

The device 10000 according to the seventh embodiment of the first example of the present disclosure provides a plurality of neural processing units, an expandable main memory, and an expandable shared memory by combining the features of the fifth embodiment of the first example and the sixth embodiment of the first example of the present disclosure. Accordingly, a generative neural network model with a large number of parameters can be supported by parallel processing of a plurality of neural processing units while improving data reuse.

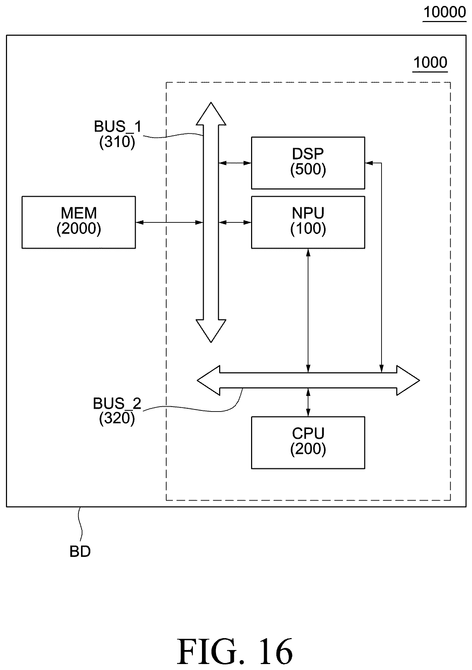

FIG. 16 illustrates a system on chip 1000 according to an eighth embodiment of the first example of the present disclosure.

In describing the system on chip 1000 according to the eighth embodiment of the first example of the present disclosure, redundant descriptions with those in FIGS. 3 to 15 are omitted for convenience of explanation. Each example and each embodiment of the present disclosure may be modified and implemented in combination with other examples and other embodiments of the present disclosure.

The system on chip 1000 may refer to a system manufactured on a single semiconductor substrate. The system on chip 1000 may be further configured to include a package (not shown) that protects the semiconductor substrate.

The system on chip 1000 according to the eighth embodiment of the first example of the present disclosure is configured to include a neural processing unit (NPU) 100, a central processing unit (CPU) 200, a first bus (BUS_1) 310, and a second bus (BUS_2) 320. Here, the system on chip 1000 according to the eighth embodiment of the first example of the present disclosure is further configured to include a digital signal processor (DSP) 500. A memory 2000 is configured to be electrically connected to the first bus 310. The memory 2000 is configured to include at least one semiconductor chip.

A first bus 310 may be provided between the NPU 100 and the memory 2000. A first bus 310 may be provided between the DSP 500 and the memory 2000. A second bus 320 may be provided between the NPU 100 and the CPU 200. A second bus 320 may be provided between the DSP 500 and the CPU 200.

The NPU 100 is described with reference to FIGS. 3 to 15, such that is redundant description is omitted. The CPU 200 is described with reference to FIGS. 9 to 15, such that is redundant description is omitted. The memory 2000 is described with reference to FIGS. 9 to 15, such that is redundant description is omitted.

The DSP 500 may be configured to process at least some of the operations of a neural network model that are inefficient to process in the NPU 100. The DSP 500 includes at least one vector processor (not shown) and at least one scalar processor (not shown).

The system on chip 1000 according to the eighth embodiment of the first example of the present disclosure further provides the DSP 500, and can offload specific operations of a neural network model that are inefficient to process in the NPU 100. Therefore, the system on chip 1000 can process the neural network model quickly in real time.

In some examples, to improve the transmission speed of parameters or operational data between the common memories and the NPU 100, a dedicated bus or a high-speed bus interface operating separately from the system bus may be further included. Here, the system bus may be a common data transmission path within the system on chip 1000, including the second bus 320, the third bus 330, etc., and may be configured to support communication between modules such as the neural processing unit, central processing unit, and on-chip memory. Meanwhile, the dedicated bus can connect model parameters of a specific domain stored in the shared memory to a plurality of neural processing units in parallel, thereby alleviating data transmission bottlenecks and enabling high-speed access. Such a separate bus configuration is designed to reduce the load on the main bus (e.g., first bus 310) while optimizing the operational path accessing the common memory.

Various system on chip (SoC) embodiments according to the first example of the present disclosure (see FIGS. 9 to 16) provide a hardware basis for implementing an expandable on-device AI acceleration platform with high parallel processing capability and flexibility, and such a platform may selectively or in combination include the following several main features.

First, according to various examples, a multiple NPU core architecture that improves parallel operation processing capability by integrating multiple NPU cores (each NPU including an integer operation-centric processing core (P_CORE) and a special function unit (SFU) for processing floating-point (FP) operations) with optimized power, performance, and area (PPA) on a single chip may be provided. Here, the sixth embodiment (FIG. 14) and seventh embodiment (FIG. 15) of the first example may be referenced accordingly.

Second, a hierarchical/distributed memory system may be provided which comprises multiple independent on-chip shared memory (SRAM) banks allocated to each NPU core or NPU core group to enhance data locality, and a multi-channel main memory (external DRAM) system accessible by all these NPU cores and providing high total bandwidth. Here, the third (FIG. 11), fourth (FIG. 12), fifth (FIG. 13), and seventh (FIG. 15) embodiments of the first example may be referenced accordingly. This efficiently manages complex data flows and minimizes memory bottleneck phenomena.

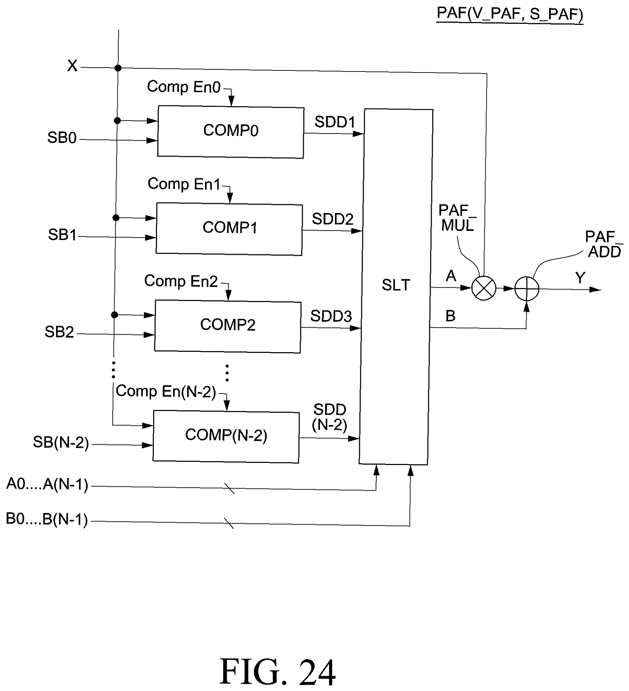

Third, the special function unit within the NPU core may include a programmable function approximation circuit embodied as a piecewise affine function (PAF) unit. Here, the configuration of SFU 150 within NPU 100 of FIG. 3 and the fourth example (FIG. 24, FIG. 25, FIG. 27) may be referenced accordingly. This allows for software support for various current and future activation functions and non-linear operations without separate hardware changes, thereby securing system flexibility and future expandability.

Fourth, in the system configuration according to the first example of the present disclosure (e.g., FIGS. 9 to 16), a digital signal processor (DSP) 500 for offloading data processing before and after neural network operations (e.g., sensor data preprocessing, postprocessing) or specific operations inefficient for the NPU to handle may be selectively integrated. FIG. 16 illustrates an example of such DSP integration. This allows the NPU to focus on core AI operations, thereby improving the efficiency of the entire system.

The organic combination of the aforementioned elements creates a powerful synergistic effect. Multiple NPU cores and a distributed/hierarchical memory structure provide extreme parallelism and high data supply capability, enabling the processing of complex or multiple AI models simultaneously or very rapidly in an on-device environment. When combined with a programmable SFU, flexibility not limited to specific models or operations and adaptability to future new AI algorithms can be provided in an on-device environment. The selective integration of a DSP further expands the application range of such a platform.

In summary, an expandable on-device artificial intelligence (AI) acceleration system according to the present disclosure may include: one or more value IN cores, each comprising an integer operation processing core and a floating-point special function unit (SFU); (optionally) one or more on-chip shared memories associated with each NPU core or NPU core group to provide data locality; a high-bandwidth main memory interface shared by the NPU cores for large-capacity data storage; and an integrated controller that distributes AI operations to the NPU cores and (optionally) the DSP, and controls data flow through the on-chip shared memory and the main memory interface. At this time, the floating-point special function unit may include a programmable function approximation circuit (PAF) that approximates various non-linear functions according to input parameters. In addition, a digital signal processor (DSP) that performs specific signal processing operations independently of the operations of the NPU core may be selectively provided. This enables various AI models and workloads to be accelerated in parallel and flexibly in an on-device environment, making the realization of high-performance AI applications possible.

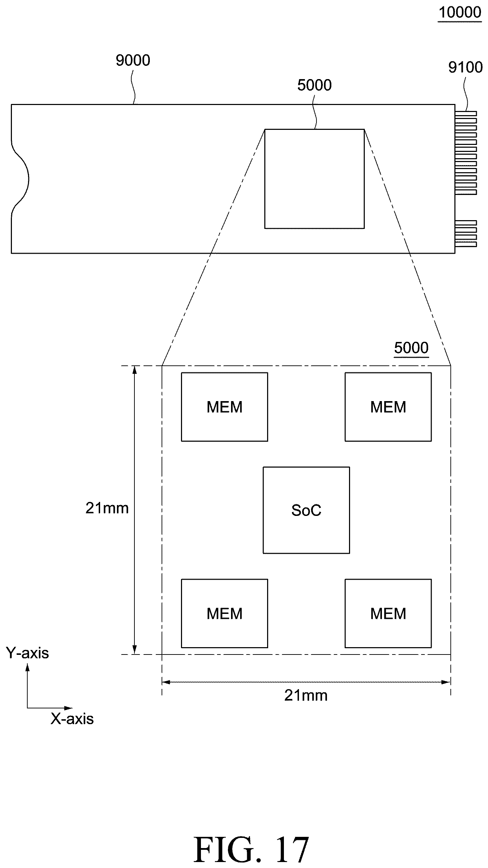

FIG. 17 illustrates a device 10000 according to a first embodiment of a second example of the present disclosure.

The device 10000 illustrated in FIG. 17 may be a top plan view of the device 10000, but is not limited thereto. The size of each hardware element described with reference to FIG. 17 may mean width (X-axis length) and depth (height, Y-axis length).

The device 10000 according to the first embodiment of the second example of the present disclosure includes a circuit board 9000 and a package 5000. The circuit board 9000 may further include a slot 9100 (e.g., M.2 slot). The device 10000 according to the first embodiment of the second example of the present disclosure may correspond to the device 10000 according to the embodiments of the first example of the present disclosure. The circuit board 9000 according to the first embodiment of the second example of the present disclosure may correspond to the circuit board BD according to the embodiments of the first example of the present disclosure. The package 5000 according to the first embodiment of the second example of the present disclosure may correspond to the package (not shown) in the embodiments of the first example of the present disclosure. Redundant descriptions made with reference to FIGS. 3 to 16 are omitted.

The device 10000 according to the first embodiment of the second example of the present disclosure may be configured as a system on chip (SoC). The system on chip may mean a semiconductor package integrating at least one neural processing unit 100 and elements of various electronic systems. The system on chip may integrate digital circuits, analog circuits, mixed signals, and radio frequency processing circuits in a single package. For example, the system on chip may further include at least one of a central processing unit (CPU), a digital signal processor (DSP), an image signal processor (ISP), and a graphics processing unit, in addition to the value IN. The system on chip may include at least one memory. The system on chip may include a high-speed data bus for efficient communication between various circuits included in the system on chip. The system on chip may include at least one interface such as PCIe, USB, I2C, SPI, UART, GPIO for connection with external devices and sensors. The system on chip may include an on-chip power management unit that regulates voltage and power distribution of the semiconductor package. The system on chip may include a communication interface integrating wired or wireless communication protocols such as Ethernet, Wi-Fi, Bluetooth, cellular connection for data transmission.

Referring to FIG. 17, the device 10000 is an example implemented in an M.2 form factor. In the first embodiment of the second example of the present disclosure, the width of the circuit board 9000 is 22 mm, and the depth may be 42 mm, 60 mm, 80 mm, or 110 mm, but is not limited thereto.

The M.2 board is a next-generation interface standard for high-speed data transmission, providing high speed and high efficiency, and is designed in a compact size, being adopted in various devices such as notebooks, desktops, and mini-PCs. In particular, small form factors such as M.2 are easy to apply on-device.

The package 5000 mounted on the device 10000 may include a system on chip and at least one memory. The system on chip according to the first embodiment of the second example of the present disclosure may correspond to the system on chip 1000 according to the embodiments of the first example of the present disclosure. The memory of FIG. 17 may correspond to the memory or main memory M_MEM described above with reference to FIGS. 9 to 16.

The physical size of the system on chip may be, for example, 4.50 mm×4.85 mm. However, the present disclosure is not limited thereto. Considering the minimum separation distance required between the system on chip and the memories MEM, the physical size of each memory may be limited to 6.43 mm×5.30 mm. However, the present disclosure is not limited to the size or dimensions of each element.

Meanwhile, the maximum number of memories MEM within the package 5000 may be determined considering the processing capability of the system on chip (e.g., TOPS), or the size of a package below a certain size that satisfies the size of a specific form factor applied to the system on chip.

According to an embodiment, the process node of the semiconductor manufacturing process of the memory may be lower than the process node of the semiconductor manufacturing process of the system on chip. For example, the memory may be manufactured by a 14nm semiconductor manufacturing process, and the process of the system on chip may be manufactured by a 7nm semiconductor manufacturing process. For example, the memory may be manufactured by a 5nm semiconductor manufacturing process, and the system on chip may be manufactured by a 7nm semiconductor manufacturing process. For example, the memory may be manufactured by a 2nm semiconductor manufacturing process, and the system on chip may be manufactured by a 5nm semiconductor manufacturing process. According to the above-described configuration, the size of the system on chip can be reduced to be suitable for the standard of a specific form factor (e.g., M.2). In particular, in the case of on-device, if the size of the system on chip is large, it can be an obstacle to commercialization.

Referring to FIG. 17, the package 5000 may include up to four memories MEM. Each memory MEM may be a low-power double data rate 5 (LPDDR5) memory. If the number of bus channels between the system on chip and the memories MEM is increased to correspond to the number of memories MEM, the memory bandwidth of the first bus 310 of the embodiments of the first example of the present disclosure may be increased. For example, if the system on chip and four memories MEM of the package 5000 are placed closest to each other, the size of the package 5000 may be 21 mm×31 mm. In this embodiment, the package 5000 may be mounted on a device 10000 having a width of 22 mm and a depth of 42 mm.

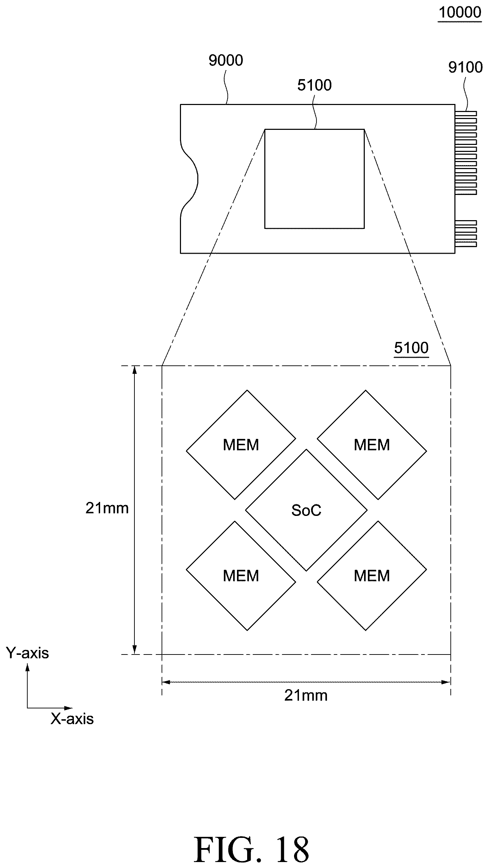

However, the package 5000 of FIG. 17 cannot be mounted on a circuit board 9000 having a depth of 30 mm. Therefore, FIG. 18 describes an embodiment in which a package 5000 including a system on chip and four memories MEM can be mounted on a circuit board 9000 having a depth of 30 mm.

The package 5000 may include at least one semiconductor chip to which a fan-in semiconductor package, a fan-out semiconductor package, a package-on-package (PoP), and/or a 2.5D package method is applied. In addition, technical features of different examples of the present disclosure may be combined and modified.

FIG. 18 illustrates a device 10000 according to a second embodiment of a second example of the present disclosure.

The device 10000 illustrated in FIG. 18 may be a top plan view of the device 10000, but is not limited thereto. The size of each hardware element described with reference to FIG. 18 may mean width (X-axis length) and depth (height, Y-axis length).

The device 10000 according to the second embodiment of the second example of the present disclosure includes a circuit board 9000 and a package 5100. The circuit board 9000 may further include a slot 9100 (e.g., M.2 slot). The device 10000 according to the second embodiment of the second example of the present disclosure may correspond to the device 10000 according to the embodiments of the first example of the present disclosure. The circuit board 9000 according to the second embodiment of the second example of the present disclosure may correspond to the circuit board BD according to the embodiments of the first example of the present disclosure. The package 5100 according to the second embodiment of the second example of the present disclosure may correspond to the package (not shown) in the embodiments of the first example of the present disclosure. Overlapping content with that described above with reference to FIGS. 3 to 17 may be omitted. In addition, in describing the second embodiment of the second example of the present disclosure, redundant descriptions with the first embodiment of the second example may be omitted for convenience of explanation.

Referring to FIG. 18, the device 10000 is an example implemented in an M.2 form factor. In the second embodiment of the second example of the present disclosure, the width of the circuit board 9000 may be 22 mm and the depth may be 30 mm, but is not limited thereto.

The package 5100 mounted on the device 10000 may include a system on chip and at least one memory. The system on chip according to the second embodiment of the second example of the present disclosure may correspond to the system on chip 1000 according to the embodiments of the first example of the present disclosure. The memory of FIG. 18 may correspond to the memory or main memory M_MEM described above with reference to FIGS. 10 to 17.

The width of the circuit board 9000 illustrated in FIG. 18 may be 22 mm, and the depth may be 30 mm. To mount the package 5100 within such a restrictive size, the arrangement of the system on chip and the plurality of memories MEM within the package 5100 must be improved.

The physical size of the system on chip may be 4.50 mm×4.85 mm, and the physical size of each memory may be 6.43 mm×5.30 mm.

According to an embodiment, the process node of the semiconductor manufacturing process of the memory may be lower than the process node of the semiconductor manufacturing process of the system on chip. For example, the memory may be manufactured by a 14nm semiconductor manufacturing process, and the process of the system on chip may be manufactured by a 7nm semiconductor manufacturing process. For example, the memory may be manufactured by a 5nm semiconductor manufacturing process, and the system on chip may be manufactured by a 7nm semiconductor manufacturing process. For example, the memory may be manufactured by a 2nm semiconductor manufacturing process, and the system on chip may be manufactured by a 5nm semiconductor manufacturing process. According to the above-described configuration, the size of the system on chip can be reduced to be suitable for the standard of a specific form factor (e.g., M.2).

Referring to FIG. 18, the system on chip and the plurality of memories MEM may be arranged in a diagonal direction of the package 5100. In this case, the size of the package 5100 can be reduced to 21 mm ×21 mm. To elaborate, the configuration of the plurality of semiconductor chips disposed inside the package 5100 may be referred to as a "rotated multi-chip substrate layout." The package 5100 of the rotated multi-chip substrate layout has the effect of reducing the size of the package 5100 due to the arrangement of each semiconductor chip rotated at a specific angle. That is, the X-axis of the system on chip and the X-axis of the substrate 5100 may not be parallel. The Y-axis of the system on chip and the Y-axis of the substrate 5100 may not be parallel. The X-axis of the memory and the X-axis of the substrate 5100 may not be parallel. The Y-axis of the memory and the Y-axis of the substrate 5100 may not be parallel.

Meanwhile, the number of memories MEM in the package 5100 may be changed considering the processing capability of the system on chip (e.g., TOPS), the size of a specific form factor, and a size that can be placed within a package smaller than the specific form factor.

The package 5100 may be configured to include at least one semiconductor chip to which a fan-in semiconductor package, a fan-out semiconductor package, a package-on-package (PoP), and/or a 2.5D package method is applied. In addition, technical features of different examples of the present disclosure may be combined and modified.

That is, the package 5100 may include a semiconductor package substrate, a system on chip rotated at a first angle with respect to one side of the semiconductor package substrate on a planar basis and disposed on the semiconductor package substrate, and one or more memories MEM rotated at a second angle with respect to one side of the semiconductor package substrate on a planar basis and disposed on the semiconductor package substrate adjacent to the system on chip. Here, the first angle and the second angle may be determined such that the size of the package 5100 is smaller than the size of a specific form factor.

That is, according to the device 10000 of the second embodiment of the second example of the present disclosure, a "rotated multi-chip substrate layout" for mounting a system on chip and a plurality of memories MEM on a very limited form factor such as M.2 2230 is exemplified. To efficiently implement sophisticated and computationally intensive artificial intelligence (AI) operations in such small devices with extremely limited physical space, an optimized hardware foundation is essential.

Various embodiments of the present disclosure can provide hardware support suitable for compact, efficient, and high-performance artificial intelligence (AI) acceleration. The main features of such embodiments are summarized as follows.

First, an NPU core, referred to as the value IN core, may be provided that is highly optimized for power, performance, and area (PPA). This NPU core may be structured to include a processing core specialized in performing integer operations, along with a special function unit (SFU) capable of efficiently executing floating-point operations. The special function unit may employ area-efficient function approximation techniques, such as Piecewise Affine Function (PAF) methods, to support complex activation functions. This architectural configuration enables the NPU to perform both high-speed, low-power integer computations and accurate floating-point-based operations within a compact silicon footprint, thereby enhancing overall PPA characteristics.

Second, advanced semiconductor packaging technology may be applied to integrate the NPU die and essential memory components (e.g., LPDDR series) into a single high-density package to conform to standard compact form factors, such as M.2 cards. As exemplified in FIG. 18, the overall module size can be minimized through space optimization layouts such as rotating and arranging the system on chip and memory chips within the package. That is, the layout of the package may be spatially optimized by selectively rotating and arranging the NPU and memory dies within the enclosure, which allows the total module area to be minimized to address challenges due to space-constrained platforms such as mobile devices or embedded systems.

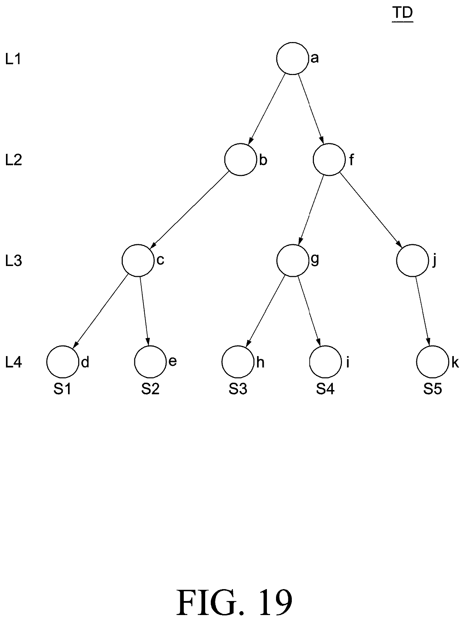

FIG. 19 illustrates a tree for explaining speculative decoding according to a third example of the present disclosure.

Hereinafter, a speculative decoding method according to a third example of the present disclosure may be performed in the device 10000 described with reference to FIGS. 3 to 18. Accordingly, in describing the third example of the present disclosure, redundant descriptions with the first example and the second example are omitted for convenience of explanation.

A transformer-based generative artificial intelligence model can receive a query and generate a response. For example, a language model can receive a query in text form, obtain input tokens, and generate output tokens from the input tokens. Subsequently, the query and the generated output tokens can be input back into the language model to generate subsequent next output tokens. The token generation operation can be repeated multiple times until a response to the query is completed. A token can correspond to a word or part of a word. A response can include output tokens. A final response generated by a language model for input query data can include a series of output tokens generated by re-inputting output tokens generated as part of the response generated by the language model into the language model.

The larger the number of parameters in a language model, the higher the cost for generating a response from the language model. Therefore, using a language model with a large number of parameters increases the computational cost required to generate a response. Reducing the number of parameters in a language model can lower the computational cost and improve response speed, but it may degrade the accuracy of the response. That is, the number of parameters and accuracy (or quality) of a language model and the time required for a processor to perform operations of the language model are in a trade-off relationship. In particular, to generate a response of a certain level of quality or higher, the number of parameters in the language model must be considerably large.

Meanwhile, processing a language model on the device itself to provide a commercial service presents difficulties when considering the hardware resource limitations of the device (e.g., energy consumption, battery capacity, memory capacity, AI processing capability, etc.).

Accordingly, a third example of the present disclosure describes speculative decoding (or speculation decoding) for driving heterogeneous language models using the limited hardware resources of the device 10000.

Speculative decoding is a technique in which a plurality of language models each perform predictions, and then their results are combined to generate the most reliable answer. For example, a first language model selects candidates that can come as the next token and calculates a probability indicating the suitability for each candidate token. Subsequently, a second language model can consider the context and finally select one of the candidate tokens proposed by the first language model. Since the second language model must select one of the candidate tokens by reflecting a broader context, it may be a model with a larger number of parameters and better performance than the first language model.

The device 10000 according to examples of the present disclosure can drive heterogeneous language models based on at least one system on chip 1000. That is, in an on-device method, to accelerate the token generation speed of a language model, speculative decoding can utilize heterogeneous language models. At least one device 10000 can utilize a speculative decoding technique in which heterogeneous language models cooperate with each other to generate a response to an input query.

The heterogeneous language model according to the third example of the present disclosure may include a first language model and a second language model. Here, the number of parameters of the first language model is smaller than the number of parameters of the second language model. That is, the number of parameters of the heterogeneous language models is different from each other. A language model with a relatively small number of parameters and a language model with a large number of parameters can be defined as an upper model and a lower model, respectively. That is, the first language model is defined as a lower model of the second language model, and the second language model can be defined as an upper model of the first language model. For example, the number of parameters of the upper model may be 7 billion, and the number of parameters of the lower model may be 1 billion.

According to the third example of the present disclosure, the lower model can generate probabilities used for sampling the additional tokens, based on speculatively generated additional tokens and a currently allowed token set. According to the third example of the present disclosure, the upper model generates output tokens using candidate tokens generated by the lower model. The upper model can accept or reject candidate tokens by sampling additional tokens speculatively generated by the lower model. Here, the acceptance or rejection by the upper model can be determined by comparing the probability generated by the upper model corresponding to each token with the probability generated by the lower model corresponding to each token. Candidate tokens accepted by the upper model are output tokens included in the response.

According to the speculative decoding according to the third example of the present disclosure, the lower model can generate one or more candidate token sets to generate a response corresponding to a query input to the lower model. A candidate token set (e.g., set 1, set 2, or set 3) is a set including one or more candidate tokens, as in Table 1 below.

**Table 1**

| Candidate Token | Candidate Token Set |
|---|---|
| apple, is, red, banana, yellow, car, fast | set 1: [apple, is, red] |
| | set 2: [banana, is, yellow] |
| | set 3: [car, is, fast] |

The upper model can accept or reject the corresponding candidate token set by sampling for each of one or more candidate token sets. Here, if the device 10000 samples for each candidate token set, the device 10000 can generate more tokens faster than when sampling for each token. In addition, the probability distributions of the lower model and the upper model can also be maintained similarly. Here, the token generation speed may be referred to as tokens per second (TPS).

The speculative decoding according to the third example of the present disclosure can operate in an auto-regressive token generation manner. In the auto-regressive token generation manner, a series of tokens generated by the lower model are input back into the lower model to generate tokens. The lower model generates one token for each auto-regression. Therefore, if the lower model performs N inferences, N series of tokens are generated. The lower model generates a conditional probability distribution related to the N series of tokens. Subsequently, the upper model processes the N series of tokens generated by the lower model and the conditional probability distribution related to the N series of tokens to generate a probability distribution of the upper model. Therefore, the upper model can accept or reject the tokens generated by the lower model by comparing the probability distribution generated by the upper model with the conditional probability distribution generated by the lower model. The upper model can accept tokens based on a threshold value. When the similarity between the probability distribution value of the upper model and the conditional probability distribution value of the lower model is equal to or greater than the threshold value, the corresponding token may be accepted, and when the similarity is less than the threshold value, the corresponding token may be rejected.

The upper model can accept or reject a series of tokens generated by the lower model based on a threshold value. If a specific token among the series of tokens is rejected, the tokens up to before the rejected token become the final output tokens. For example, the lower model of speculative decoding can generate tokens in set units. In this case, the upper model can accept or reject each of a plurality of token sets generated by the lower model. If the lower model generates candidate tokens in set units, the acceptance or rejection judgment in the upper model can also be performed in set units, which can improve the token generation speed of the speculative decoding of the device 10000. In addition, as the number of token sets generated by the lower model increases, the probability that the upper model will accept a token set may increase.

The lower model generates one or more candidate token sets in response to an input query. Each candidate token set includes a series of tokens, and the lower model can select a series of tokens with high probability in the probability distribution as a candidate token set. Each candidate token set can be selected in various ways. For example, each candidate token set can be generated by selecting tokens with the highest probability within the probability distribution, but the present disclosure is not limited thereto. For the upper model to accept one candidate token set, the probabilities of the tokens included in each candidate token set can be summed. Therefore, the upper model can accept or reject the entire candidate token set based on the summed probability of the candidate token set, not the probability of each token. To elaborate, when using the probability of each token, it may be difficult to match the probabilities of each token generated by the lower model and the upper model, so the rejection probability of the upper model increases. When using the summed probability of a token set, the matching of the summed probabilities of the token sets generated by the lower model and the upper model may be more similar, so the acceptance probability of the upper model increases.

The lower model may generate one or more candidate token sets in response to an input query. The one or more candidate token sets may be generated statically or dynamically. For example, the sentence length (sequence length) of each candidate token set may be preset. The lower model may generate one or more candidate token sets and generate tree data by combining each candidate token set. The tree data includes a node at each branch point.

FIG. 19 illustrates tree data (TD) including one or more token sets generated by a lower model, according to an embodiment. Referring to FIG. 19, a first token set S1, a second token set S2, a third token set S3, a fourth token set S4, and a fifth token set S5 are displayed below leaf nodes of the tree.

The first candidate token set S1 may include four tokens (a, b, c, d). The second candidate token set S2 may include four tokens (a, b, c, e). The third candidate token set S3 may include four tokens (a, f, g, h). The fourth candidate token set S4 may include four tokens (a, f, g, i). The fifth candidate token set S5 may include four tokens (a, f, j, k). Each of the candidate token sets may be selected or rejected by the upper model.

The token length of each candidate token set may be set. For example, the sentence length of each token set may be set to four. However, the present disclosure is not limited thereto, and the length of the token set may be dynamically changed.

Each token may have an order level. The order level may correspond to the sentence length. Specifically, the first order level L1 corresponds to token (a). The second order level L2 corresponds to tokens (b, f). The third order level L3 corresponds to tokens (c, g, j). The fourth order level L4 corresponds to tokens (d, e, h, i, k). In an example where the sentence length is set to 4, the maximum order level is set to 4. The order of tokens in each token set may be arranged according to the corresponding order level. Specifically, among the tokens (a, b, c, d) of the first token set S1, the first token (a) corresponds to the first order level L1. Among the tokens (a, b, c, d) of the first token set S1, the second token (b) corresponds to the second order level L2. Among the tokens (a, b, c, d) of the first token set S1, the third token (c) corresponds to the third order level L3. Among the tokens (a, b, c, d) of the first token set S1, the fourth token (d) corresponds to the fourth order level L4.

Each token is defined as a node of the tree data. For example, token (g) may be a branch node of the third token set S3 and the fourth token set S4 at the third order level L3. Each node includes branch information.

That is, the tree data generated by the lower model may include all or at least some of one or more token sets (S1 to S5), order levels (L1 to L4), node information of each token (a, b, c, d, e, f, g, h, i, j, k), and selection probability of each candidate token set (e.g., summed probability of the token set). The upper model may accept or reject at least one token of the tree data.

Speculative decoding may also be implemented as hybrid speculative decoding. In hybrid speculative decoding, previously speculatively generated tokens are verified by the upper model, and a threshold value α can be set to determine whether a token is approved or rejected by comparing the probability distributions of the lower model and the upper model.

Speculative decoding may also be implemented as group speculative decoding. In group speculative decoding, multiple tokens are generated in group units by the lower model and are configured to be verified by the upper model, which can provide a high level of efficiency.

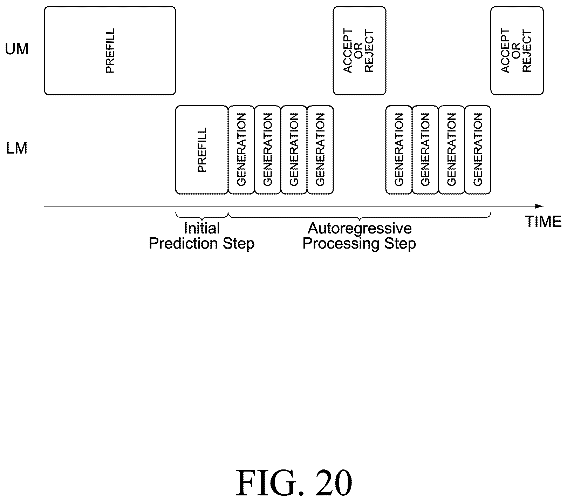

FIG. 20 schematically illustrates a speculative decoding operation according to a third example of the present disclosure.

Referring to FIG. 20, a lower model (LM) and an upper model (UM) are shown. The device 10000 according to the third example of the present disclosure may be configured to sequentially process the lower model and the upper model for speculative decoding.

A transformer-based artificial intelligence model may perform predetermined operation steps (e.g., a prefill step and a generation step) to generate a response to an input query. A transformer is an artificial intelligence model based on an attention mechanism. The transformer utilizes a large number of matrix multiplication operations. The transformer can obtain an output value, an attention score (Q, K, V), using input values and parameters such as query Q, key K, and value V. The transformer can process various inference operations based on the output value (i.e., attention (Q, K, V)). Transformers are actively utilized in generative language models.

A tensor refers to a multi-dimensional matrix parameter processed in an artificial intelligence model (e.g., an artificial neural network). A tensor may refer to various parameters of a neural network model, such as weights, input parameters, output parameters, and attention parameters.

The prefill step is an initial step of processing and interpreting input (e.g., a prompt input by a user). The prefill step may include a tokenization step, a context embedding step, a processing step through layers, and a preparation step for decoding. The prefill step may be processed by one or more neural processing units. In the tokenization step, input text is converted into tokens (sub-words, words, or characters), which are numerical representations used in the artificial intelligence model. In the context embedding step, tokens may be mapped to dense embedding vectors that encode semantic and syntactic information. In the prefill step, embeddings are processed through multiple layers of the neural network model (e.g., transformer blocks) to generate contextual representations of the input tokens. In the preparation step for decoding, the artificial intelligence model calculates the probability for each entire token that could be the next output token based on the input context, but does not yet finally generate the next token. Instead, it can set the context for the generation step.

In the generation step, one or more neural processing units may sequentially generate one or more output tokens based on the context provided by the artificial intelligence model in the prefill step and previously generated output tokens. The generation step includes an initial prediction step, an auto-regressive processing step, and stopping conditions. The generation step may be processed by one or more neural processing units. In the initial prediction step, the first token is generated by sampling from the probability distribution calculated in the prefill step. In the autoregressive processing step, each subsequent token is generated by integrating previous tokens (including generated tokens) into the context of the neural network model. Stopping Conditions: The generation process continues until a stopping condition is met, such as reaching a maximum token limit, encountering a special end-of-sequence (EOS) token, or achieving a specific semantic goal. The series of tokens generated in the generation step may correspond to the tree data of FIG. 19. The tree data may include at least one token set.

Referring again to FIG. 20, a third example illustrating the steps of speculative decoding according to the flow of time is shown. Speculative decoding according to examples of the present disclosure may be processed sequentially or in parallel by one or more neural processing units. In speculative decoding, an upper model (UM) and a lower model (LM) cooperate with each other to generate a response to an input query. The longer the horizontal length of a block representing each step, the more processing time is required.

Specifically, in speculative decoding, the upper model first performs a prefill operation. Subsequently, the lower model performs a prefill operation. Subsequently, the lower model continuously performs generation steps, and each token is generated in each generation step. Next, the upper model accepts or rejects the tokens generated by the lower model. The upper model may accept or reject some or all of the tokens generated by the lower model. The lower model receives the accepted tokens again as an input query, and the lower model continuously performs generation steps so that each token corresponding to each generation step is generated. Next, the upper model accepts or rejects the tokens generated by the lower model. These steps are repeated until stopping conditions are met.

The number of parameters of the upper model is larger than the number of parameters of the lower model, so its processing time is longer. Therefore, the processing time of the prefill step of the upper model is longer than the processing time of the prefill step of the lower model. The processing time of the acceptance or rejection step of the upper model is longer than the processing time of the generation step of the lower model. Therefore, in generating tokens for a response, the token generation speed of the system can be improved by configuring the lower model to generate as many tokens as possible and the upper model to perform only selective judgment.

The number of parameters for each of the lower model and the upper model may be determined considering the hardware resource limitations of the device 10000 (e.g., processing performance of the system on chip and bandwidth of the memory). The upper model may utilize a language model whose number of parameters is determined considering the hardware resource limitations of the device being processed.

In some examples, the lower model may be a pruned model of the parameters of the upper model. In this case, the parameters of the pruned neural network model can be lightweighted, and the required memory bandwidth may be smaller than that of the upper model.

According to the third example of the present disclosure, the device 10000 may be configured to process a prefill operation using the upper model to process speculative decoding. Subsequently, the device 10000 may process prefill operations and generation operations using the lower model to process speculative decoding.

The device 10000 according to the third example of the present disclosure may include at least one interface (not shown). The interface can input and/or output data. The device 10000 can receive an input query through the interface (not shown). The interface may be an electronic circuit capable of receiving input queries such as prompts, gestures, and voice. The input and/or output interface may include, for example, a mouse, keyboard, touchpad, touchscreen, microphone, wireless communication device, wired communication device, camera, speaker, and the like.

The system on chip of the device 10000 according to the third example of the present disclosure can perform inference operations on the upper model and the lower model. The upper model and the lower model can cooperate with each other to process speculative decoding. The value IN of the system on chip of the device 10000 according to the third example of the present disclosure can process the upper model and the lower model alternately. That is, the value IN operates to sequentially process the upper model and the lower model. In other words, the value IN operates to process the upper model and the lower model in a time-division manner. Therefore, the utilization rate of the arithmetic circuits of the value IN can be increased while sequentially processing the upper model and the lower model.

According to the disclosed embodiment, speculative decoding is performed by sequentially processing the upper model and the lower model in the value IN of the device 10000, and bottleneck phenomena due to speculative decoding operations can be reduced by having the parameters of the upper model and the lower model reside in the memory.

The memory of the device 10000 according to the third example of the present disclosure is configured to store all weight parameters of the upper model and the lower model when the device 10000 operates. By storing both the first weight parameters of the upper model and the second weight parameters of the lower model in the memory, the device 10000 can efficiently process speculative decoding. The memory of the device 10000 according to the third example of the present disclosure can provide parameters of the upper model to the value IN when the value IN infers the upper model, and can provide parameters of the lower model to the value IN when inferring the lower model.

For example, during a speculative decoding operation, the device 10000 may set an address map of the memory to allocate memory banks where the weight parameters of the upper model and the lower model will be stored. Therefore, during a speculative decoding operation, all weight parameters of the upper model and the lower model can reside in the memory. That is, the capacity of the memory of the device 10000 according to the third example of the present disclosure may be larger than the total capacity occupied by the first weight parameters of the upper model and the second weight parameters of the lower model. If the memory of the device 10000 does not have the memory capacity to store the upper model and the lower model, it may be difficult to quickly process speculative decoding in real time. That is, the capacity of the memory may be determined considering the sizes of the parameters of the upper model and the lower model to be driven in the device 10000. If all parameters of the upper model and the lower model are not stored in the memory, a conventional device must read the weight parameters of each model from an external storage device for speculative decoding. In this embodiment, the conventional device must command unnecessary memory read and memory write operations for speculative decoding, so the token generation speed may be lower than the token generation speed of the device 10000 according to the third example of the present disclosure.

The first memory (MEM1) of the device 200 according to the second embodiment of the first example of the present disclosure is configured to store weight parameters of the upper model and tokens generated by the upper model when the device 200 operates.

The second memory (MEM2) of the device 200 according to the second embodiment of the first example of the present disclosure is configured to store weight parameters of the lower model and tokens generated by the lower model when the device 200 operates. If all weight parameters of the upper model and the lower model are stored in the first memory and the second memory, the device 200 can efficiently process speculative decoding. To elaborate, the sizes of the weight parameters of the upper model and the lower model can be considerably large, and it may be difficult to store them all in a single memory chip. In this case, the device 200 can increase the memory capacity by configuring a plurality of memories.

The first memory of the device 200 according to the second embodiment of the first example of the present disclosure is configured to provide parameters of the upper model to the value IN when the value IN infers the upper model, and the second memory is configured to provide parameters of the lower model to the value IN when inferring the lower model.

For example, during a speculative decoding operation, the device 200 may set an address map for each of the first memory and the second memory to allocate memory banks where the weight parameters of the upper model and the lower model will be stored. Therefore, during a speculative decoding operation, all weight parameters of the upper model and the lower model can reside in both the first memory and the second memory.

Accordingly, the capacity of the plurality of memories MEM1, MEM2 of the device 200 according to the second embodiment of the first example of the present disclosure is configured to be larger than the total capacity occupied by the weight parameters of the upper model and the lower model. Therefore, the weight parameters of the upper model and the lower model can reside in the plurality of memories MEM1, MEM2. If the capacity of the plurality of memories MEM1, MEM2 of the device 200 is insufficient for the upper model and the lower model, it may be difficult to efficiently process speculative decoding.

If all parameters of the upper model and the lower model are not stored in the plurality of memories MEM1, MEM2, a conventional device must read the weight parameters of each model from an external storage device for speculative decoding. Accordingly, the conventional device commands unnecessary memory read and memory write operations for speculative decoding. Accordingly, the token generation speed of the conventional device is lower than the token generation speed of the device 200 according to the second embodiment of the first example of the present disclosure.

In summary, FIGS. 19 to 20 explain speculative decoding according to a third example of the present disclosure. And the speculative decoding method according to the third example of the present disclosure may be performed in the device 10000 described with reference to FIGS. 3 to 18. To support such efficient on-device speculative decoding, the device 10000 according to the present disclosure can lay the foundation through the following optimized hardware architecture and system configuration.

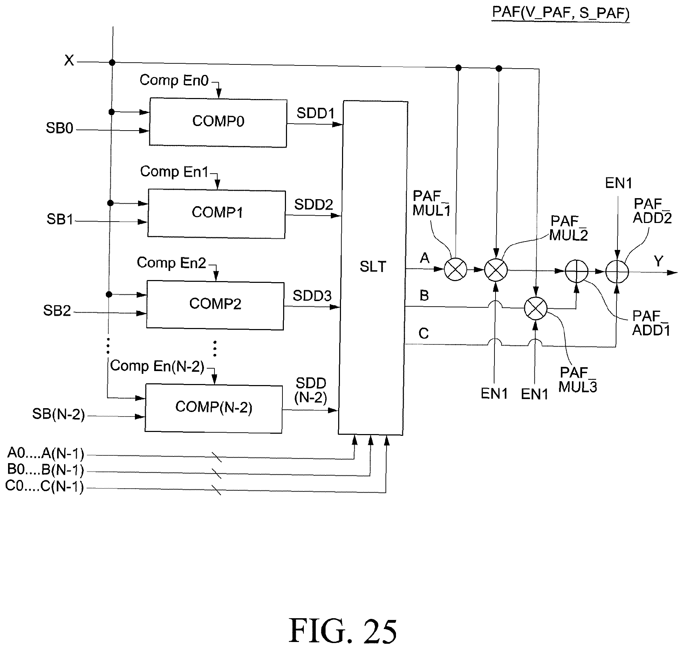

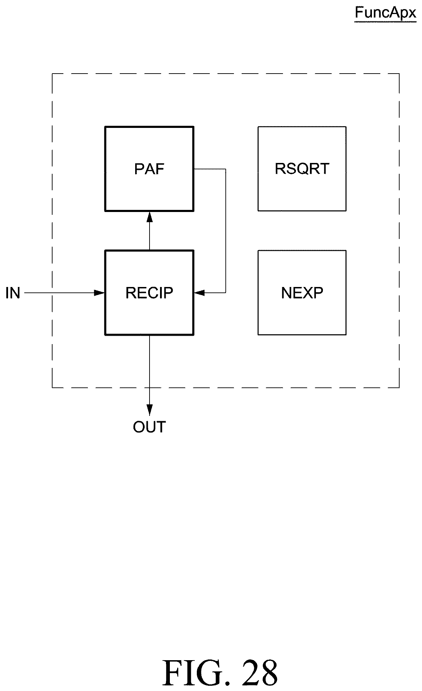

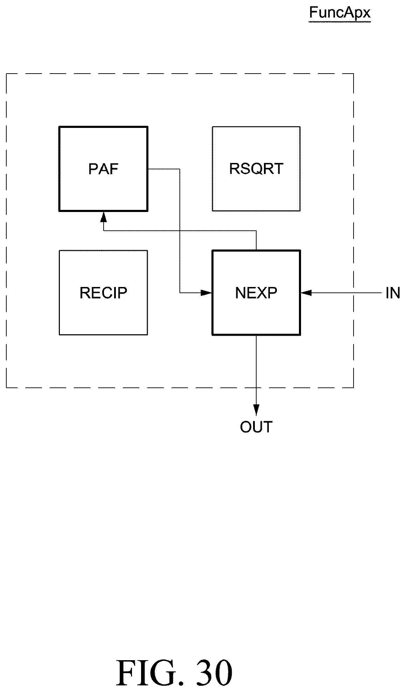

That is, the device 10000 according to the present disclosure includes a low-power NPU (NPU 100 in FIG. 3) core architecture, and the low-power NPU core architecture has a separate structure of an integer operation-centric processing core (P_CORE, see 120 in FIG. 3) and a special function unit (SFU 150 in FIG. 3) for floating-point operations and complex function processing. The special function unit 150 is configured to include, in particular, dedicated hardware accelerators for functions essential for softmax and attention operations, such as exponential and reciprocal functions supporting various activation functions. These include, for example, circuits (e.g., NEXP of FIG. 30, RECIP of FIG. 28) included in the vector function approximation unit (V_FuncApx 1537 in FIG. 5) or scalar function approximation unit (S_FuncApx 1545 in FIG. 6) within the SFU 150, and a programmable function approximation unit (e.g., PAF circuit of FIGS. 24 and 25).

Accordingly, the device 10000 includes a large-capacity on-device memory system, and the memory system includes a main memory (e.g., external DRAM, see 2000 in FIG. 9 or 2000-1 to 2000-N in FIG. 10) of sufficient capacity to store all weights of an LLM and even the weights of an auxiliary model that can be used for speculative decoding, and an on-chip shared memory (e.g., SRAM, see 400 in FIG. 11 or 400-1 to 400-N in FIG. 12) of sufficient capacity for high-speed access and reuse of frequently used weights and intermediate activation values. Accordingly, the memory system may have a hierarchical structure.

Therefore, speculative decoding based on NPU acceleration can be effectively implemented through such an optimized hardware configuration of the NPU core 100 and memory system. According to the above-described configuration, it is not a simple sum of individual technologies, but an optimized NPU core 100 is organically combined with a large-capacity memory system (e.g., 2000, 400) and a speculative decoding algorithm, providing a synergistic effect that enables the execution of large-scale language models, which previously required server-level computing power, in a completely on-device form with minimized energy consumption and without response delay. This enables the implementation of a practical server-independent AI agent.

In summary, a low-power on-device large language model (LLM) inference system according to the present disclosure can achieve the above effects by including the following elements: a processing core 120 that performs integer-based matrix operations on input data; a special function unit 150 that performs floating-point based special operations (including exponential, reciprocal, and programmable function approximation) on the result of the integer operations, wherein the special operations are optimized for attention and activation function processing of LLMs; a main memory 2000 that stores all weights of the LLM and at least one auxiliary model weight for speculative decoding; an on-chip shared memory 400 that temporarily stores data frequently accessed by the processing core 120 or the SFU 150 to increase data reusability; and a controller (e.g., controller 110 within NPU 100 or a system-level control unit including it) that controls the processing core 120, the SFU 150, the main memory 2000, and the on-chip shared memory 400 to perform speculative decoding operations including candidate token generation using the auxiliary model and candidate token verification using the LLM. Through such a system configuration, it is possible to complete the inference of the LLM with low power without the help of an external server.

Hereinafter, a fourth example of the present disclosure will be described. The fourth example of the present disclosure describes a circuit configuration and operation method of the vector function approximation unit (V_FuncApx) and the scalar function approximation unit (S_FuncApx) illustrated in FIG. 5 and FIG. 6.

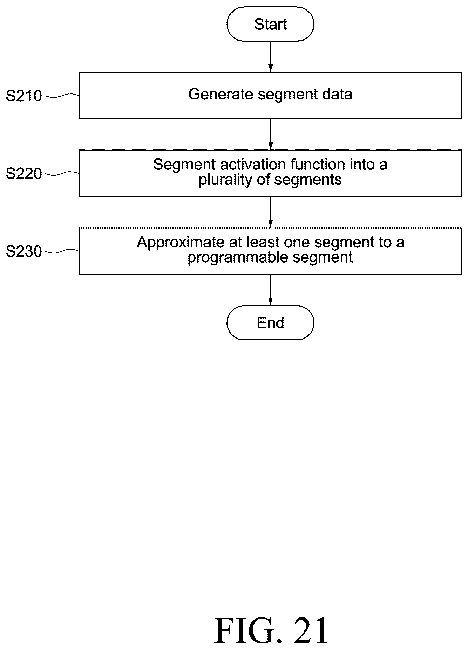

FIG. 21 illustrates an activation function programming method according to a first embodiment of a fourth example of the present disclosure.

Referring to FIG. 21, the operations of the V_FuncApx 1537 and the S_FuncApx 1545 will be described. The V_FuncApx 1537 and the S_FuncApx 1545 are configured to process a programmed activation function, which will be described later.

In a neural network model, the activation or inhibition of a signal is determined based on the signal strength propagated between layers, as governed by an activation function. The inference accuracy of the neural network model can vary depending on the implementation method of the activation function within the NPU 100 described in the fourth example of the present disclosure. In other words, both the inference accuracy and processing efficiency of the neural network model may be affected by the specific hardware characteristics of the activation function processing circuitry embedded in the NPU 100. The precision, granularity, and approximation method used to realize the activation function in hardware can all influence the final inference results and computational resource utilization.

To address this, an activation function programming method according to the first embodiment of the fourth example of the present disclosure comprises: (i) generating segment data used for partitioning an activation function (step S210); (ii) dividing (segmenting) the activation function into a plurality of segments based on the generated segment data (step S220); and (iii) approximating at least one of the segments among the plurality of segments as a programmable segment (step S230). Through this process, an activation function can be transformed into a format suitable for hardware-level approximation while retaining sufficient fidelity for neural network inference tasks.

The activation function programming method may be carried out by an activation function conversion program. The activation function conversion program may be implemented in the form of a computer program, software, firmware, application, or executable code that is stored in a non-transitory computer-readable recording medium. This program (not shown) may be designed to generate a transformed or programmed version of an activation function using programmable parameters that define the segmented and approximated function shape. Furthermore, the activation function conversion program may be configured as part of a neural network model compiler (not shown), thereby enabling integration into the compilation workflow used to generate executable models for the NPU 100.

In the step S210, segment data is generated. Segment data, which is data generated to segment a specific activation function into a plurality of segments, will be described later.

In the step S210, the activation function is segmented into a plurality of segments using the generated segment data. In the present disclosure, the term "segment" means a part of an activation function divided into a plurality of sections and is distinguished from "candidate segment" or "programmable segment," which are terms related to the approximation of an activation function.

The step S210 may include determining both the number and the respective widths of a plurality of segments based on the segment data. In this step, the activation function targeted for conversion is partitioned into multiple segments, and the segment data may be used to define the total number of segments as well as the width of each individual segment. At least one of the segments among the plurality may have a width that is either equal to or different from the widths of the other segments. In other words, the segmentation may be uniform or non-uniform, depending on the characteristics of the activation function and the desired level of approximation fidelity or computational efficiency. The segmentation strategy can be adaptively configured to allocate finer granularity to regions of the activation function that exhibit high curvature or are otherwise sensitive to approximation error.

The respective segments of the plurality of segments may be represented by coordinate values defining the start and end points along the X-axis of the activation function domain. That is, each segment may be defined by a pair of X-axis coordinates indicating the boundaries of the segment interval. Once the number of segments and the width of each segment are determined, the corresponding segment boundary coordinates may be automatically derived.

In the step S230, at least one segment among the plurality of segments is approximated into a programmable segment. The programmable segment may be programmed in accordance with the circuit architecture of the V_FuncApx 1537 and the S_FuncApx 1545. Specifically, the activation function conversion program may be configured to generate a programmable representation of the activation function that is tailored to the hardware capabilities of the V_FuncApx 1537 and the S_FuncApx 1545 within the NPU 100. A programmable parameter may be generated during the step S230, and such a parameter may be formatted to align with the functional specifications and data format requirements of the respective circuit implementations. For instance, the V_FuncApx 1537 and the S_FuncApx 1545 may include hardware components that are configured to execute each programmable segment based on a specified slope and offset. The activation function conversion program may therefore be provided with configuration data or hardware description information relating to the functional design of the V_FuncApx 1537 and the S_FuncApx 1545, enabling generation of compatible programmable segments.

In this context, the activation function conversion program (not shown) may approximate a programmable segment using a function of a defined type, such as a linear, quadratic, or higher-order polynomial function, depending on the desired approximation accuracy and hardware constraints. For example, under a specified decision criterion, a given segment may be approximated as a linear function. In such cases, the activation function conversion program may generate a programmable segment that is expressed in the form of a linear equation, such as "(slope a) × (input value x) + (offset b)." The specific slope and offset used in this equation may serve as the programmable parameters that define the segment's behavior. Therefore, for a segment that is determined to be approximated using a linear function, the step S230 may include deriving and assigning values for a particular slope and offset to characterize the linear approximation of the selected segment.

The steps S220 and S230 may be substantially performed as a single step. This is because the step of segmenting a segment and the step of generating programmable parameters of the corresponding programmable segment can be performed simultaneously. To elaborate, the steps S220 and S230 may be modified to be a step of segmenting an activation function into a plurality of segments using generated segment data, and approximating at least one segment among the plurality of segments into a programmable segment.

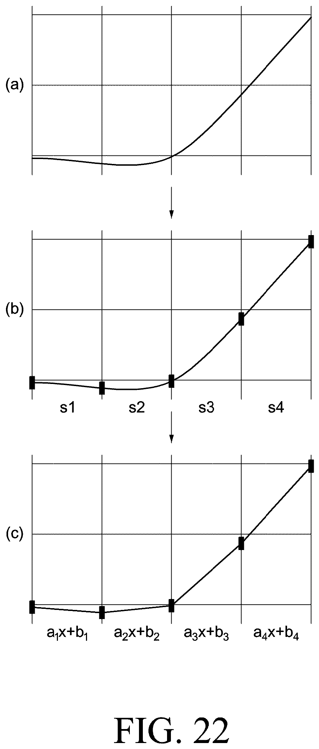

FIG. 22 includes three graphs (a), (b), and (c) to illustrate a process in which an activation function is approximated by an activation function programming method according to the first embodiment of the fourth example of the present disclosure.

The activation function shown in (a) of FIG. 22 is segmented into a plurality of segments (s1, s2, s3, s4) using segment data as shown in (b) of FIG. 22. The plurality of segments (s1, s2, s3, s4) are approximated into programmable segments (a₁x+b₁, a₂x+b₂, a₃x+b₃, a₄x+b₄) as shown in (c) of FIG. 22. Here, an example is described in which the activation function conversion program (not shown) generates programmable parameters such that all programmable segments correspond to linear functions.

Each programmable segment includes corresponding programmable parameters. In (c) of FIG. 22, all of the plurality of segments are approximated by programmable segments in the form of linear functions. However, in various examples, some segments among the plurality of segments may be approximated by programmable segments of other forms. For example, the activation function conversion program (not shown) can program each programmable segment in the form of a linear function, a quadratic function, a cubic function, a logarithmic function, or the like.

For example, only segments (s1, s3, s4) may be approximated as programmable segments, and segment S2 may be approximated using various methods available in the device where the activation function is to be processed. Specifically, if a pre-determined and stored look-up table, non-linear approximation formula, etc., are available in hardware in the section of segment S2, segment S2 may be approximated using such a pre-determined and stored look-up table, non-linear approximation formula, etc.

Alternatively, the activation function conversion program (not shown) may be configured to independently program each of the segments (s1, s2, s3, s4). At this time, the activation function conversion program (not shown) is provided with hardware configuration information of the V_FuncApx 1537 and the S_FuncApx 1545. The activation function conversion program (not shown) may be configured to independently determine an approximation method for each of the segments (s1, s2, s3, s4) based on the hardware configuration information of the V_FuncApx 1537 and the S_FuncApx 1545.

For example, each of the V_FuncApx 1537 and the S_FuncApx 1545 may be designed to include at least one of a linear function approximation circuit, a quadratic function approximation circuit, a reciprocal function approximation circuit, a root mean square function approximation circuit, and a negative exponential function approximation circuit. In this case, the activation function conversion program (not shown) can selectively program at least one of the segments (s1, s2, s3, s4) in the form of a linear function, a quadratic function, a reciprocal function, a root mean square function, and a negative exponential function.

For example, if each of the V_FuncApx 1537 and the S_FuncApx 1545 is configured to include a circuit configured to support at least one specific function operation, the activation function conversion program (not shown) can program each of the segments (s1, s2, s3, s4) in the form of a corresponding specific function.

For example, the V_FuncApx 1537 and the S_FuncApx 1545 may be configured to include at least one of a hardware-designed linear function operation circuit, quadratic function operation circuit, reciprocal function operation circuit, root mean square function operation circuit, and negative exponential function operation circuit, or similar function operation circuits.

For example, the activation function conversion program (not shown) can program the same activation function in different ways.

For example, the activation function conversion program (not shown) can program a specific activation function only as a linear function.

For example, the activation function conversion program (not shown) can program a specific activation function only as a quadratic function.

For example, the activation function conversion program (not shown) can program a specific activation function only as a reciprocal function.

For example, the activation function conversion program (not shown) can program a specific activation function only as a root mean square function.

For example, the activation function conversion program (not shown) can program a specific activation function only as a negative exponential function.

For example, the activation function conversion program (not shown) can program each of a plurality of segments of a specific activation function as a corresponding approximation function.

For example, the activation function conversion program (not shown) can program a plurality of segments of a specific activation function as a set of approximation functions of different formulas.

For example, a programmed activation function processed in the V_FuncApx 1537 and the S_FuncApx 1545 according to the first embodiment of the fourth example of the present disclosure may include at least one of Swish, Mish, Sigmoid, Hyperbolic Tangent (Tanh), Scaled Exponential Linear Unit (SELU), Gaussian Error Linear Unit (GELU), Softplus, Rectified Linear Unit (ReLU), Leaky ReLU, Maxout, Exponential Linear Unit (ELU), Hard Sigmoid, Hard Tanh, Bent Identity, ArcTan, Softsign, Sinusoidal Activation, S-shaped Rectified Linear Unit (SReLU), Parametric Rectified Linear Unit (PReLU), Logistic Activation, Radial Basis Function (RBF), Binary Step, Reciprocal, root mean square, and negative exponential. Each programmed activation function can be converted into programmable parameters and provided to the neural processing unit 100.

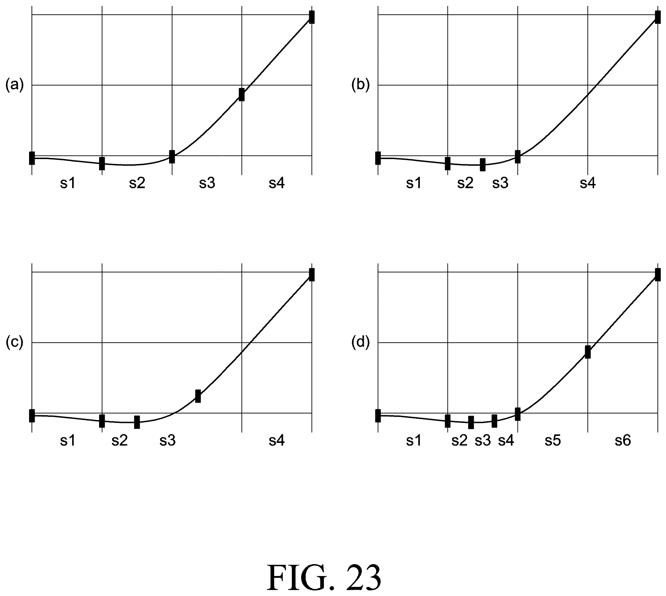

FIG. 23 includes four graphs (a), (b), (c), and(d) to illustrate various cases of segmenting an activation function into a plurality of segments by an activation function programming method according to the first embodiment of the fourth example of the present disclosure.

Referring to (a) of FIG. 23, a specific activation function may be segmented into 4 segments having a uniform width.

Referring to (b) of FIG. 23, a specific activation function may be segmented into 4 segments having different widths.

Referring to (c) of FIG. 23, a specific activation function may be segmented into 4 segments having different widths.

Referring to (d) of FIG. 23, a specific activation function may be segmented into 6 segments having different widths.

The number of the plurality of segments and the width of each of the plurality of segments may be determined using segment data.

The activation function conversion program (not shown) may be configured to analyze the nonlinearity of the activation function and segment the plurality of segments with different widths. However, the present disclosure is not limited thereto.

The activation function conversion program (not shown) may be configured to analyze the nonlinearity of the activation function and segment each of the plurality of segments with an optimal width. However, the present disclosure is not limited thereto.

In the present disclosure, an activation function may be implemented in various forms including characteristic sections. When segmenting an activation function into a plurality of segments, the number and width of the plurality of segments may be variously determined according to the various forms that the activation function has.

For example, various activation functions such as Swish function, Mish function, sigmoid function, hyperbolic tangent (tanh) function, SELU function, Gaussian Error Linear Unit (GELU) function, SOFTPLUS function, ReLU function, Leaky ReLU function, Maxout function, ELU function, etc., have various forms divided into a plurality of characteristic sections including (substantially) linear sections and/or non-linear sections. Accordingly, when approximating a non-linear activation function to be processable in hardware, if segmentation is performed considering these characteristic sections, i.e., if the number and width of segments are determined considering (substantially) linear sections, non-linear sections, etc., the activation function can be approximated more efficiently corresponding to the characteristics of each activation function.

FIG. 24 illustrates a function approximation circuit (PAF) of a neural processing unit configured to process a programmed activation function according to a second embodiment of the fourth example of the present disclosure.

The PAF according to the second embodiment of the fourth example of the present disclosure illustrated in FIG. 24 may correspond to the V_PAF of the V_FuncApx 1537 of FIG. 5 and the S_PAF of the S_FuncApx 1545 of FIG. 6. Hereinafter, for convenience of explanation, the V_PAF and the S_PAF will be collectively referred to as the PAF to describe the second embodiment of the fourth example of the present disclosure.

Specifically, the PAF according to the second embodiment of the fourth example of the present disclosure illustrated in FIG. 24 is an example of a circuit configured to process an activation function programmed as a linear function.

A PAF configured to process an activation function programmed as a linear function may be configured to include a plurality of comparators COMPO to COMP(N-2), a selector SLT, a multiplier PAF_MUL, and an adder PAF_ADD. However, the present disclosure is not limited thereto, and it is also possible to distinguish the regions of each segment by configuring the circuit in various ways. It is also possible for the function approximation circuit PAF to be modified to further include additional circuit configurations to process activation functions by programming methods other than linear functions.

The coordinates of the start point and end point of the sections of the plurality of segments are defined as segment boundary values SB. That is, by the segment boundary values SB0 to SB(N-2), the sections of the plurality of segments can be respectively determined. For example, to define the sections of N segments, N-1 segment boundary values SB0 to SB(N-2) may be required.

Each of the plurality of comparators COMPO to COMP(N-2) compares an input value X with each of the plurality of segment boundary values SB0 to SB(N-2). Accordingly, through the comparison value output from each of the plurality of comparators COMPO to COMP(N-2), the section of the segment to which the input value X belongs among the sections of the plurality of segments can be determined. The output value output from each of the plurality of comparators COMPO to COMP(N-2) described above may be referred to as section determination data SDD. The selector SLT outputs a slope A for the programmable segment corresponding to the section of the segment to which the input value X belongs among a plurality of slopes A0 to A(N-1) for the plurality of programmable segments, according to the section determination data SDDO to SDD(N-2). The selector SLT outputs an offset B for the programmable segment corresponding to the section of the segment to which the input value X belongs among a plurality of offsets B0 to B(N-1) for the plurality of programmable segments, according to the section determination data SDDO to SDD(N-2).

When a specific segment is determined based on the section determination data SDD, the slope A and offset B of the determined segment can be output from the selector SLT. That is, the programmable parameter includes the slope A and offset B for each of the programmable segments. The slope A is multiplied by the input value X in the multiplier PAF_MUL, and the offset B is added to the output value of the multiplier PAF_MUL in the adder PAF_ADD. That is, the output of the multiplier PAF_MUL can be expressed as A×X, and the output of the adder PAF_ADD can be expressed as A×X+B.

Meanwhile, the operation of each of the plurality of comparators COMPO to COMP(N-2) may be determined by each of a plurality of comparator enable signals Comp En1 to Comp En(N-2). For example, even when the activation function conversion program (not shown) programs the same activation function, a first programmed activation function may be programmed to have ten segments, and a second programmed activation function may be programmed to have five segments. Therefore, the function approximation circuit PAF can differently control the number of activated comparators in the function approximation circuit PAF according to each programmed activation function data, even for the same activation function. Therefore, the accuracy of artificial neural network operations and the power consumption of the neural processing unit 100 can also vary depending on the programming. That is, it is also possible to provide a high-performance activation function operation function or a low-power activation function operation function, even for the same activation function, according to user requirements.

Meanwhile, according to the maximum number of segment boundary values SB, the number of a plurality of comparators that receive them as input must also vary. For example, if the maximum number of segment boundary values SB is ten, at least ten comparators may need to be provided. That is, the minimum number of comparators may be the maximum number of segment boundary values.

Accordingly, each of the plurality of comparators COMPO to COMP(N-2) can determine whether to operate by each of a plurality of comparator enable signals Comp En1 to Comp En(N-2). Therefore, by controlling the operation of unnecessary comparators according to the number of a plurality of segments, the power consumption of the neural processing unit 100 can be reduced.

However, due to hardware limitations, the number of comparators may be limited. Accordingly, the number of a plurality of segments for segmenting an activation function may be limited according to the number of comparators in the function approximation circuit PAF.

Meanwhile, according to the first embodiment of the fourth example of the present disclosure, it is possible to distinguish between linear sections and non-linear sections of an activation function, and it is possible to minimize the number of segments by providing variable segment widths while minimizing error values. Therefore, there is an advantage in that the gate count of the hardware of the function approximation circuit PAF of the neural processing unit 100 can be minimized by minimizing the number of comparators.

In addition, the activation function programming method according to the first embodiment of the fourth example of the present disclosure may be configured to program a specific activation function based on information of the maximum number of supportable comparators.

Meanwhile, the selector SLT may be a multiplexer composed of a plurality of switching elements, but the configuration of the selector SLT may be variously changed. The programmed activation function operation unit of the function approximation circuit PAF may mean a circuit configured to receive an input value X, a slope A, and an offset B and operate an output value Y. The programmed activation function operation unit of the function approximation circuit PAF may be configured to include at least one multiplier PAF_MUL and an adder PAF_ADD. The programmed activation function operation unit of the function approximation circuit PAF may be a hard-wired circuit. In particular, if the function approximation circuit PAF is a hard-wired circuit, the function approximation circuit PAF can process approximation operations on a clock-by-clock basis by simply inputting programmable parameters without complex instructions.

FIG. 25 illustrates a function approximation circuit (PAF) of a neural processing unit configured to process a programmed activation function according to a third embodiment of the fourth example of the present disclosure.

The function approximation circuit PAF-1 according to the third embodiment of the fourth example of the present disclosure illustrated in FIG. 25 may correspond to the vector function approximation circuit V_PAF of the V_FuncApx 1537 of FIG. 5 and the scalar function approximation circuit S_PAF of the S_FuncApx 1545 of FIG. 6. Hereinafter, for convenience of explanation, the vector function approximation circuit V_PAF and the scalar function approximation circuit S_PAF will be collectively referred to as the function approximation circuit PAF-1 to describe the third embodiment of the fourth example of the present disclosure.

In describing the function approximation circuit PAF-1 of FIG. 25, redundant descriptions with the function approximation circuit PAF of FIG. 24 may be omitted for convenience of explanation.

Specifically, the function approximation circuit PAF-1 according to the third embodiment of the fourth example of the present disclosure illustrated in FIG. 25 is an example of a circuit configured to process an activation function programmed as a quadratic function.

Accordingly, the coefficients (A, B, C) for the above-described programmable segment may include a coefficient of a quadratic term A, a coefficient of a linear term B, and an offset C.

The function approximation circuit PAF-1 according to the third embodiment of the fourth example of the present disclosure may be configured to include a plurality of comparators COMPO to COMP(N-2), a selector SLT, a plurality of multipliers (PAF_MUL1, PAF_MUL2, PAF_MUL3), and a plurality of adders (PAF_ADD1, PAF_ADD2).

Each of the plurality of comparators COMPO to COMP(N-2) compares an input value X calculated by at least one processing core P_CORE with each of a plurality of segment boundary values SB0 to SB(N-2).

Accordingly, through the output value output from each of the plurality of comparators COMPO to COMP(N-2), the section of the segment to which the input value X belongs among the sections of the plurality of segments can be determined.

Meanwhile, the operation of each of the plurality of comparators COMPO to COMP(N-2) may be determined by each of a plurality of comparator enable signals Comp En1 to Comp En(N-2).

Then, the selector SLT outputs coefficients (A, B, C) for the programmable segment corresponding to the section of the segment to which the input value X belongs among coefficients (A0 to A(N-1), B0 to B(N-1), C0 to C(N-1)) for the plurality of programmable segments, according to the section determination data SDDO to SDD(N-2).

Specifically, a first register 320 provides coefficients of quadratic terms A0 to A(N-1), coefficients of linear terms B0 to B(N-1), and offsets C0 to C(N-1) for each of the plurality of programmable segments to the selector SLT.

Then, the selector SLT can determine the section of the segment to which the input value X belongs among the sections of the plurality of segments according to the section determination data SDDO to SDD(N-2) output from each of the plurality of comparators COMPO to COMP(N-2).

Then, the selector SLT can output a coefficient of a quadratic term A, a coefficient of a linear term B, and an offset C for the programmable segment corresponding to the section of the determined segment among the coefficients of quadratic terms A0 to A(N-1), coefficients of linear terms B0 to B(N-1), and offsets C0 to C(N-1) for the plurality of programmable segments.

Accordingly, the selector SLT can output a coefficient of a quadratic term A, a coefficient of a linear term B, and an offset C for the programmable segment corresponding to the section of the segment to which the input value X belongs.

The programmed activation function operation unit of the function approximation circuit PAF-1 may mean a circuit configured to receive an input value X, a coefficient of a quadratic term A, a coefficient of a linear term B, and an offset C and operate an output value Y.

The programmed activation function operation unit of the function approximation circuit PAF-1 may be configured to include a plurality of multipliers (PAF_MUL1, PAF_MUL2, PAF_MUL3) and a plurality of adders (PAF_ADD1, PAF_ADD2) to process a quadratic function or a linear function.

The programmed activation function operation unit of the function approximation circuit PAF-1 may be a hard-wired circuit.

The plurality of multipliers of the programmed activation function operation unit may include a first multiplier (PAF_MUL1), a second multiplier (PAF_MUL2), and a third multiplier (PAF_MUL3).

The PAF_MUL1 multiplies the coefficient of the quadratic term A for the programmable segment corresponding to the section of the segment to which the input value X belongs by the input value X.

Specifically, the PAF_MUL1 multiplies the input value X calculated by at least one processing core by the coefficient of the quadratic term A for the programmable segment output from the selector SLT.

Accordingly, the PAF_MUL1 can output the coefficient of the quadratic term A for the programmable segment multiplied by the input value X. That is, the output of the PAF_MUL1 can be expressed as A×X.

Then, the PAF_MUL2 multiplies the output value output from the PAF_MUL1 by the input value X.

Specifically, the PAF_MUL2 multiplies the input value X calculated by at least one P_CORE by the output value output from the PAF_MUL2.

Accordingly, the output of the PAF_MUL2 can be expressed as A×X². However, the above-described configuration is merely an example for implementing A×X², and may be modified through various circuit combinations.

The PAF_MUL3 multiplies the coefficient of the linear term B for the programmable segment corresponding to the section of the segment to which the input value X belongs by the input value X.

Specifically, the PAF_MUL3 multiplies the input value X calculated by at least one P_CORE by the coefficient of the linear term B for the programmable segment output from the selector SLT.

Accordingly, the PAF_MUL3 can output the coefficient of the linear term B for the programmable segment multiplied by the input value X. That is, the output of the PAF_MUL3 can be expressed as B×X.

The plurality of adders may include a first adder (PAF_ADD1) and a second adder (PAF_ADD2).

The PAF_ADD1 adds the output value of the PAF_MUL2 to the output value of the PAF_MUL3.

Specifically, the PAF_ADD1 can output the sum of the quadratic term and the linear term of each of the plurality of programmable segments composed of quadratic terms. That is, the output of the PAF_ADD1 can be expressed as A×X²+B×X.

Then, the PAF_ADD2 adds the offset C for the programmable segment corresponding to the section of the segment to which the input value X belongs to the output value of the PAF_ADD1.

Specifically, the PAF_ADD adds the offset C for the programmable segment to the sum of the quadratic term and the linear term of the programmable segment composed of quadratic terms. That is, the output of the PAF_ADD2 can be expressed as A×X²+B×X+C.

Accordingly, the PAF_ADD can output an activation value obtained by applying an activation function programmed as a quadratic function to an operation value that is an input value X.

According to the above-described configuration, the PAF-1 operates to be capable of processing a quadratic polynomial.

Meanwhile, the operations of the PAF_MUL2, the PAF_MUL3, and the PAF_ADD2 may be controlled by a first enable signal EN1.

Specifically, if the PAF_MUL2, the PAF_MUL3, and the PAF_ADD2 do not operate due to the first enable signal EN1, the operation is as described below.

The PAF_MUL1 multiplies the coefficient of the quadratic term A for the programmable segment corresponding to the section of the segment to which the input value X belongs by the input value X.

Specifically, the PAF_MUL1 multiplies the input value X calculated by at least one processing core 120 by the coefficient of the quadratic term A for the programmable segment output from the selector SLT.

Accordingly, the PAF_MUL1 can output the coefficient of the quadratic term A for the programmable segment multiplied by the input value X. That is, the output of the PAF_MUL1 can be expressed as A×X.

Then, since the PAF_MUL2 and the PAF_MUL3 do not operate, the output of the PAF_MUL1 is input to the PAF_ADD1 as it is. That is, an arithmetic unit deactivated by the first enable signal EN1 may be bypassed.

Then, PAF_ADD1 adds the coefficient of the linear term B for the programmable segment corresponding to the section of the segment to which the input value X belongs to the output value of the PAF_MUL1.

Specifically, the PAF_ADD1 adds the coefficient of the linear term B for the programmable segment to the value obtained by multiplying the coefficient of the quadratic term A for the programmable segment by the input value X. That is, the output of the PAF_ADD1 can be expressed as A×X+B.

Then, since the PAF_ADD2 does not operate, the output of the PAF_ADD1 is output as it is. That is, an arithmetic unit deactivated by the first enable signal EN1 may be bypassed.

That is, the PAF_ADD1 can output an activation value obtained by applying an activation function programmed as a linear function to an operation value that is an input value X.

According to the above-described configuration, the PAF-1 operates to be capable of processing a linear polynomial.

As described above, some configurations of the plurality of multipliers and the plurality of adders may be controlled by the first enable signal EN1. Accordingly, according to the first enable signal EN1, the PAF-1 can be driven not only when each programmable segment is a quadratic polynomial, but also when each programmable segment is a linear polynomial.

To elaborate, the PAF-1 pipelined with at least one processing core 120 according to an example of the present disclosure may also be configured as a hard-wired circuit configured to implement both activation functions programmed as quadratic functions and linear functions.

Therefore, there is an advantage that various cases of PAF can be processed with a single PAF-1.

Meanwhile, the PAF-1 may further include a logarithmic arithmetic unit, in addition to including a plurality of comparators COMP0 to COMP(N-2), a selector SLT, a plurality of multipliers (PAF_MUL1, PAF_MUL2, PAF_MUL3), and a plurality of adders (PAF_ADD1, PAF_ADD2).

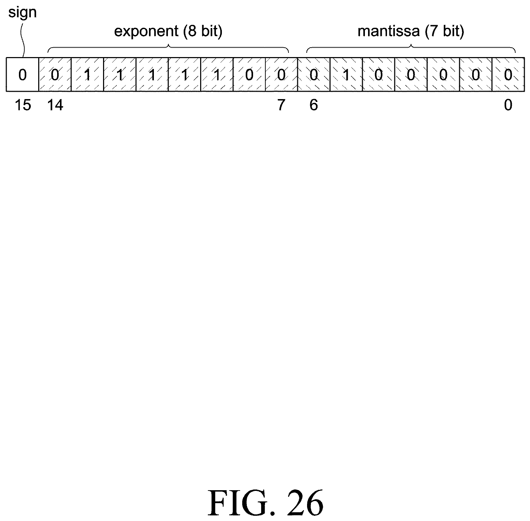

FIG. 26 is a diagram illustrating an example of a number system processed in a special function unit of a neural processing unit applicable to examples of the present disclosure.

The special function unit 150 of the neural processing unit 100 according to examples of the present disclosure is designed to be processed by at least one floating-point number system.

For example, the special function unit 150 may be designed to process floating point. Referring to FIG. 26, floating point is represented in the brain floating 16 (BF16) format. Referring to FIG. 26, the BF16 format floating-point number system includes a sign bit S, an exponent bit E, and a mantissa bit M.

However, the number system of the special function unit 150 according to examples of the present disclosure can also use IEEE standard 754, and other number systems may be applied for operational efficiency of the special function unit 150, reduction of memory usage, reduction of power consumption, and the like. However, examples of the present disclosure are not limited thereto, and dynamic floating-point, variable precision floating-point (VPFP), custom floating-point (CFP), flexible floating-point (FFP), and the like may be applied. Therefore, the bit width allocation of the exponent part and the bit width allocation of the mantissa part may vary depending on the number system supported by the special function unit 150 of the neural processing unit 100.

For example, when the special function unit 150 according to examples of the present disclosure is configured to use an FP32 number system, the special function unit 150 is configured to recognize the 31st bit of weight parameters, input parameters, and output parameters as a sign bit S, the 23rd bit to the 30th bit as exponent bits E, and the zeroth bit to the 22nd bit as mantissa bits M.

For example, when the special function unit 150 according to examples of the present disclosure is configured to use an FP16 number system, the special function unit 150 is configured to recognize the 15th bit of weight parameters, input parameters, and output parameters as a sign bit S, the 10th bit to the 14th bit as exponent bits E, and the zeroth bit to the 9th bit as mantissa bits M.

For example, when the special function unit 150 according to examples of the present disclosure is configured to use a brain floating 16 (BF16) number system, the special function unit 150 is configured to recognize the 15th bit of weight parameters, input parameters, and output parameters as a sign bit S, the 7th bit to the 14th bit as exponent bits E, and the zeroth bit to the 6th bit as mantissa bits M.

This can be expressed by Equation 5. $x = {\left(-1\right)}^{s} \times m \times {2}^{e}$ Equation 5

Here, x is an input in floating-point form, s means the sign of the input (x), e means the exponent part of the input (x), and m denotes the mantissa part of the input (x). The bias of BF16 is 127, and the range of the actual value of the exponent part is -126 to 127. The actual exponent value can be derived by subtracting the bias from the stored exponent.

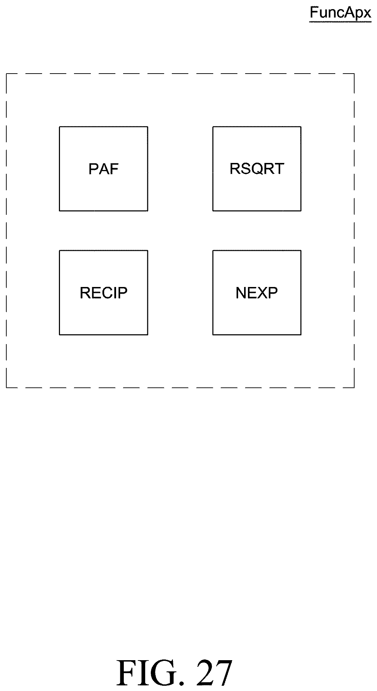

FIG. 27 illustrates a function approximation unit (FuncApx) according to a fourth embodiment of the fourth example of the present disclosure. The function approximation unit FuncApx according to the fourth embodiment of the fourth example of the present disclosure will be described with reference to FIGS. 5, 6, 24, 25, and 27.

Referring to FIG. 27, the function approximation unit according to the fourth embodiment of the fourth example of the present disclosure includes a function approximation circuit (PAF), a reciprocal function circuit (RECIP), a reciprocal of square root function circuit (RSQRT), and a negative exponential function circuit (NEXP). These circuits are individual circuits configured to independently process operations of functions necessary for attention score calculation of an artificial intelligence model.

The function approximation unit of FIG. 27 according to the fourth embodiment of the fourth example of the present disclosure may correspond to the V_FuncApx 1537 of FIG. 5 or the S_FuncApx 1545 of FIG. 6. The PAF of FIG. 27 according to the fourth embodiment of the fourth example of the present disclosure may correspond to the PAF of FIG. 24 or the PAF-1 of FIG. 25. The reciprocal function circuit of FIG. 27 according to the fourth embodiment of the fourth example of the present disclosure may correspond to the V_RECIP of FIG. 5 or the S_RECIP of FIG. 6. The RSQRT of FIG. 27 according to the fourth embodiment of the fourth example of the present disclosure may correspond to the V_RSQRT of FIG. 5 or the S_RSQRT of FIG. 6. The NEXP of FIG. 27 according to the fourth embodiment of the fourth example of the present disclosure may correspond to the V_NEXP of FIG. 5 or the S_NEXP of FIG. 6.

Each of the PAF, RECIP, RSQRT, and NEXP is a respective hard-wired arithmetic circuit. That is, when each of these circuits receives input parameters, it can process operations very quickly through the hard-wired arithmetic circuit without complex instructions. That is, the FuncApx activates at least one circuit corresponding to the function to be processed. Subsequently, when the FuncApx provides input parameters to the activated circuit, the function is calculated along the pipeline of the calculation circuit without complex instruction control. That is, each of the PAF, RECIP, RSQRT, and NEXP is a dedicated arithmetic circuit for the corresponding function. To elaborate, a hard-wired arithmetic circuit can only process predefined operations and lacks versatility, so it cannot process other operations. However, each of the PAF, RECIP, RSQRT, and NEXP can process predefined operations quickly and with low power. In particular, since all of these arithmetic circuits can be used for attention score calculation, a transformer-based artificial intelligence model can be operated quickly.

For example, the FuncApx may be designed to process function approximation operations by activating only the PAF. For example, the PAF may process at least one of Swish, Mish, Sigmoid, Hyperbolic Tangent (Tanh), Scaled Exponential Linear Unit (SELU), Gaussian Error Linear Unit (GELU), Softplus, Rectified Linear Unit (ReLU), Leaky ReLU, Maxout, Exponential Linear Unit (ELU), Hard Sigmoid, Hard Tanh, Bent Identity, ArcTan, Softsign, Sinusoidal Activation, S-shaped Rectified Linear Unit (SReLU), Parametric Rectified Linear Unit (PReLU), Logistic Activation, Radial Basis Function (RBF), Binary Step, Reciprocal, root mean square, and negative exponential by receiving programmable parameters.

Furthermore, the FuncApx may be designed to process the corresponding reciprocal function, square root function, and negative exponential function more precisely by activating one of the RECIP, RSQRT, and NEXP while activating the PAF.

FIG. 28 illustrates a reciprocal function processing circuit according to a fifth embodiment of the fourth example of the present disclosure.

According to the fifth embodiment of the fourth example of the present disclosure, for reciprocal function processing, the neural processing unit 100 activates the PAF and the RECIP of the FuncApx. The FuncApx connects the input and output of each circuit so that the PAF and the RECIP communicate with each other. Therefore, the FuncApx can be set to process reciprocal function calculation. Here, the RSQRT and the NEXP may be deactivated. That is, the FuncApx may be configured to provide at least one function among power gating, clock gating, and register retention functions to at least one circuit portion of the deactivated FuncApx.

The RECIP is a dedicated arithmetic circuit designed to process a reciprocal function.

When the RECIP is activated, the RECIP is connected to the PAF and receives the output of the PAF again as input. Accordingly, the RECIP is configured to output an approximate value OUT of the reciprocal value of the input value IN.

The PAF can receive the output of the RECIP as input and execute a programmed activation function to generate an approximate value of the reciprocal function. Here, the PAF is configured to use programmable parameters that approximate the reciprocal function corresponding to a preset input section. That is, the PAF is configured to receive programmable parameters that program the reciprocal function. The processing of a programmed activation function using the PAF is described with reference to FIGS. 21 to 25.

According to the above-described configuration, a reciprocal function can be approximated using only hard-wired circuits. In particular, the FuncApx is designed to process a reciprocal function by electrically connecting the PAF and the RECIP to each other and pipelining the PAF and the RECIP. Therefore, since circuits corresponding to each operation step are provided, a reciprocal function can be processed even without instructions to control the operation of each step.

According to the above-described configuration, a reciprocal function can be calculated by activating only respective hard-wired dedicated arithmetic circuits (i.e., the PAF and the RECIP). In this case, compared to using only the PAF, approximation errors can be reduced for a wider input range. At this time, the remaining dedicated arithmetic circuits of the FuncApx (e.g., the RSQRT or the NEXP) can be deactivated. Therefore, the power consumption of the value IN can be reduced.

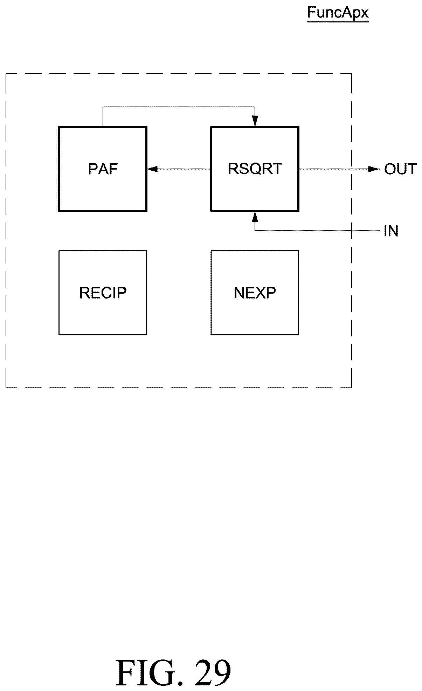

FIG. 29 illustrates a reciprocal of square root function processing circuit according to a sixth embodiment of the fourth example of the present disclosure.

According to the sixth embodiment of the fourth example of the present disclosure, for reciprocal of square root function processing, the neural processing unit 100 activates the PAF and the RSQRT of the FuncApx. The FuncApx connects the input and output of each circuit so that the PAF and the RSQRT communicate with each other. Therefore, the FuncApx can be set to process reciprocal of square root function calculation. Here, the RECIP and the NEXP may be deactivated. That is, the FuncApx may be configured to provide at least one function among power gating, clock gating, and register retention functions to at least one circuit portion of the deactivated FuncApx.

The RSQRT is a dedicated arithmetic circuit designed to process a reciprocal of square root function.

When the RSQRT is activated, the RSQRT is connected to the PAF and receives the output of the PAF again as input. Accordingly, the RSQRT is configured to output an approximate value OUT of the reciprocal of square root value of the input value IN.

The PAF can receive the output of the RSQRT as input and execute a programmed activation function to generate an approximate value of the reciprocal of square root function. Here, the PAF is configured to use programmable parameters that approximate the reciprocal of square root function corresponding to a preset input section. That is, the PAF is configured to receive programmable parameters that program the reciprocal of square root function. The processing of a programmed activation function using the PAF is described with reference to FIGS. 21 to 25.

According to the above-described configuration, a reciprocal of square root function can be approximated using only hard-wired circuits. In particular, the FuncApx is designed to process a reciprocal of square root function by electrically connecting the PAF and the RSQRT to each other and pipelining the PAF and the RSQRT. Therefore, since circuits corresponding to each operation step are provided, a reciprocal of square root function can be processed even without instructions to control the operation of each step.

According to the above-described configuration, a reciprocal of square root function can be calculated by activating only respective hard-wired dedicated arithmetic circuits (i.e., the PAF and the RSQRT). In this case, compared to using only the PAF, approximation errors can be reduced for a wider input range. At this time, the remaining dedicated arithmetic circuits of the FuncApx (e.g., the RECIP or the NEXP) can be deactivated. Therefore, the power consumption of the neural processing unit 100 can be reduced.

FIG. 30 illustrates a negative exponential function processing circuit according to a seventh embodiment of the fourth example of the present disclosure.

According to the seventh embodiment of the fourth example of the present disclosure, for negative exponential function processing, the neural processing unit 100 activates the PAF and the NEXP of the FuncApx. The FuncApx connects the input and output of each circuit so that the PAF and the NEXP communicate with each other. Therefore, negative exponential function calculation can be processed. Here, the RECIP and the RSQRT may be deactivated. That is, the FuncApx may be configured to provide at least one function among power gating, clock gating, and register retention functions to at least one circuit portion of the deactivated FuncApx.

The NEXP is a dedicated arithmetic circuit designed to process a negative exponential function.

When the NEXP is activated, the NEXP is connected to the PAF and receives the output of the PAF again as input. Accordingly, the NEXP is configured to output an approximate value OUT of the negative exponential function value of the input value IN.

The PAF can receive the output of the NEXP as input and execute a programmed activation function to generate an approximate value of the negative exponential function. Here, the PAF is configured to use programmable parameters that approximate the negative exponential function corresponding to a preset input section. That is, the PAF is configured to receive programmable parameters that program the negative exponential function. The processing of a programmed activation function using the PAF is described with reference to FIGS. 21 to 25.

According to the above-described configuration, a negative exponential function can be approximated using only hard-wired circuits. In particular, the FuncApx is designed to process a negative exponential function by electrically connecting the PAF and the NEXP to each other and pipelining the PAF and the NEXP. Therefore, since circuits corresponding to each operation step are provided, a negative exponential function can be processed even without instructions to control the operation of each step.

According to the above-described configuration, a reciprocal function can be calculated by activating only respective hard-wired dedicated arithmetic circuits (i.e., the PAF and the NEXP). In this case, compared to using only the PAF, approximation errors can be reduced for a wider input range. At this time, the remaining dedicated arithmetic circuits of the FuncApx (e.g., the RSQRT or the RECIP) can be deactivated. Therefore, the power consumption of the neural processing unit 100 can be reduced.

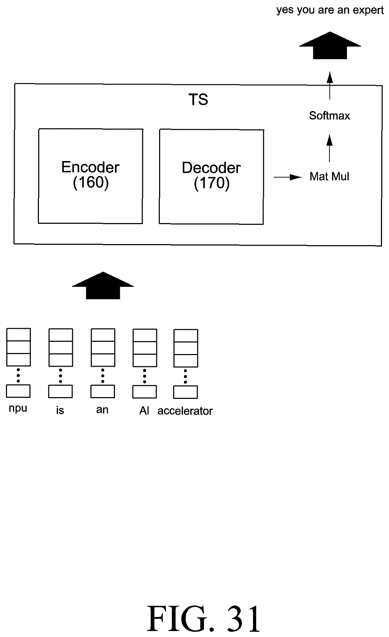

FIG. 31 illustrates a transformer model applicable to examples of the present disclosure.

Referring to FIG. 31, a transformer model (TS) may include an encoder 160 and a decoder 170.

Text composed of at least one token may be input to the transformer model. For example, text such as "npu is an AI accelerator" may be input to the transformer model. The input text may include five tokens: "npu," "is," "an," "AI," and "accelerator." A token is a numerical representation of text, and token embedding is the vectorization of tokens to establish relationships between them. According to an embodiment, the transformer model may convert each token into a vector of a predetermined size. For example, the transformer model may construct a vocabulary dictionary through byte pair encoding and word piece tokenization, and represent about 30,000 tokens as d_{model} (e.g., 512) dimensional vectors using pre-trained embeddings. Therefore, embedding refers to the process of representing input text as a matrix of a fixed size (number of tokens × 512), and a specific row vector of the matrix may correspond to the embedding vector of the corresponding token. Such a matrix may be expressed as an embedding matrix, map, linear transformation, lookup table, or the like. However, the number of dimensions d_{model} of the token embedding vector is not limited to 512 and may be larger or smaller. For example, the number of dimensions of the token embedding vector may be 128, 256, 1024, 2048, or 4096, etc. For convenience of explanation below, d_{model} is assumed to be 512.

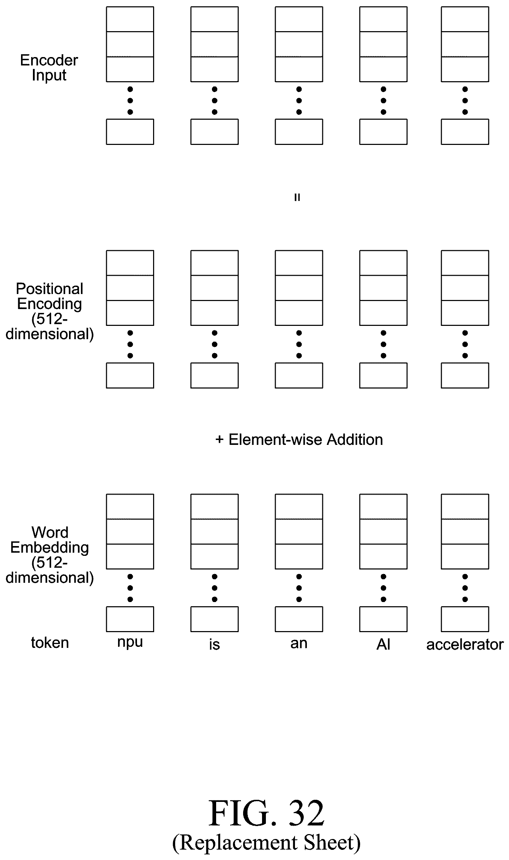

Referring to FIG. 32, each token is converted into an embedding vector and may be combined with a positional encoding vector to become an input to the encoder 160. The positional encoding vector is a vector for representing the position information of a token, and may be represented as a 512-dimensional vector using trigonometric functions. The positional encoding vector may be the same size as the token embedding vector. The combination of the token embedding vector and the positional encoding vector may be performed by arithmetically adding the two vectors to each other. In the positional encoding process, odd-numbered tokens may use a sine function, and even-numbered tokens may use a cosine function. Since sine and cosine are periodic functions and have values between -1 and +1, normalization may also be performed.

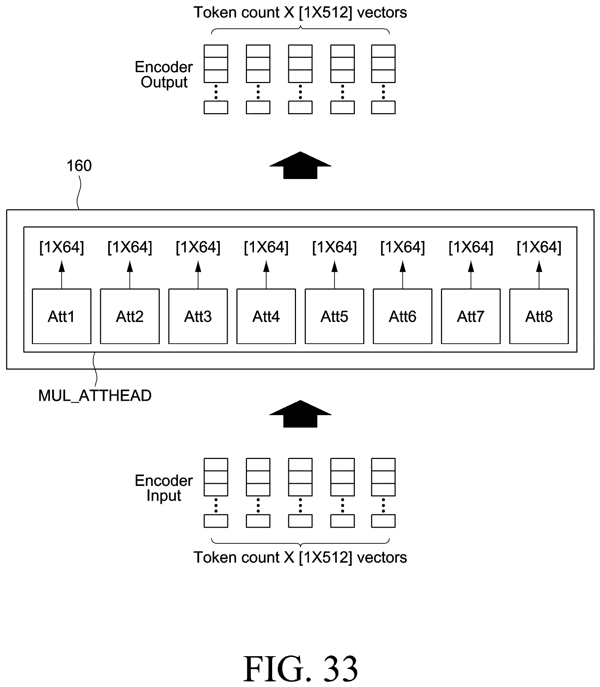

Referring to FIG. 33, the encoder 160 may include a multi-head attention unit (MUL_ATTHEAD). The MUL_ATTHEAD may include a plurality of attention heads. Each of the attention heads can derive the relationship between input tokens based on its own criteria. By including a plurality of attention heads, three-dimensional and accurate analysis of the input text is possible.

According to an embodiment, the MUL_ATTHEAD may include 8 attention heads (Att1 to Att8), but is not limited thereto. The number of attention heads may be smaller or larger than eight. However, in this specification, a representative embodiment with eight attention heads will be described. Each attention head can output attention data for each token of the text. Referring to Table 2, the first attention head Att1 can output a 1×64 vector of attention data for "npu" of size 1×512. The first attention head Att1 can output a 1×64 vector of attention data for "is" of size 1×512. The first attention head Att1 can output a 1×64 vector of attention data for "an" of size 1×512. The first attention head Att1 can output a 1×64 vector of attention data for "AI" of size 1×512. The first attention head Att1 can output a 1×64 vector of attention data for "accelerator" of size 1×512.

Similarly, the Nth attention head AttN can output a 1×64 vector of attention data for "npu" of size 1×512. The Nth attention head AttN can output a 1×64 vector of attention data for "is" of size 1×512. The Nth attention head AttN can output a 1×64 vector of attention data for "an" of size 1 ×512. The Nth attention head AttN can output a 1×64 vector of attention data for "AI" of size 1×512. The Nth attention head AttN can output a 1×64 vector of attention data for 'accelerator' of size 1×512.

**Table 2**

| Attention Head | Token | Output Vector | Size |
|---|---|---|---|
| Attl | npu | Attention Data1_1 | 1×64 |
| | is | Attention Data 1_2 | 1×64 |
| | an | Attention Data 1_3 | 1×64 |
| | AI | Attention Data 1_4 | 1×64 |
| | accelerator | Attention Data 1_5 | 1×64 |
| Att2 | npu | Attention Data 2_1 | 1×64 |
| | is | Attention Data 2_2 | 1×64 |
| | an | Attention Data 2_3 | 1×64 |
| | AI | Attention Data 2_4 | 1×64 |
| | accelerator | Attention Data 2_5 | 1×64 |
| Att3 | npu | Attention Data 3_1 | 1×64 |
| | is | Attention Data 3_2 | 1×64 |
| | an | Attention Data 3_3 | 1×64 |
| | AI | Attention Data 3_4 | 1×64 |
| | accelerator | Attention Data 3_5 | 1×64 |
| Att4 | npu | Attention Data 4_1 | 1×64 |
| | is | Attention Data 4_2 | 1×64 |
| | an | Attention Data 4_3 | 1×64 |
| | AI | Attention Data 4_4 | 1×64 |
| | accelerator | Attention Data 4_5 | 1×64 |
| Att5 | npu | Attention Data 5_1 | 1×64 |
| | is | Attention Data 5_2 | 1×64 |
| | an | Attention Data 5_3 | 1×64 |
| | AI | Attention Data 5_4 | 1×64 |
| | accelerator | Attention Data 5_5 | 1×64 |
| Att6 | npu | Attention Data 6_1 | 1×64 |
| | is | Attention Data 6_2 | 1×64 |
| | an | Attention Data 6_3 | 1×64 |
| | AI | Attention Data 6_4 | 1×64 |
| | accelerator | Attention Data 6_5 | 1×64 |
| Att7 | npu | Attention Data 7_1 | 1×64 |
| | is | Attention Data 7_2 | 1×64 |
| | an | Attention Data 7_3 | 1×64 |
| | AI | Attention Data 7_4 | 1×64 |
| | accelerator | Attention Data 7_5 | 1×64 |
| Att8 | npu | Attention Data 8_1 | 1×64 |
| | is | Attention Data 8_2 | 1×64 |
| | an | Attention Data 8_3 | 1×64 |
| | AI | Attention Data 8_4 | 1×64 |
| | accelerator | Attention Data 8_5 | 1×64 |

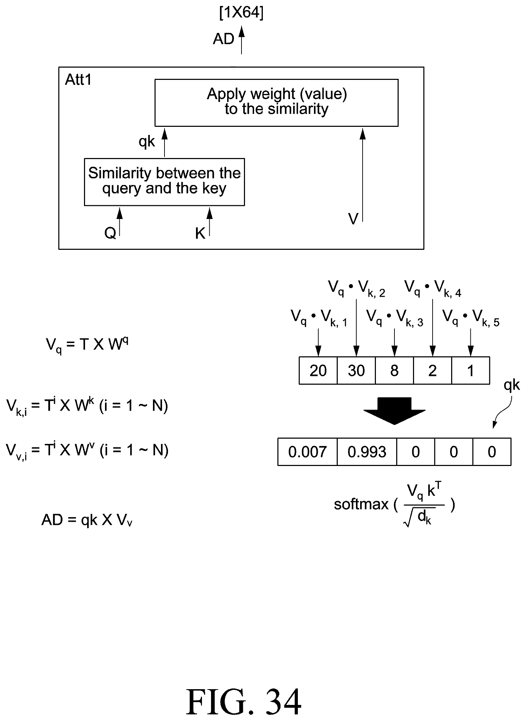

Hereinafter, a method by which each attention head outputs attention data will be described with reference to FIG. 34.

FIG. 34 illustrates a state in which the first attention head Att1 outputs attention data (AD, e.g., Attention Data1_1 in Table 2) for the current token (e.g., "npu"). Referring to FIG. 34, a query Q calculates similarity through a key K, and attention data AD can be obtained by assigning a value V to the calculated similarity. The query Q means the current token (e.g., "npu") for setting attention data, i.e., a relationship, and as in Equation 6 below, a query vector V_{Q} is the result of performing vector-matrix multiplication of the current token T and a query weight matrix

W_{Q}.${V}_{Q} = T \times {W}_{Q}$ Equation 6

For example, the current token may be "npu." As described above, the current token "npu" may be an embedding vector of size 1×512, and the query weight matrix W_{Q} may be 512×64. As a result of the matrix multiplication operation, the query vector V_{Q} may be obtained as a vector of size 1×64.

The key K is for establishing a relationship with the current query Q, and all tokens included in the input text can be keys. For example, in the example of FIG. 1, the input text may be composed of five tokens as in Table 3 below, and a key vector V_{k,i} corresponding to each token can be obtained. The key vector may include a total of five key vectors (V_{k,1}, V_{k,2}, V_{k,3}, V_{k,4}, V_{k,5}). Each of the key vectors can be obtained by Equation 7 below.

**Table 3**

| Token | Meaning |
|---|---|
| T¹ | Embedding vector of 'npu' (d_{model} dimension) |
| T² | Embedding vector of 'is' (d_{model} dimension) |
| T³ | Embedding vector of 'an' (d_{model} dimension) |
| T⁴ | Embedding vector of 'AI' (d_{model} dimension) |
| T⁵ | Embedding vector of 'accelerator' (d_{model} dimension) |

${V}_{k , i} = {T}^{i} \times {W}^{K} \left(i=1 to N\right)$ Equation 7

A key vector can be obtained by performing matrix multiplication of the embedding vector of each token of the input text and a key weight matrix W^{K}. Tⁱ is a vector of size 1×512, and the key weight matrix W^{K} may be a vector of size 512x64. Therefore, each of the key vectors V_{k,i} may be a vector of size 1×64.

Since the dimensions of the query vector V_{Q} and the key vector V_{k,i} are the same as 1×64, a dot-product operation can be performed on the query vector and key vector elements, and the value obtained by a dot-product of the query vector and key vector elements for each token can be obtained as the similarity between the query and the key.

For example, the value of V_{Q} · V_{k,1} may be 20, the value of V_{Q} · V_{k,1} may be 30, the value of V_{Q} · V_{k,1} may be 8, the value of V_{Q} · V_{k,1} may be 2, and the value of V_{Q} · V_{k,1} may be 1. Let K be the key vector for all tokens. That is, K is (V_{k,1}, V_{k,1}, V_{k,1}, V_{k,1}, V_{k,1}), and V_{Q} · K is obtained as a vector of size 1×5. V_{Q} · K can be expressed as a matrix product of V_{Q}K^{T}.

However, since the range of similarity values obtained through the inner product is large, each inner product value can be divided by the square root of the key vector size $\sqrt{{d}_{k}}$ and a softmax operation as in Equation 8 below can be applied to normalize each similarity value to a value between 0 and 1.$Attention Weight = softmax \left(\frac{{V}_{Q} {K}^{T}}{\sqrt{{d}_{k}}}\right)$ Equation 8

The softmax operation is an operation that converts multiple numbers into probabilities between 0 and 1. Equation 9 below shows a formula for performing a softmax operation value for a vector [z1, z2, ..., zn].$σ \left({z}_{i}\right) = \frac{{e}^{{z}_{i}}}{{\sum }_{j = 1}^{n} {e}^{{z}_{i}}}$ Equation 9

However, if a very large value exists in zi, a numerical instability problem may occur. If zᵢ is too large, the value of e^{zi} may become too large, causing an overflow. To solve this, a numerically more stable calculation can be made possible by using a method of subtracting the maximum value zmax (negative exponential trick). Equation 10 below is a softmax operation formula modified from Equation 9 using zmax.$σ \left(zi\right) = \frac{{e}^{{z}_{i} - {z}_{max}}}{{\sum }_{j = 1}^{n} {e}^{{z}_{i} - {z}_{max}}}$ Equation 10

As a result, QK (also called attention weight) may be obtained as a vector of size 1×5, for example, [0.007, 0.993, 0, 0, 0]. The attention weight is a value in which the similarity with other tokens for the current query (e.g., "npu") is expressed as a probability.

According to an embodiment, the transformer model may assign a value to the attention weight. The value vector is similar to the method of calculating the key vector. Each of the value vectors can be obtained by Equation 11 below.${V}_{v , i} = {T}^{i} \times {W}^{v} \left(i=1 to N\right)$ Equation 11

Ti is a vector of size 1×512, and W^{V} may be a value weight matrix, which is a vector of size 512×64. Therefore, each value vector V_{V,i} obtained by matrix multiplication of Tⁱ and W^{V} is a vector of size 1×64. Since a value vector is obtained for each token, five value vectors are obtained in this embodiment, which can be obtained as a value vector of size 5×64. Using Equation 12 below, the attention data output by the first attention head Att1 can be obtained as a vector of size 1×64 by matrix-vector multiplying QK, which is a vector of size 1×5, by a value vector of size 5×64.$Attention Data = Attention Weight \times {V}_{v} = softmax \left(\frac{{V}_{Q} {K}^{T}}{\sqrt{{d}_{k}}}\right) \times {V}_{v}$ Equation 12

Referring again to FIG. 33, the encoder 160 can obtain a vector of size 1×512 by concatenating the vectors of size 1×64 output by each attention head. The above-described process is performed for each of the remaining attention heads (att1 to att8) with their respective query weight matrices, key weight matrices, and value weight matrices, and each of the attention heads can output a vector of size 1×64. In the embodiment of FIG. 33, since the number of attention heads is eight, eight vectors of size 1×64 are combined to obtain a vector of size 1×512 for the current token "npu." That is, an output vector for the current token "npu" is obtained as a vector of size 1×512, which is the same as the size of the input embedding vector.

The above-described process is similarly performed for the remaining tokens "is," "an," "AI," "accelerator," and finally the encoder E can output 1×512 vectors, as many as the number of tokens in the input text.

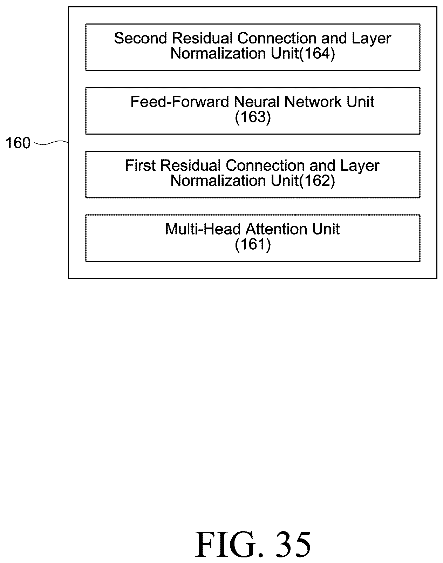

FIG. 35 illustrates an encoder applicable to examples of the present disclosure.

Referring to FIG. 35, the encoder 160 may include a multi-head attention unit 161 described with reference to FIGS. 32 to 34, a first residual connection and layer normalization unit 162, a feed-forward neural network unit 163, and a second residual connection and layer normalization unit 164.

If the multi-head attention unit 161 has established relationships between tokens, it is also necessary to establish relationships at a higher concept level, such as phrases or clauses. To implement this, the transformer model can apply a feed-forward neural network 163 to the output result of the multi-head attention unit 161. The feed-forward neural network 163 is a neural network composed of a fully-connected layer and can learn non-linear relationships such as phrases or clauses.

The first residual connection and layer normalization unit 162 is for complementing the gradient vanishing problem that may occur in the differentiation-based learning process of deep learning, and plays a role in preserving the rough value by adding the input value to the result value that has passed through the layer of the artificial neural network. For residual connection existing in the multi-head attention unit 161 in the transformer model, the input value of the multi-head attention unit 161 can be added to the result value that has passed through the multi-head attention unit 161. In addition, the first residual connection and layer normalization unit 162 can perform layer normalization. Layer normalization can alleviate covariant shift by adjusting values based on the mean and variance of the output value (i.e., the result of residual connection) in natural language processing.

The feed-forward neural network unit 163 is for predicting non-linear phenomena, and can learn contextual meanings such as phrases or clauses by recombining the relationship information of tokens that have passed through the multi-head attention unit 161. The utilized feed-forward neural network 163 may, for example, use a fully connected hidden layer with two layers having 2,048 nodes, and the output may be 512-dimensional, the same as the input. Here, the input is the result value of the multi-head attention unit 161 that has undergone residual connection and normalization, represented as a 512-dimensional vector, and residual connection and normalization (by the second residual connection and layer normalization unit 164) may also be performed on the output of the hidden layer composed of two layers.

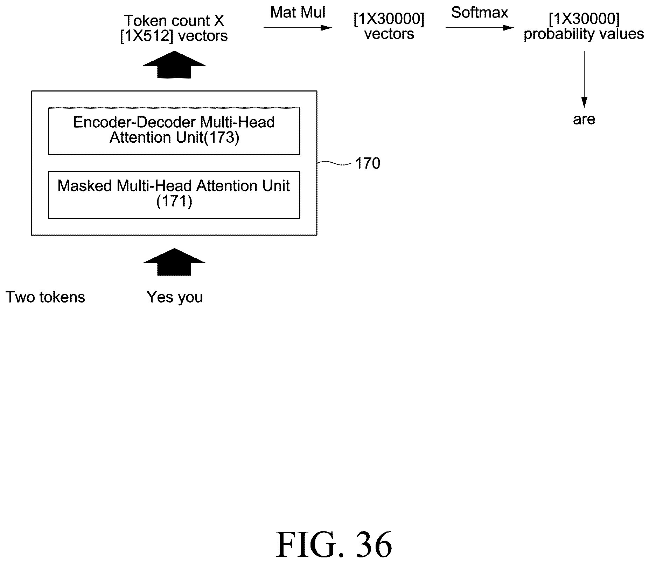

FIG. 36 illustrates an example of a flow for generating an output vector and calculating a final token probability value in a decoder applicable to examples of the present disclosure.

Referring to FIG. 36 and Table 4 below, the decoder 170 may include a masked multi-head attention unit 171 and an encoder-decoder multi-head attention unit 173.

The masked multi-head attention unit 171 receives the token embedding vector of the decoder 170 output so far. From the perspective of language generation, if a token at a specific time point refers to a token at a later time point, the learning performance may be degraded, so it is called masked multi-head attention in the sense of masking tokens at later time points. Therefore, by assigning -∞ to the scores of later time points, the softmax operation value can be made 0, thereby making the attention score 0.

**Table 4**

| | Input Token(S) | yes | you | are | an | expert | prediction |
|---|---|---|---|---|---|---|---|
| =0 | yes | O | Mask | Mask | Mask | Mask | you |
| =1 | yes you | O | | Mask | Mask | Mask | are |
| =2 | yes you are | O | O | O | Mask | Mask | an |
| =3 | yes you are an | O | O | O | O | Mask | expert |
| =4 | yes you are an expert | O | O | O | O | O | |

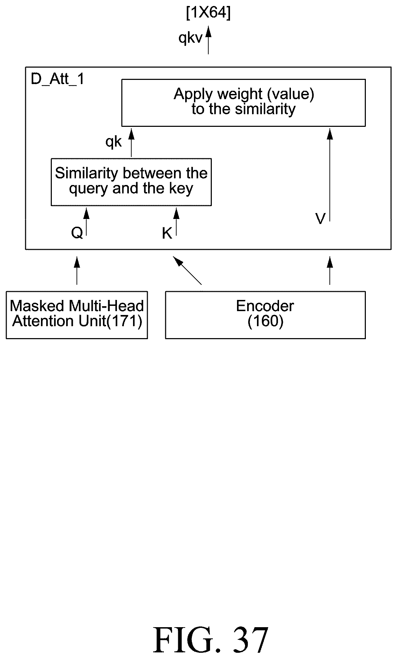

The encoder-decoder multi-head attention unit 173 is similar to the operation of the multi-head attention unit described above with reference to FIGS. 31 to 34. The encoder-decoder multi-head attention unit 173 can obtain the similarity between a query Q and a key K and assign a value V to the obtained value. To obtain the query vector and key vector, matrix multiplication of the token with the query weight matrix and key vector matrix can be performed. The difference between the encoder-decoder multi-head attention unit 173 and the multi-head attention unit 161 of the encoder 160 is that the query Q is the output vector of the masked multi-head attention 171. The key K and value V are input as the output vector of the encoder E (see FIG. 37). If, as in GPT, there is only a decoder 170 structure, the input text (e.g., text input by the user, which has not passed through the encoder 160) can be used as it is for the key K and value V. As a result, the decoder 170 can output 1×512 sized vectors, as many as the number of tokens.

The output of the decoder 170 must be expanded to the number of tokens handled by the language model (e.g., 30,000). 30,000 is an example and may vary depending on the language model. For this, the output vector of the decoder 170 can be expanded to a 1 ×30,000 vector by matrix multiplication with a 512×30,000 matrix. The 512×30,000 matrix is pre-trained data and can be obtained as parameters of an artificial neural network through learning of the artificial neural network. A softmax operation is applied to the 1×30,000 vector, so that all 30,000 tokens are changed to probability values between 0 and 1, and the token with the largest probability value among the 30,000 probability values can be finally determined as the next predicted token. For example, if the input to the decoder 170 is "yes you," the predicted token may be determined as "are," and if it is "yes you are an," the predicted token may be determined as "expert."

As described above, the operations of the encoder 160 and the decoder 170 have been explained. The encoder 160 and the decoder 170 have similar input and output formats, and most elements are the same except for the masked multi-head attention 171. It should be understood that the transformer model basically includes an encoder 160 and a decoder 170, but the encoder 160 and the decoder 170 can be selectively adopted depending on the language model. For example, an encoder 160-decoder 170 model including both an encoder 160 and a decoder 170 is suitable for tasks that require understanding and transforming input text. Examples of encoder 160-decoder 170 models may include T5 (Text-to-Text Transfer Transformer) and BART (Bidirectional and Auto-Regressive Transformer). For example, an encoder-only model is suitable for tasks where analyzing and understanding text is important. Examples of encoder 160 dedicated models may include BERT (Bidirectional Encoder Representations from Transformers) and RoBERTa (Robustly Optimized BERT). For example, a decoder-only model is suitable for tasks where generating sentences is important. Decoder 170 dedicated models may include GPT (Generative Pre-trained Transformer), LLaMA (Large Language Model Meta AI), and the like.

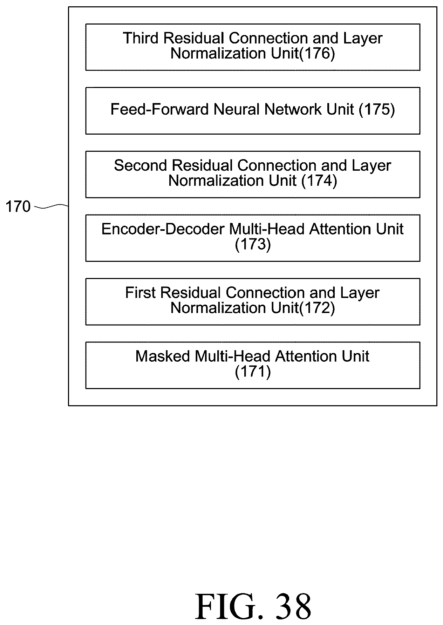

FIG. 38 illustrates a configuration of a decoder applicable to examples of the present disclosure.

Referring to FIG. 38, the decoder 170 is composed of sub-modules that can operate together with the encoder 160 in a transformer-based structure to perform sentence generation or prediction tasks. It uses the sequence vector transmitted from the encoder 160, previously described based on FIG. 35, as input, and performs complex operations to generate subsequent tokens based on this.

Specifically, the decoder 170 may include a masked multi-head attention unit 171, a first residual connection and layer normalization unit 172, an encoder-decoder multi-head attention unit 173, a third residual connection and layer normalization unit 174, a feed-forward neural network unit 175, and a third residual connection and layer normalization unit.

The masked multi-head attention unit 171 applies a masking technique that blocks attention to tokens after the current position to preserve the generation order of the sequence. For example, in a natural language generation (NLG) task, to suppress leakage of information from future time points, causality is maintained by limiting attention weights. Masked attention allows for the generation of operation results that reflect only past information for the input at each time point.

The first residual connection and layer normalization unit 172 performs residual connection and normalization on the result of the masked attention operation, thereby maintaining learning stability according to the depth of the model and improving convergence speed. At this time, the residual connection sums the input value and the attention output value, and performs a normalization operation (LayerNorm) on the result.

The encoder-decoder multi-head attention unit 173 learns the correlation between the input sequence of the decoder 170 and the output sequence of the encoder 160. This is a key element that allows the decoder 170 to generate a more precise sequence by referring to the output information of the encoder 160, and generally has a cross-attention structure. The decoder input acts as a query, and the encoder output acts as key and value, helping to generate a target sequence based on the context of the input sequence. That is, the encoder-decoder multi-head attention unit 173 combines the encoder output (e.g., 512-dimensional sequence representation) and the current state of the decoder 170 to support the decoder 170 in making predictions based on appropriate context.

The second residual connection and layer normalization unit 174 applies additional residual connection and normalization to the result of the encoder-decoder attention, thereby minimizing information loss and enabling transmission to the next stage of neural network processing. This contributes to maintaining a stable gradient flow during learning and improving the generalization performance of the model.

The feed-forward neural network unit 175, like the encoder 160, is composed of a position-wise neural network for performing independent non-linear operations for each token. For example, it is based on a multi-layer perceptron structure consisting of two Fully Connected Layers and non-linear activation functions (GELU, ReLU, etc.), and performs high-dimensional semantic extraction and combination functions between tokens.

The third residual connection and layer normalization unit 176 performs residual connection and normalization even after the feed-forward operation, thereby maintaining a consistent information flow throughout the decoder block. Finally, the decoder 170 repeats this structure to predict the output sequence step by step.

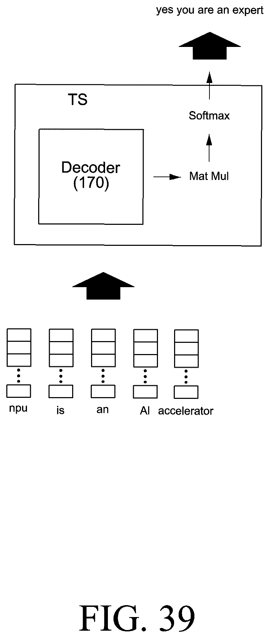

FIG. 39 illustrates a transformer model including only a decoder applicable to examples of the present disclosure.

Referring to FIG. 39 and Table 5 below, the transformer model may include only the decoder 170. Since there is no encoder 160, the embedding vector of the input text (which has not passed through the encoder 160) can be directly input to the attention head of the decoder 170, and the remaining operations are the same as described above with reference to FIGS. 36 to 38.

**Table 5**

| Transformer Process | Neural Network Used | Quantization | Dynamic Quantization |
|---|---|---|---|
| Query Vector (V_{Q} = Q ) Gen. | Used | Used | Used |
| Key Vector (K) Gen. | | | |
| Value Vector (Vᵥ = V) Gen | | | |
| Softmax | Not Used | | Not Used |
| Feed-Forward Network | Used | Used | Used |
| Final Output Transformation | Used | Used | Used |

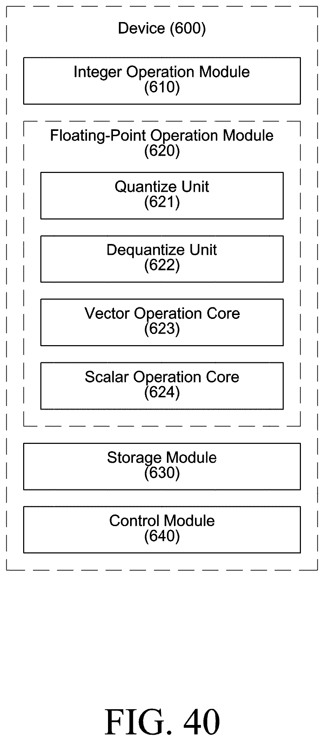

FIG. 40 illustrates a device for performing low-power based neural network operations applicable to examples of the present disclosure.

Referring to FIG. 40, a device 600 may be configured to include an integer operation module 610, a floating-point operation module 620, a storage module 630, and a control module 640.

The integer operation module 610 is an operation block configured to perform large-scale integer operations based on input data, and may perform operations such as, for example, matrix multiplication (MAC), integer accumulation, and integer-based activation functions. This serves to simultaneously improve operation speed and energy efficiency by efficiently processing quantized inputs and weights of a neural network model.

At this time, the integer operation module 610 may be a dedicated matrix operation circuit composed of a plurality of processing elements in an M×N structure. This can perform matrix multiplication operations (MAC) between input tensors quantized in a first number system (integer number system) such as INT8 or INT16 and weight parameters in a high-speed parallel manner. In addition, it is designed as a fixed-point based arithmetic circuit, enabling high-speed operation with low area/low power.

The floating-point operation module 620 may be configured to perform dequantize operations to convert integer operation results output from the integer operation module 610 into a second number system (floating-point format) such as FP16 or BFLOAT, and to process various non-linear operations such as softmax, ReLU, and GELU using the converted floating-point data.

This floating-point operation module 620 includes a quantize unit 621, a dequantize unit 622, a vector operation core 623, and a scalar operation core 624.

The quantize unit 621 is composed of an arithmetic circuit that converts floating-point data (data in a floating-point number system) into integer data (data in an integer number system).

This circuit performs an operation of quantizing input floating-point data into integer values within a fixed range based on a decimal point by applying a preset scale factor and zero point.

For example, input FP16 data can be converted into INT8 or INT16 format through a multiplier, adder, saturation circuit, and clipping circuit within the quantize unit 621, and this process is performed in real time and utilized as a pre-memory storage or pre-computation processing step. Through this, the overall memory bandwidth usage can be reduced, and an optimized computation flow for integer computation cores can be configured.

The dequantize unit 622 is composed of a circuit that inversely converts integer-based operation results, i.e., integer data, into floating-point data.

This circuit performs the reverse operation of the quantize operation, and generates floating-point data close to the original continuous real value by multiplying each input integer value by a corresponding scaling factor and correcting the zero point.

In terms of hardware configuration, the dequantize unit 622 includes an accumulator and an offset compensation circuit, and generates output in formats such as IEEE FP16, BFLOAT16, or VPFP (variable precision FP) after operation. The dequantize unit 622 inversely converts integer data into floating-point data, thereby enabling the performance of special functions that require high-precision operations. At this time, the dequantize unit is organically linked with the operation cores (vector operation core 623 and scalar operation core 624) within the floating-point operation module 620. The vector operation core 623 is a circuit aggregate specialized for parallel vector operations, and performs multi-dimensional tensor operations such as softmax, normalization, and vector function approximation.

This vector operation core 623 may be composed of a plurality of vector operation units, and each vector operation unit is configured with a single instruction multiple data (SIMD) architecture so that the same operation command can be applied to multiple data elements simultaneously.

For example, when performing a softmax operation, vector maximum value search, exponential function approximation, vector sum (SUM) calculation, and division approximation operation for normalization are sequentially performed, and each operation is divided into V_MAX, V_EXP, V_SUM, and V_DIV modules and processed in parallel.

The vector operation core 623 also enables high-speed processing while reducing the operation time of non-linear functions through a lookup table (LUT) based approximation circuit.

The scalar operation core 624 is composed of a circuit optimized for single-value based precision operations or conditional branch processing. It can perform not only basic operations such as scalar maximum value, addition, and multiplication, but also precision non-linear function approximation for a single input, such as conditional branching, comparison operations, regression (sigmoid), and GLUE.

This scalar operation core 624, unlike the vector operation core 623, is suitable for operations including complex conditional logic, and may include FSM (finite state machine)-based control logic. In addition, an LUT-based function approximation circuit and a fixed-point arithmetic unit are included, providing a balance between operational accuracy and low-power operation.

The storage module 630 performs the function of temporarily storing or caching input parameters, intermediate results, output data, or execution instructions used for operations. The storage module 630 may include various forms of memory structures such as SRAM, DRAM, register file, etc., and may operate in conjunction with on-chip memory or external memory of the device 600.

Specifically, the storage module 630 may be operably linked with the integer operation module 610, the floating-point operation module 620, and the control module 640 through a data bus and a control bus, and thereby perform the function of storing or caching input parameters, intermediate results, output data, or execution instructions used for operations.

This storage module 630 may be configured in the form of on-chip SRAM or a register file capable of high-speed data access, and may also provide expanded storage space through linkage with external memory if necessary.

In addition, the storage module 630 may perform a pipeline cache role of temporarily storing intermediate results generated by the integer operation module 610 before transmitting them to the dequantize unit 622, vector operation core 623, and/or scalar operation core 624 according to the operation flow. In particular, by including an L1 cache layer suitable for parallel operations performed by the vector operation core 623 and an L2 cache structure that can be shared among multiple modules, the data reuse rate in the overall operation flow can be increased and bus bottlenecks can be alleviated.

Furthermore, the storage module 630 can also perform a buffering function for transmitting the results of non-linear operations such as softmax, normalization, and function approximation to a subsequent module (e.g., a decoder or output layer).

The control module 640 performs the function of comprehensively controlling the operation of each arithmetic module of the device 600. In other words, the control module 640 may be configured to comprehensively control the operation of each module based on the operating state of each arithmetic module within the device 600, control flags included in the execution code, the type of arithmetic request, and the like. For example, in the case of an arithmetic request requiring integer operations, only the integer operation module 610 may be activated, and in the case of an arithmetic request including floating-point based non-linear operations, arithmetic path selection control may be performed to activate the floating-point operation module 620 together.

In addition, the control module 640 can apply low-power control techniques such as clock gating or power gating by determining the load state or idle state of each module, and in particular, if high-precision operation is not required in the floating-point operation module 620, the power to the corresponding core (e.g., scalar operation core 624) can be cut off to reduce power consumption.

Furthermore, the control module 640 can detect elements with a value of 0 in data received from the integer operation module 610 or the quantize unit 621, determine a zero-skipping condition, and optimize operation commands, thereby shortening the overall operation time and minimizing unnecessary energy consumption.

In addition, in a situation where multiple operation requests are received in parallel, operation priority and scheduling control can suppress resource conflicts between modules and improve overall throughput.

As such, the control module precisely adjusts the operating order, execution conditions, power state, etc., of each arithmetic module, thereby contributing to maximizing the overall operational performance and energy efficiency of the device 600.

The device 600 configured as described above can efficiently process generative neural network models or various artificial intelligence models with low power by utilizing both the high speed of integer-based operations and the precision of floating-point-based operations.

Meanwhile, the integer operation module 610, floating-point operation module 620, storage module 630, and control module 640 of FIG. 40 may correspond to the processing core 120, special function unit 150, internal memory 140, and controller 110 of FIG. 3, respectively. Furthermore, the quantize unit 621, dequantize unit 622, vector operation core 623, and scalar operation core 624 included in the floating-point operation module 620 may correspond to the quantization unit 151, dequantization unit 152, vector core 153, and scalar core 154 included in the special function unit 150 of FIG. 3, respectively. That is, each element of the device 600 may be implemented in a technically identical or similar manner to the corresponding element of FIG. 3. Accordingly, for a detailed description of each element of FIG. 40, reference is made to the respective drawings related to FIG. 3. Accordingly, a duplicate description of the device 600 may be omitted.

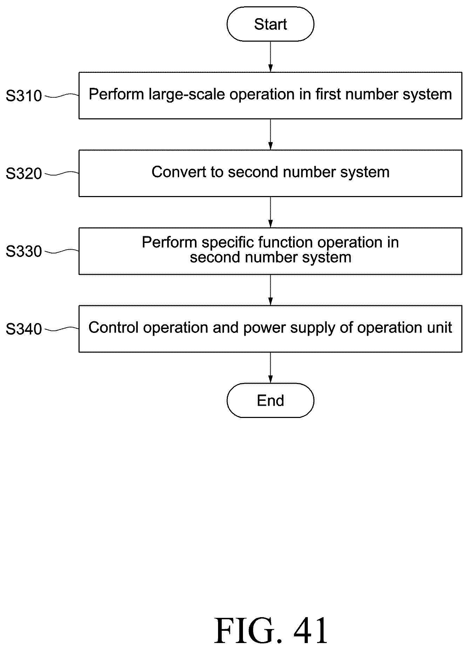

FIG. 41 illustrates a data processing method for performing low-power based neural network operations applicable to examples of the present disclosure.

The data processing flow according to FIG. 41 can be technically linked and described not only with the configurations of FIGS. 3 and 40 described above, but also with each arithmetic module and arithmetic flow.

Referring to FIG. 41, the device 600 initially performs large-scale arithmetic operations, such as matrix multiplication or accumulation, using a first number system (e.g., INT8, INT16, etc.) via an integer operation module 610 in response to a received neural network operation request (step S310). These operations may be executed in parallel using multiple processing elements arranged in an M×N structure, thereby enhancing computational throughput and reducing power consumption by operating on quantized tensor data. The results of these integer operations may be temporarily stored in the storage module 630, after which the data may be transferred for further processing in the floating-point domain via dequantization (S320).

Next, in the step S320, the device 600 converts the output of the integer operations from the step S310 into a second number system, such as a floating-point format (e.g., FP16, BFLOAT), through the dequantize unit 622 of FIG. 40. This number system conversion step involves reconstructing a higher-precision continuous value from the integer-based compressed representation. The dequantization process utilizes parameters such as a scaling factor and zero point, which are critical for minimizing numerical error and maintaining inference accuracy during subsequent operations performed by special function units.

Next, in the step S330, the floating-point data resulting from the dequantization step S320 is processed by the floating-point operation module 620, which includes a vector operation core 623 and a scalar operation core 624. These special operations, which play a pivotal role in enhancing the representational capacity of neural network models, may consist of non-linear operations such as ReLU, GELU, softmax, and others. Depending on the nature and parallelism requirements of the operation, either the vector core or, in cases requiring conditional branching or high-precision function approximation, the scalar core may be selectively engaged. The resulting intermediate or final data may again be stored in the storage module 630 for use in subsequent stages of neural network computation.

In the step S340, the control module 640 of the device 600 monitors the operational states of the functional units engaged in the step S330. This monitoring may include determining whether a given unit is idle, detecting operational validity or zero-skipping conditions, assessing current processing loads, and other runtime conditions. Based on this assessment, the control module 640 dynamically manages the power and activity states of various functional units, for example, through techniques such as clock gating and power gating to reduce unnecessary power usage and enable efficient low-power operation. Furthermore, the control module 640 may dynamically schedule the sequence and execution timing of operations across modules based on factors such as operation priority, execution constraints, and avoidance of bus contention, thereby optimizing overall system throughput and operational balance.

As described, the data processing flow outlined in FIG. 41 is closely linked with the functional modules illustrated in FIG. 40. Thus, the device 600 can execute neural network operations in a power-efficient manner while maintaining high operational accuracy.

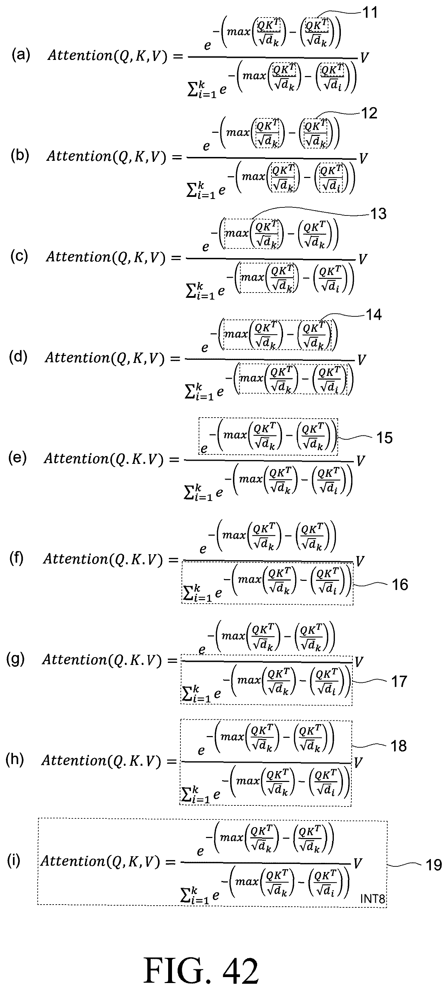

FIG. 42 includes steps (a) through (i) and illustrates a structural modification and optimization process of an attention operation formula applicable to examples of the present disclosure, wherein variables or terms (11 to 19) highlighted in each formula are for identifying items that have been intensively adjusted to improve operational efficiency and precision. Hereinafter, each formula of FIG. 42 will be described with reference to FIGS. 3, 5, and 6 described above.

First, (a) of FIG. 42 illustrates a structure that uses element-wise normalization of a QK^{T} matrix product used to obtain an attention score. At this time, the highlighted variable 11 in (a) performs maximum value correction inside an exponential function, and is utilized for normalization processing to suppress overflow that may occur during a softmax operation.

At this time, the operation for variable 11 can be performed as an integer-based operation and is processed in parallel by the processing core 120. Subsequently, the result of the integer operation is converted into a floating-point format through the dequantization unit 152 in the special function unit 150. This converted floating-point data can then be utilized in softmax operation steps such as exponential function approximation and normalization.

The operation of the highlighted variable 12 in (b) of FIG. 42 is processed by V_MUL 1532 of the vector core 153 in the special function unit 150. Here, since 1dk in variable 12 is a constant, a separate runtime operation is not required. The formula in (b) is for resolving operational bottlenecks and reducing the operational burden of the softmax step by separately processing the calculation of the QK^{T} value before normalization. The formula structure of (b) is similar to (a), but is a modified example reflecting operation order optimization.

The operation of the highlighted variable 13 in (c) of FIG. 42 is processed by S_MAX 1541 of the scalar core 154 in the special function unit 150. The operation for this variable 13 is first processed as an integer-based operation, and then converted into a floating-point format through the dequantization unit 152 in the special function unit 150. The formula in (c) is designed with a structure that reduces the overall amount of computation by simplifying the normalization coefficient in the attention score calculation process.

The operation of the highlighted variable 14 in (d) of FIG. 42 is processed by V_ADD 1533 of the vector core 153 in the special function unit 150. At this time, V_ADD 1533 performs negative number processing through sign inversion when generating a negative input for exponential function calculation. The formula in (d) is a structure designed to secure numerical stability by applying the same correction to the numerator and denominator terms of softmax, and to be advantageous for operational parallelization.

The operation of the highlighted variable 15 in E of FIG. 42 is processed by V_NEXP of the vector core 153 in the special function unit 150. At this time, variable 15 is a form including simplified normalization processing for the result of integer-based matrix multiplication. The formula in E is designed considering hardware optimization in an integer operation-based attention circuit (e.g., a processing element within the neural processing unit 100).

The operation of the highlighted variable 16 in (f) of FIG. 42 is processed by S_NEXP of the scalar core 154 in the special function unit 150. At this time, variable 16 is designed with a structure that enables LUT-based approximation processing by integrating scaling and maximum value correction during the normalization process. The formula in (f) can be effectively utilized in a circuit implementable by an LUT method.

The operation of the highlighted variable 17 in (g) of FIG. 42 is processed by S_RECIP of the scalar core 154 in the special function unit 150. At this time, the operation omits a divider and improves operational efficiency by using reciprocal calculation RECIP, and is configured to allow parallel processing of the matrix multiplication result and the normalization coefficient on the same operational pipeline. The formula in (g) provides advantages in terms of hardware parallel optimization.

The operation of the highlighted variable 18 in (h) of FIG. 42 is processed by V_MUL 1532 of the vector core 153 in the special function unit 150. This variable 18 is a simplified formula structure reflecting an optimization method for improving operational processing speed and reducing circuit area by omitting some terms of the existing softmax formula.

The operation of the highlighted formula 19 in (i) of FIG. 42 is processed by converting floating-point data into integer data through the quantization unit 151 in the special function unit 150, and then processing it in an integer operation manner in the processing core 120. This formula 19 is a final structure that performs Attention(Q, K, V) operations based on quantized values, and is designed to be implemented based on an integer number system (INT8) so that attention operations can be performed on actual hardware without floating-point operations.

The technical features of the examples of the present disclosure can be described as follows.

According to examples of the present disclosure, a neural processing unit for performing low-power based neural network operations may include: a processing core configured to perform integer operations based on input data; a special function unit configured to perform floating-point based special operations on the result of the integer operations; and a controller operably connected to each of the processing core and the special function unit.

The processing core may be configured to perform matrix multiplication operations.

The special function unit may be configured to perform floating-point based function operations including a softmax operation.

The special function unit may include: a scalar core performing scalar operations; a vector core performing vector operations; a dequantization unit converting integer data to floating-point data; and a quantization unit converting floating-point data to integer data.

The scalar core may be configured to calculate a correction coefficient for a softmax operation by calculating a maximum value among the results of multiplication operations between a normalized query vector and a key vector, calculating the total sum of an exponential function, and then obtaining an inverse.

The vector core may be configured to generate an input vector for a softmax operation by multiplying an inner product result between a query vector and a key vector by a normalization coefficient, subtract a maximum value from each element of the input vector, and multiply the result of the softmax operation and a value vector.

The normalization coefficient may be a constant value calculated at compile time and stored in memory.

The controller may, before a softmax operation, integrate a multiplication operation (FpMul) based on a coefficient included in the weights of a neural network model into the weights at compile time, and set an operation path to omit the corresponding multiplication operation at runtime.

The controller may be configured to control an operation path to omit a corresponding multiplication operation when an input data value of a multiplication operation between a query vector and a key vector is 0.

The controller may be configured to set an operation path for the special function unit to generate a final attention value to perform an attention operation.

According to examples of the present disclosure, a control method of a neural processing unit for performing low-power based neural network operations may include: performing an integer operation through a processing core configured to perform integer operations based on input data; performing the floating-point based special operation through a special function unit configured to perform floating-point based special operations on the result of the integer operation; and controlling the processing core or the special function unit according to an operation state of each of the integer operation and the special operation.

The performing of the integer operation may be performing a matrix multiplication operation.

The performing of the special operation may be performing a floating-point based function operation including a softmax operation.

The performing of the special operation may be converting integer data according to the integer operation to floating-point data, performing a scalar operation or a vector operation based on the floating-point data, and then converting floating-point data according to the scalar operation or the vector operation to integer data.

The scalar operation may be calculating a correction coefficient for a softmax operation by calculating a maximum value among the results of multiplication operations between a normalized query vector and a key vector, calculating the total sum of an exponential function, and then obtaining an inverse.

The vector operation may be generating an input vector for a softmax operation by multiplying an inner product result between a query vector and a key vector by a normalization coefficient, subtracting a maximum value from each element of the input vector, and multiplying the result of the softmax operation and a value vector.

The normalization coefficient may be a constant value calculated at compile time and stored in memory.

The performing of the special operation may be, before a softmax operation, integrating a multiplication operation (FpMul) based on a coefficient included in the weights of a neural network model into the weights at compile time, and setting an operation path to omit the corresponding multiplication operation at runtime.

The method may further include controlling an operation path to omit a corresponding multiplication operation when an input data value of a multiplication operation between a query vector and a key vector is 0.

The method may further include setting an operation path for the special function unit to generate a final attention value to perform an attention operation.

According to examples of the present disclosure, a system for performing operations of a neural network model with low power may include: a central processing unit; at least one neural processing unit that performs distributed integer operations and floating-point operations, applies number system conversion between the operations, and controls clock or power supply according to each operation state, thereby performing neural network operations based on low power; at least one memory; at least one bus providing a path for data transmission/reception between each neural processing unit and each memory; and an integrated controller controlling an operation flow of each of the at least one neural processing unit.

The at least one bus may include: a first bus for high-speed transmission of parameters and/or operation data between the at least one memory and the at least one neural processing unit; and a second bus for transmission of control commands and response data between the at least one neural processing unit and the central processing unit.

The system may further include a digital signal processor for auxiliary processing of preprocessing operations or postprocessing operations that are difficult to be performed (or cannot be performed) with fixed-point or low-precision operations.

The at least one memory may include at least one DRAM-based external memory, wherein the external memory may be configured with a structure in which multiple memory chips are connected in parallel through multiple channels to increase bandwidth, thereby improving a processing speed of a neural network model or an output speed of a generated response.

The at least one memory may include at least one SRAM-based common memory disposed inside a system on chip, wherein the common memory may be configured to store parameters of a specific domain or shared data.

The at least one bus may further include a separate bus for high-speed transmission of parameters between the common memory and the at least one neural processing unit.

According to examples of the present disclosure, a device for performing low-power based neural network operations may include: an integer operation module performing one or more large-scale integer operations based on input data; a floating-point operation module performing one or more (e.g., various) floating-point based nonlinear function operations based on a result output by the integer operation module; and a control module operably connected to each of the integer operation module and the floating-point operation module.

The integer operation module may be configured to perform one or more (e.g., a plurality of) matrix multiplication operations.

The floating-point operation module may be configured to perform one or more (e.g., a plurality of) floating-point based function operations including a softmax operation.

The floating-point operation module may include: a quantize unit converting floating-point data to integer data; a dequantize unit converting integer data to floating-point data; a vector operation core performing vector operations; and a scalar operation core performing scalar operations.

The scalar core may be configured to calculate a correction coefficient for a softmax operation by calculating a maximum value among results of multiplication operations between a normalized query vector and a key vector, calculating a total sum of an exponential function, and then obtaining an inverse.

The vector operation core may be configured to generate an input vector for a softmax operation by multiplying an inner product result between a query vector and a key vector by a normalization coefficient, subtract a maximum value from each element of the input vector, and multiply the result of the softmax operation and a value vector.

The normalization coefficient may be a constant value calculated at compile time and stored in memory.

The control module may, before a softmax operation, integrate a multiplication operation (FpMul) based on a coefficient included in weights of a neural network model into the weights at compile time, and set an operation path to omit a corresponding multiplication operation at runtime.

The control module may be configured to control an operation path to omit a corresponding multiplication operation when an input data value of a multiplication operation between a query vector and a key vector is 0.

The control module may be configured to set an operation path for the floating-point operation module to generate a final attention value to perform an attention operation.

According to examples of the present disclosure, a data processing method for low-power neural network operations may include: performing a large-scale operation on input data in a first number system; converting a result of the large-scale operation to a second number system different from the first number system; performing a specific function operation on the converted data in the second number system; and controlling an operation and power supply of an operation unit according to a state of each of the operation steps.

The performing of the large-scale operation may be performing a matrix multiplication operation.

The performing of the specific function operation may be performing a floating-point based function operation including a softmax operation.

The performing of the specific function operation may be converting integer data according to the large-scale operation to floating-point data, performing a scalar operation or a vector operation based on the floating-point data, and then converting floating-point data according to the scalar operation or the vector operation to integer data.

The scalar operation may be calculating a correction coefficient for a softmax operation by calculating a maximum value among the results of multiplication operations between a normalized query vector and a key vector, calculating the total sum of an exponential function, and then obtaining an inverse.

The vector operation may be generating an input vector for a softmax operation by multiplying an inner product result between a query vector and a key vector by a normalization coefficient, subtracting a maximum value from each element of the input vector, and multiplying the result of the softmax operation and a value vector.

The normalization coefficient may be a constant value calculated at compile time and stored in memory.

The performing of the specific function operation may be, before a softmax operation, integrating a multiplication operation (FpMul) based on a coefficient included in the weights of a neural network model into the weights at compile time, and setting an operation path to omit the corresponding multiplication operation at runtime.

The method may further include controlling an operation path to omit a corresponding multiplication operation when an input data value of a multiplication operation between a query vector and a key vector is 0.

According to examples of the present disclosure, a neural network operation acceleration system may include: at least one neural processing unit for performing operations of a neural network model with low power; the at least one neural processing unit performing distributed large-scale integer operations and specific floating-point operations among the neural network operations, applying number system conversion between the operations, and controlling clock or power supply according to each operation state, thereby performing neural network operations based on low power; a central processing unit including an integrated controller controlling an operation flow of each of the at least one neural processing unit; at least one memory storing parameters or operation data for the neural network operations; and at least one bus providing a path for data transmission/reception between the at least one neural processing unit and the at least one memory.

## Claims

1. A neural processing unit (100) for performing low-power based neural network operations, the neural processing unit (100) comprising:
a processing core (120) configured to perform an integer operation based on input data to the neural processing unit (100);
a special function unit (150) configured to perform a floating-point based special function operation, based on a result of the integer operation; and
a controller (110) operably connected to each of the processing core (120) and the special function unit (150).

2. The neural processing unit (100) of claim 1, wherein the processing core (120) is further configured to perform a matrix multiplication operation.

3. The neural processing unit (100) of claim 1 or 2, wherein the floating-point based special function operation performed by the special function unit (150) includes a softmax operation.

4. The neural processing unit (100) of any one of claims 1 to 3, wherein the special function unit (150) comprises:
a scalar core (154) configured to perform scalar operations;
a vector core (153) configured to perform vector operations;
a dequantization unit (152) configured to convert integer data to floating-point data; and
a quantization unit (151) configured to convert floating-point data to integer data.

5. The neural processing unit (100) of any one of claims 1 to 4, wherein the scalar core (154) is configured to calculate a correction coefficient for a softmax operation by:
calculating a maximum value among results of multiplication operations between a normalized query vector and a key vector;
calculating a total sum of an exponential function; and
obtaining an inverse of the calculating of the total sum.

6. The neural processing unit (100) of any one of claims 1 to 5, wherein the vector core (153) is configured to:
generate an input vector for a softmax operation by multiplying an inner product result between a query vector and a key vector by a normalization coefficient;
subtract a maximum value from each element of the input vector; and
multiply a result of the softmax operation by a value vector.

7. The neural processing unit (100) of claim 6, wherein the normalization coefficient is a constant value calculated at compile time and stored in memory.

8. The neural processing unit (100) of any one of claims 1 to 7, wherein the controller (110) is configured to:
before a softmax operation,
integrate a multiplication operation (FpMul) based on a coefficient included in weights of a neural network model into the weights at compile time; and
set an operation path to omit a corresponding multiplication operation at runtime.

9. The neural processing unit (100) of any one of claims 1 to 8, wherein the controller (110) is configured to control an operation path to omit a corresponding multiplication operation when an input data value of a multiplication operation between a query vector and a key vector is zero.

10. The neural processing unit (100) of any one of claims 1 to 9, wherein the controller (110) is configured to set an operation path for the special function unit (150) to generate a final attention value to perform an attention operation.

11. A device (600) comprising the neural processing unit (100) for performing low-power based neural network operations according to any one of claims 1 to 10, the device (600) comprising:
an integer operation module (610) comprising the processing core (120) of the neural processing unit (100) and configured to perform a large-scale integer operation based on input data;
a floating-point operation module (620) comprising the special function unit (120) of the neural processing unit (100) and configured to perform a floating-point based nonlinear function operation, based on a result output by the integer operation module (610); and
a control module (640) comprising the controller (110) of the neural processing unit (100) and operably connected to each of the integer operation module (610) and the floating-point operation module (620).

12. A data processing method for low-power neural network operations, the data processing method comprising:
performing a large-scale operation on input data in a first number system;
converting a result of the large-scale operation to data of a second number system different from the first number system;
performing a specific function operation on the converted data in the second number system; and
controlling operation steps and a power supply of an operation unit according to a clocked state of each of the operation steps.

13. The data processing method of claim 12, wherein the performing of the specific function operation comprises:
converting integer data according to the large-scale operation to floating-point data;
performing a scalar operation or a vector operation based on the floating-point data; and
converting floating-point data according to the scalar operation or the vector operation to integer data.

14. The data processing method of claim 13,
wherein the scalar operation comprises:
calculating a maximum value among results of multiplication operations between a normalized query vector and a key vector;
calculating a total sum of an exponential function; and
calculating a correction coefficient for a softmax operation by obtaining an inverse of the calculating of the total sum, and
wherein the vector operation comprises:
generating an input vector for the softmax operation by multiplying an inner product result between a query vector and a key vector by a normalization coefficient;
subtracting a maximum value from each element of the input vector; and
multiplying a result of the softmax operation by a value vector.

15. The data processing method of any of claims 12 to 14,
wherein the low-power neural network operations are performed using a system for neural network operation acceleration, the system comprising:
a central processing unit (200);
at least one neural processing unit (100) that performs the low-power neural network operations by performing distributed integer operations and floating-point operations, applying number system conversion between the integer operations and floating-point operations, and controlling a clock or power supply of the central processing unit (200) according to each operation state, the central processing unit (200) including an integrated controller configured to control an operation flow of each of the at least one neural processing unit (100);
at least one memory (2000) configured to store parameters and operation data for the neural network operations; and
at least one bus (310, 320) configured to provide a path for data transmission/reception between the at least one neural processing unit (100) and the at least one memory.
